# EUROPEAN PATENT APPLICATION

(11) **EP 4 095 453 A1**
(43) Date of publication of application: **30.11.2022**
(21) Application number: 22173411.4
(22) Date of filing: 16.05.2022
(51) Int. Cl.: F24F 8/90, F24F 8/108

(54) **AIR-CONDITIONING SYSTEM**

(30) Priority: 24.05.2021 KR 20210065991; 07.12.2021 KR 20210174218
(71) Applicant: LG Electronics Inc., SEOUL 07336 (KR)
(72) Inventor: HYON, Chinsoo, 06722 Seoul (KR); BAE, Sehwan, 06772 Seoul (KR); KWON, Heejae, 06772 Seoul (KR); YEON, Jeeyoung, 06772 Seoul (KR)
(74) Representative: Vossius & Partner Patentanwälte Rechtsanwälte mbB

(57) **Abstract**

An air-conditioning system of the present disclosure includes air-processing apparatuses, each of which includes an inlet formed in one surface thereof perpendicular to a floor or a ceiling and a pre-filter disposed in the inlet, and a filter cleaner configured to clean at least one of pre-filters provided in the air-processing apparatuses while automatically moving when at least one of the air-processing apparatuses stops operating.

## Description

The present disclosure relates to an air-conditioning system, and more particularly to an air-conditioning system including a plurality of air-processing apparatuses and to an operation method thereof.

Various air-conditioning apparatuses are being developed in order to create a comfortable indoor environment.

For example, an air conditioner is configured to control room temperature by discharging cool or warm air to the interior of a room, thereby providing a more comfortable indoor environment to a user. In general, an air conditioner includes a compressor, a condenser, an expansion device, and an evaporator in order to constitute a cooling cycle in which compression, condensation, expansion, and evaporation of refrigerant are performed, thereby cooling or heating an indoor space. In such an air conditioner, an indoor unit, such as a standing-type indoor unit, a wall-mounted indoor unit, or a ceiling-mounted indoor unit, is mounted in an indoor space in order to discharge heat-exchanged air to the indoor space, thereby adjusting the temperature of the indoor space.

For example, an air purifier is an apparatus that suctions contaminated air and discharges air purified by a filter to an indoor space. An air purifier is generally configured to be movable, and is disposed on the floor of an indoor space in order to purify contaminated air in the indoor space.

These days, various research is underway with the goal of effectively conditioning indoor air by constructing an air-conditioning system that is composed of a plurality of air-conditioning apparatuses and controlling the apparatuses in the air-conditioning system in an interlocking manner.

Related Art Document 1 (Korean Patent Laid-Open Publication No. 10-2019-0106608, published on September 18, 2019) discloses an indoor integrated air-conditioning control system that is capable of creating an optimal indoor air environment by operating various air-conditioning apparatuses.

Related Art Document 2 (Korean Patent Laid-Open Publication No. 10-2005-0122523, published on December 29, 2005) discloses an air-conditioning system that is capable of integrally managing an air conditioner, a ventilator, and an air purifier and controlling these apparatuses in an interlocking manner.

However, the air conditioner and the air purifier disclosed in the above related art documents are physically separated from each other and are located so as to be spaced apart from each other. Therefore, air-conditioning efficiency may be deteriorated depending on the physical arrangement of the air conditioner and the air purifier.

Also, when a certain apparatus, such as an air purifier, is moved to another position or the position thereof is not recognized accurately, interlocking control may not be reliably performed, or operation efficiency may be deteriorated.

Also, the region in which the air conditioner discharges heat-exchanged air and the region in which the air purifier discharges filtered air may differ from each other. In order to address this problem, a filter may be disposed in the inlet region of the air conditioner. However, when a high-efficiency particulate air (HEPA) filter for use in an air purifier is mounted in the air conditioner, the HEPA filter acts as resistance to the flow of air to a heat exchanger, thus leading to deteriorated operation efficiency.

Also, because the air conditioner and the air purifier disclosed in the above related art documents are provided separately from each other, it is inconvenient for a user to separately manage filters or the like.

It is an object of the present disclosure to provide an air-conditioning system and an operation method thereof for conveniently cleaning and efficiently managing a pre-filter using a filter cleaner configured to clean the filter while automatically moving.

It is another object of the present disclosure to provide an air-conditioning system and an operation method thereof for cleaning pre-filters disposed in a plurality of air-processing apparatuses using a single filter cleaner.

It is still another object of the present disclosure to provide an air-conditioning system and an operation method thereof for precisely controlling the movement of a filter cleaner.

It is still another object of the present disclosure to provide an air-conditioning system and an operation method thereof for precisely controlling cleaning performed by a filter cleaner.

It is still another object of the present disclosure to provide an air-conditioning system and an operation method thereof for cleaning a pre-filter during operation.

The objects of the present disclosure are not limited to the above-described objects, and other objects not mentioned herein may be clearly understood by those skilled in the art from the following description.

In order to accomplish the above and other objects, an air-conditioning system and an operation method thereof according to embodiments of the present disclosure may effectively manage indoor air using a plurality of air-processing apparatuses in which outlets are formed in a line.

In order to accomplish the above and other objects, an air-conditioning system and an operation method thereof according to embodiments of the present disclosure may independently or compositely operate a plurality of air-processing apparatuses in which outlets are formed in a line depending on the state of an indoor space, thereby realizing air conditioning suitable for the state of the indoor space.

In order to accomplish the above and other objects, an air-conditioning system and an operation method thereof according to embodiments of the present disclosure may clean and manage pre-filters, which are provided in a plurality of air-processing apparatuses in which inlets are formed in a line, using a filter cleaner.

The invention is defined in the independent claim. Dependent claims describe preferred embodiments.

In order to accomplish the above and other objects, an air-conditioning system according to an embodiment of the present disclosure may include air-processing apparatuses, each of which includes an inlet formed in one surface thereof perpendicular to a floor or a ceiling and a pre-filter disposed in the inlet, and a filter cleaner configured to clean at least one of pre-filters provided in the air-processing apparatuses while automatically moving when at least one of the air-processing apparatuses stops operating.

The air-processing apparatuses may be disposed adjacent to each other in the leftward-rightward direction. The filter cleaner may clean at least one of the pre-filters provided in the air-processing apparatuses while moving in the leftward-rightward direction.

The air-conditioning system may further include a guide rail disposed on one side of each of the air-processing apparatuses to guide movement of the filter cleaner.

A plurality of objects to be sensed may be disposed on the guide rail so as to be spaced apart from each other in the leftward-rightward direction. The filter cleaner may include a position detection sensor, and may determine the position thereof based on the plurality of objects to be sensed that are detected by the position detection sensor.

Two objects to be sensed may be disposed on the guide rail at positions corresponding to the start point and the end point of a movement section within which the filter cleaner moves.

Three or more objects to be sensed may be disposed on the guide rail. The filter cleaner may determine the position thereof based on at least one of identification information of the objects to be sensed that are detected by the position detection sensor, the types of the objects to be sensed, an order in which the objects to be sensed are detected, or a change in a physical parameter caused by the objects to be sensed.

The filter cleaner may include a first position detection sensor and a second position detection sensor spaced apart from the first position detection sensor.

When the filter cleaner moves in a first direction, if the second position detection sensor detects an object to be sensed corresponding to the end point of a cleaning section, the filter cleaner may stop moving.

When the filter cleaner changes the moving direction thereof and moves in a second direction, which is opposite the first direction, if the first position detection sensor detects an object to be sensed corresponding to the start point of the movement section within which the filter cleaner moves, the filter cleaner may stop moving.

The air-conditioning system may further include an end plate disposed at the left end or the right end of the guide rail to restrict movement of the filter cleaner in one direction.

The end plate may include a charging terminal protruding in a direction in which the guide rail extends and a power supply circuit accommodated in the end plate to supply power to the charging terminal.

When the filter cleaner enters a section corresponding to an air-processing apparatus that is operating, the air-processing apparatus that is operating may temporarily stop operating while the filter cleaner passes through the section corresponding thereto.

The filter cleaner may include a dust container device forming a space to accommodate foreign substances, an agitator configured to rotate while contacting the pre-filters, and a suction device configured to deliver foreign substances removed by the agitator to the dust container device.

When cleaning all of the pre-filters, the filter cleaner may drive the suction device and the agitator while moving toward the end point of the movement section within which the filter cleaner moves. When arriving at the end point, the filter cleaner may stop moving and may move toward the start point of the movement section. When arriving at the start point, the filter cleaner may stop driving the suction device and the agitator and may terminate operation.

When arriving at the end point, the filter cleaner may stop driving the suction device and the agitator. While moving toward the start point, the filter cleaner may drive the suction device and the agitator.

When cleaning some of the pre-filters, the filter cleaner may move toward a cleaning section corresponding to a pre-filter to be cleaned by the filter cleaner. When arriving at the start point of the cleaning section, the filter cleaner may drive the suction device and the agitator. When arriving at the end point of the cleaning section, the filter cleaner may stop moving and may move toward the start point of the movement section within which the filter cleaner moves. When arriving at the start point of the cleaning section, the filter cleaner may stop driving the suction device and the agitator. When arriving at the start point of the movement section, the filter cleaner may terminate operation.

When arriving at the end point of the cleaning section, the filter cleaner may stop driving the suction device and the agitator. While moving toward the start point of the cleaning section, the filter cleaner may drive the suction device and the agitator.

The filter cleaner may include a housing accommodating the dust container device, the agitator, and the suction device therein, a moving gear configured to move the housing in the leftward-rightward direction of the pre-filters, a gear motor configured to rotate the moving gear, a guide roller rotatably disposed in the housing to maintain a gap between the pre-filters and the surface of the housing that faces the pre-filters, and a support roller rotatably disposed in the housing at a position above the guide roller.

A battery may be disposed in the housing, and a connection terminal may be disposed on one surface of the housing so as to be connected to an external terminal in order to supply power to the battery.

At least one of the air-processing apparatuses may further include a heat exchanger configured to induce the air introduced into the inlet to exchange heat with refrigerant.

### BRIEF DESCRIPTION OF THE DRAWINGS

The above and other objects, features, and other advantages of the present disclosure will be more clearly understood from the following detailed description taken in conjunction with the accompanying drawings, in which:
FIG. 1 is a perspective view showing the state in which a first air-processing apparatus, a second air-processing apparatus, and a filter cleaner according to an embodiment of the present disclosure are disposed in an indoor space;
FIG. 2 is a side view for explaining a filter cleaner disposed behind a first air-processing apparatus or a second air-processing apparatus according to an embodiment of the present disclosure;
FIG. 3 is a perspective view for explaining a first air-processing apparatus, a second air-processing apparatus, and a guide rail disposed behind these apparatuses according to an embodiment of the present disclosure;
FIG. 4 is a rear view of FIG. 3;
FIG. 5 is a perspective view of a first air-processing apparatus according to an embodiment of the present disclosure;
FIG. 6 is an exploded perspective view of FIG. 5;
FIG. 7 is a bottom view of FIG. 5;
FIG. 8 is a rear view of FIG. 5;
FIG. 9 is a cross-sectional view taken along line X1-X1' in FIG. 7;
FIG. 10 is a cross-sectional view taken along line X2-X2' in FIG. 7;
FIG. 11 is a cross-sectional view taken along line X3-X3' in FIG. 7;
FIG. 12 is a perspective view showing the coupled state of a front cover and a louver according to an embodiment of the present disclosure;
FIG. 13 is a rear view of FIG. 12;
FIG. 14A is a cross-sectional view taken along line Y1-Y1' in FIG. 13;
FIG. 14B is a cross-sectional view taken along line Y2-Y2' in FIG. 13;
FIG. 15 is a perspective view of a louver according to an embodiment of the present disclosure;
FIG. 16 is a rear view of FIG. 15;
FIG. 17 is a cross-sectional view taken along line Y3-Y3' in FIG. 16;
FIG. 18A is a cross-sectional view for explaining the orientation of a first louver in a first mode;
FIG. 18B is a cross-sectional view for explaining the orientation of the first louver in a second mode;
FIG. 18C is a cross-sectional view for explaining the orientation of the first louver in a third mode;
FIG. 19 is a perspective view of a second air-processing apparatus according to an embodiment of the present disclosure;
FIG. 20 is an exploded perspective view of FIG. 19;
FIG. 21 is a bottom view of FIG. 19;
FIG. 22 is a cross-sectional view taken along line Z1-Z1' in FIG. 21;
FIG. 23 is an enlarged view of portion A in FIG. 22;
FIG. 24 is a cross-sectional view taken along line Z2-Z2' in FIG. 21;
FIG. 25A is a perspective view of an inner cover according to an embodiment of the present disclosure;
FIG. 25B is a perspective view of the inner cover when viewed from a direction different from that of FIG. 25A;
FIG. 26A is a perspective view of a second upper housing according to an embodiment of the present disclosure;
FIG. 26B is a side view of FIG. 26A;
FIG. 27 is a perspective view of a second lower housing according to an embodiment of the present disclosure;
FIG. 28 is an exploded perspective view of a filter-mounting part and a filter device according to an embodiment of the present disclosure;
FIG. 29 is a bottom perspective view of a filter-mounting part according to an embodiment of the present disclosure;
FIG. 30 is an exploded perspective view of a filter device according to an embodiment of the present disclosure;
FIG. 31 is a cross-sectional view taken along line Z3-Z3' in FIG. 21;
FIG. 32 is a cross-sectional view taken along line Z4-Z4' in FIG. 21;
FIG. 33A is a perspective view for explaining the arrangement of the second bottom cover, the filter-mounting part, and the filter device in the state in which the second bottom cover is located at a rear position;
FIG. 33B is a cross-sectional view of FIG. 33A;
FIG. 34A is a perspective view for explaining the arrangement of the second bottom cover, the filter-mounting part, and the filter device in the state in which the second bottom cover is located at a front position;
FIG. 34B is a cross-sectional view of FIG. 34A;
FIG. 35A is a perspective view for explaining the arrangement of the second bottom cover, the filter-mounting part, and the filter device in the state in which the second bottom cover is located at a front position and the filter-mounting part is moved downwards;
FIG. 35B is a cross-sectional view of FIG. 35A;
FIG. 35C is a further cross-sectional view of FIG. 35A;
FIG. 36 is a side view of FIG. 4;
FIG. 37 is a perspective view of a filter cleaner according to an embodiment of the present disclosure;
FIG. 38 is a perspective view of the filter cleaner when viewed from a direction different from that of FIG. 37;
FIG. 39 is a front view of FIG. 37;
FIG. 40 is a side view of FIG. 37;
FIG. 41 is an exploded perspective view of FIG. 37;
FIG. 42 is an exploded perspective view of FIG. 37 when viewed from a direction different from that of FIG. 41;
FIG. 43 is a perspective view of a first housing and components disposed inside the first housing according to an embodiment of the present disclosure;
FIG. 44 is a rear view of FIG. 43;
FIG. 45 is a side view of FIG. 43;
FIG. 46 is a perspective view of partition plates and components disposed on the partition plates according to an embodiment of the present disclosure;
FIG. 47 is a perspective view of the partition plates and components disposed on the partition plates when viewed from a direction different from that of FIG. 46;
FIG. 48 is a rear view of FIG. 46;
FIG. 49 is a perspective view of a dust container device according to an embodiment of the present disclosure;
FIG. 50 is a plan view of FIG. 49;
FIG. 51 is a cross-sectional view taken along line X-X' in FIG. 50;
FIG. 52 is an exploded perspective view of FIG. 49;
FIG. 53 is a perspective view showing the state in which a dust container device and a dust-container-mounting part are moved downwards in the filter cleaner;
FIG. 54 is a perspective view showing the state in which the dust container device is separated from the filter cleaner shown in FIG. 53;
FIG. 55 is a diagram illustrating the configuration of an air-conditioning system according to an embodiment of the present disclosure;
FIG. 56 is a view for explaining module extension of the air-conditioning system according to an embodiment of the present disclosure;
FIG. 57 is a view illustrating the configuration of the air-conditioning system according to an embodiment of the present disclosure;
FIG. 58 is a block diagram schematically illustrating the internal structure of an air-processing apparatus according to an embodiment of the present disclosure;
FIG. 59 is a block diagram schematically illustrating the internal structures of the filter cleaner and a charging system according to an embodiment of the present disclosure;
FIG. 60 is a front view of a remote control device of the air-conditioning system according to an embodiment of the present disclosure;
FIG. 61 is a block diagram schematically illustrating the internal structure of the remote control device according to an embodiment of the present disclosure;
FIGS. 62 and 63 are views for explaining the communication structure and remote control of the air-conditioning system according to an embodiment of the present disclosure;
FIG. 64 is a flowchart showing an operation method of the air-conditioning system according to an embodiment of the present disclosure;
FIG. 65 is a flowchart showing an operation method of the air-conditioning system according to an embodiment of the present disclosure;
FIG. 66 is a view for explaining movement of, and cleaning performed by, the filter cleaner according to an embodiment of the present disclosure;
FIG. 67 is a flowchart showing an operation method of the air-conditioning system according to an embodiment of the present disclosure;
FIG. 68 is a flowchart showing an operation method of the air-conditioning system according to an embodiment of the present disclosure;
FIG. 69 is a view for explaining cleaning that is performed during operation of the air-conditioning system according to an embodiment of the present disclosure;
FIGS. 70 to 72 are views for explaining charging of the filter cleaner according to an embodiment of the present disclosure;
FIG. 73 is a flowchart showing an operation method of the air-conditioning system according to an embodiment of the present disclosure;
FIG. 74 is a view for explaining determination of the position and the movement of the filter cleaner according to an embodiment of the present disclosure;
FIG. 75 is a flowchart showing an operation method of the air-conditioning system according to an embodiment of the present disclosure;
FIG. 76 is a flowchart showing an operation method of the air-conditioning system according to an embodiment of the present disclosure;
FIG. 77 is a view for explaining replacement of a filter of the second air-processing apparatus according to an embodiment of the present disclosure;
FIG. 78 is a view for explaining an indicator lamp of the filter cleaner according to an embodiment of the present disclosure;
FIG. 79 is a flowchart showing an operation method of the air-conditioning system according to an embodiment of the present disclosure;
FIG. 80 is a flowchart showing an operation method of the air-conditioning system according to an embodiment of the present disclosure;
FIG. 81 is a flowchart showing an operation method of the air-conditioning system according to an embodiment of the present disclosure;
FIG. 82 is a flowchart showing an operation method of the air-conditioning system according to an embodiment of the present disclosure;
FIGS. 83 to 88 are views for explaining air current control of the air-conditioning system according to an embodiment of the present disclosure;
FIG. 89 is a flowchart showing an operation method of the air-conditioning system according to an embodiment of the present disclosure; and
FIGS. 90 and 91 are views for explaining air current control based on occupancy information of the air-conditioning system according to an embodiment of the present disclosure.

Advantages and features of the present disclosure and methods for achieving them will be made clear from embodiments described below in detail with reference to the accompanying drawings. The present disclosure may, however, be embodied in many different forms, and should not be construed as being limited to the embodiments set forth herein. Rather, these embodiments are provided so that this disclosure will be thorough and complete, and will fully convey the scope of the disclosure to those skilled in the art. The present disclosure is defined only by the scope of the claims. Dependent claims describe preferred embodiments. Throughout the specification, the same reference numerals represent the same components.

The terms "U", "D", "Le", "Ri", "F", and "R" shown in the figures indicate an upward direction, a downward direction, a leftward direction, a rightward direction, a forward direction, and a rearward direction, respectively. The aforementioned directions are used only for convenience of description, and are not intended to limit the scope of the disclosure. Thus, the aforementioned directions may be set differently according to some reference.

Hereinafter, an air-conditioning system according to an embodiment of the present disclosure will be described with reference to the accompanying drawings.

An air-conditioning system of the present disclosure includes a first air-processing apparatus 100, which adjusts the temperature of air through heat exchange between the air and a refrigerant, and a second air-processing apparatus 200, which is disposed on one side of the first air-processing apparatus in order to remove foreign substances from the air. The air-conditioning system of the present disclosure includes a plurality of air-processing apparatuses 100a, 100b, and 200. The air-conditioning system of the present disclosure includes one or two or more first air-processing apparatuses 100a and 100b and one or two or more second air-processing apparatuses 200.

The air-conditioning system of the present disclosure may include a filter cleaner 300, which moves along the surface in which inlets 102a and 202a of the plurality of air-processing apparatuses 100a, 100b, and 200 are formed in order to clean pre-filters 188 and 288 disposed in the inlets 102a and 202a.

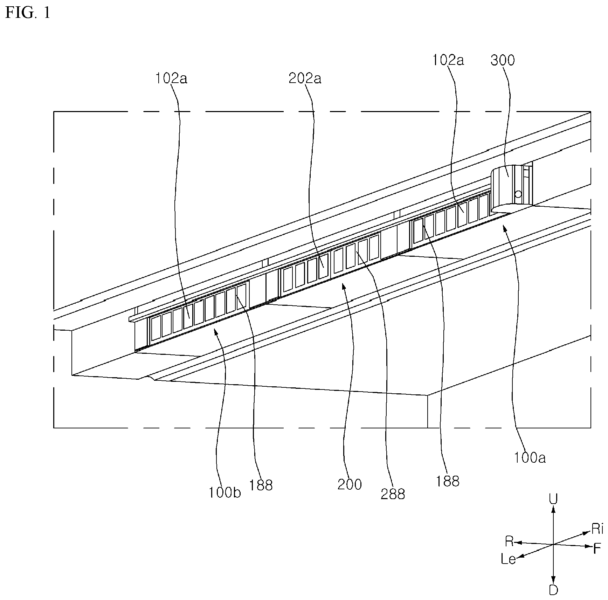

Referring to FIG. 1, the air-conditioning system of the present disclosure includes one second air-processing apparatus 200 and two first air-processing apparatuses 100 disposed on both sides of the second air-processing apparatus 200. However, this is merely illustrative, and the numbers and arrangement of first and second air-processing apparatuses 100 and 200 may be set differently.

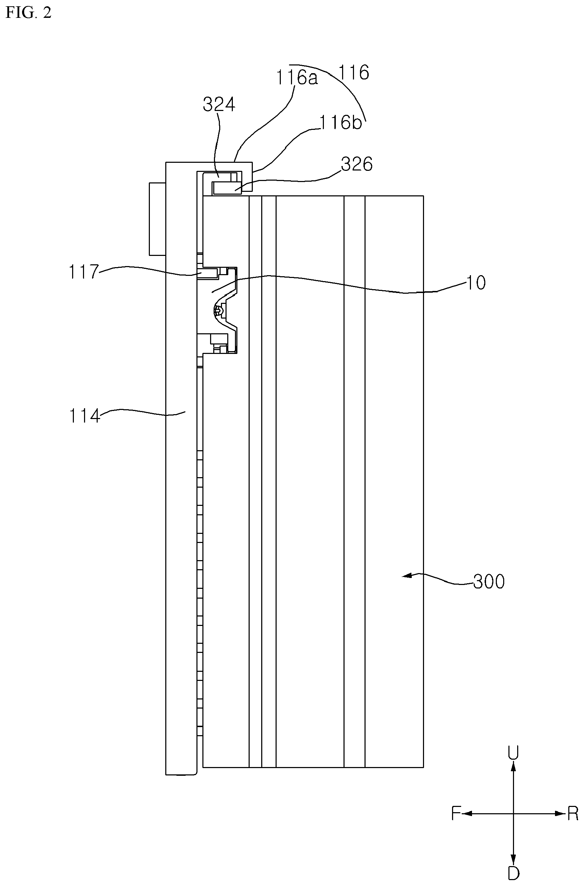

Referring to FIG. 2, the air-conditioning system includes a guide rail 10, which is disposed at the rear sides of the first air-processing apparatuses 100 and the second air-processing apparatus 200 in order to guide movement of the filter cleaner 300.

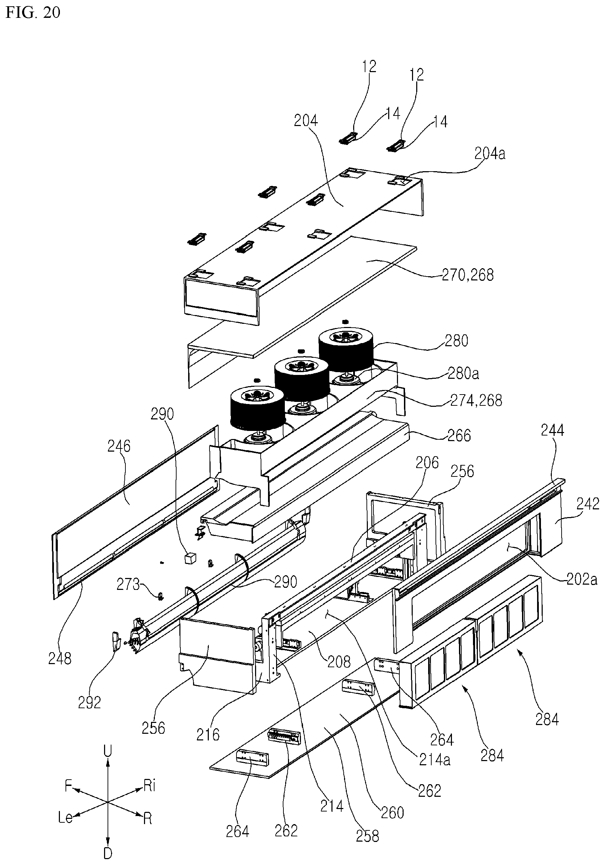

Support rails 116 and 244 (see Fig. 20) for supporting the movement of the filter cleaner 300 may be disposed at the upper ends of the rear surfaces of the first air-processing apparatuses 100 and the second air-processing apparatus 200.

The support rails may include first support rails 116 disposed at the first air-processing apparatuses 100 and a second support rail 244 disposed at the second air-processing apparatus 200.

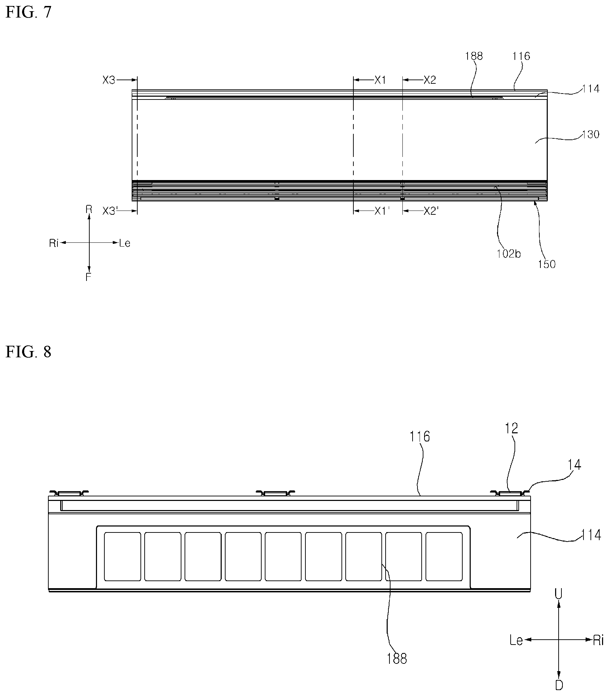

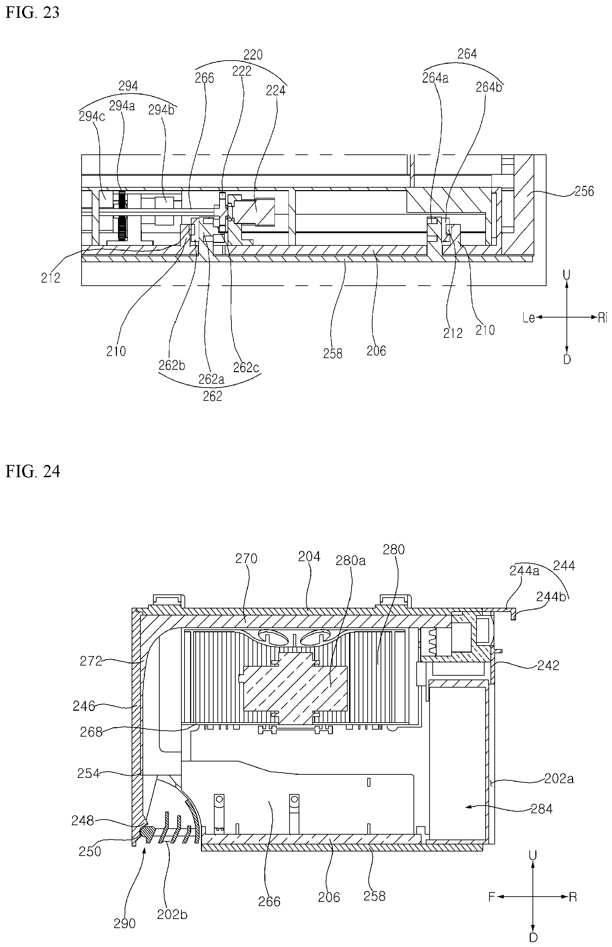

The first support rails 116 may be formed integrally with first rear covers 114 (refer to FIG. 8) of the first air-processing apparatuses 100, which will be described later. The second support rail 244 may be formed integrally with a second rear cover 242 (refer to FIG. 24) of the second air-processing apparatus 200, which will be described later.

The guide rail 10 is disposed on the rear sides of the first rear covers 114 and the second rear cover 242. The guide rail 10 is disposed above the first inlets 102a and the second inlet 202a. The guide rail 10 has a structure that extends in the leftward-rightward direction on the rear sides of the first rear covers 114 and the second rear cover 242. The guide rail 10 may be fixedly disposed below first rail-fixing protrusions 117 of the first rear covers 114 and a second rail-fixing protrusion 245 of the second rear cover 242.

The guide rail 10 includes a gear rail 20, which has threads to be engaged with a moving gear (not shown) of the filter cleaner 300, and a roller rail 22, which is in contact with a guide roller (not shown) of the filter cleaner 300.

The roller rail 22 is disposed behind the gear rail 20. The roller rail 22 is disposed at each of the upper side and the lower side of the guide rail 10. The gear rail 20 is disposed in front of the roller rail 22. The gear rail 20 is formed on the lower surface of the guide rail 10. The gear rail 20 may have the shape of a rack gear.

When viewed from the rear, the guide rail 10 may have a structure in which the gear rail 20 is shielded by the roller rail 22.

A rail groove 24 is formed in the rear surface of the guide rail 10. The rail groove 24 has a shape that is recessed in the forward direction and extends in the leftward-rightward direction. An object to be sensed 26 is disposed in the rail groove 24. The object to be sensed 26 may be provided in a plural number, and the plurality of objects to be sensed may be disposed so as to be spaced apart from each other in the leftward-rightward direction. A sensor (not shown) may be disposed at the filter cleaner 300, and when the sensor senses the object to be sensed 26, the position of the filter cleaner 300 may be detected.

The object to be sensed 26 may be formed in a structure corresponding to the sensor. For example, when the sensor is a switch sensor, the object to be sensed 26 may have the shape of a protrusion that protrudes rearwards. Alternatively, when the sensor is a Hall sensor, the object to be sensed 26 may be implemented as a magnet.

An end plate 28 for limiting movement of the filter cleaner 300 in one direction is disposed at the left end or the right end of the guide rail 10. The end plate 28 is disposed in a direction perpendicular to the direction in which the guide rail 10 extends. The end plate 28 protrudes rearwards from the rear cover 114.

The end plate 28 is provided with a charging terminal 30, with which a connection terminal 320 of the filter cleaner 300 is brought into contact. The charging terminal 30 protrudes from the end plate 28 in the direction in which the guide rail 10 extends. Accordingly, when the filter cleaner 300 reaches the end plate 28, the connection terminal 320 of the filter cleaner 300 may be brought into contact with and connected to the charging terminal 30.

### <First Air-Processing Apparatus>

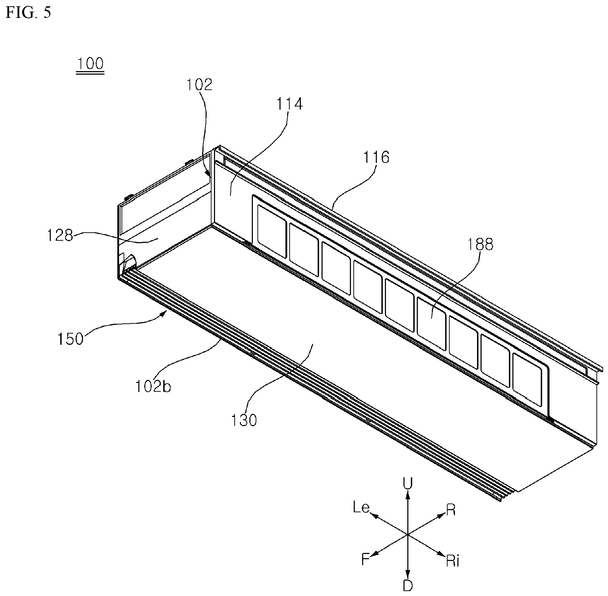

Hereinafter, a first air-processing apparatus according to an embodiment of the present disclosure will be described with reference to FIGS. 5 to 17C.

The first air-processing apparatus 100 induces air to exchange heat with a refrigerant and discharges the heat-exchanged air to the outside. The first air-processing apparatus 100 has a first inlet 102a formed in one side thereof in order to suction air thereinto and a first outlet 102b formed in another side thereof perpendicular to the first inlet 102a in order to discharge air therefrom. Referring to FIG. 5, the first inlet 102a is formed so as to be perpendicular to the surface of the floor or ceiling. The first outlet 102b is formed so as to be open downwards. The first outlet 102b is formed perpendicular to the first inlet 102a.

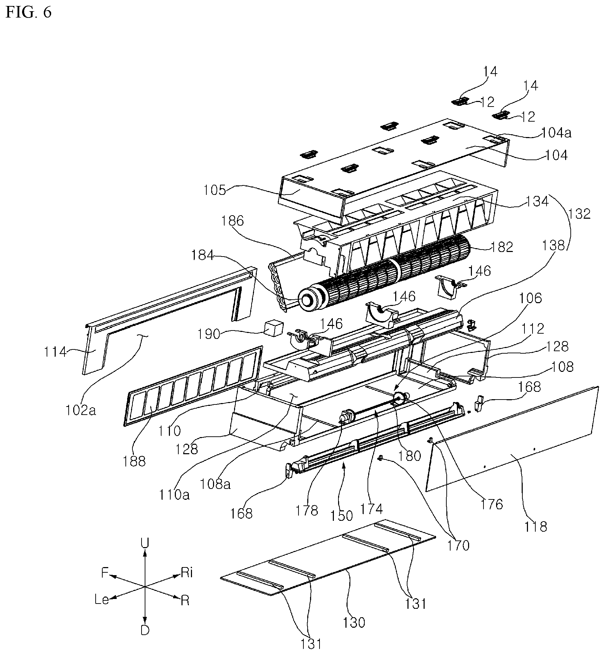

Referring to FIG. 6, the first air-processing apparatus 100 includes a first fan 182, which causes air to flow, a first fan motor 184, which rotates the first fan 182, and a heat exchanger 186, through which a refrigerant flows to exchange heat with air. The first air-processing apparatus 100 includes a first case 102, which forms the external appearance of the first air-processing apparatus 100, and a first housing 132, which is disposed inside the first case 102 and which forms a flow path through which air flows. The first air-processing apparatus 100 includes a first louver 150, which is rotatably disposed in the first case 102 in order to adjust the direction of air that is discharged from the first outlet 102b, and a first louver-driving device 174, which changes the orientation of the first louver 150.

The first air-processing apparatus 100 may include a first control box 190 for controlling the operation of the first fan motor 184 or the operation of the first louver-driving device 174.

### <First Case>

Referring to FIG. 6, the first case 102 includes a first upper cover 104, which is secured to the ceiling, a first lower cover 106, which is disposed below the first upper cover 104, a first rear cover 114, which forms therein the first inlet 102a and to which a first pre-filter 188 is mounted, a first front cover 118, which is disposed so as to be spaced forwards apart from the first rear cover 114, and two first side covers 128, which are disposed at both side ends of the first lower cover 106. Referring to FIG. 6, the first case 102 further includes a first bottom cover 130, which is disposed below the first lower cover 106.

Referring to FIG. 6, the first inlet 102a is formed in the first rear cover 114. The guide rail 10 may be mounted on the outer surface of the first rear cover 114. The first inlet 102a is formed in the lower portion of the first rear cover 114. The first pre-filter 188 is mounted in the first inlet 102a formed in the first rear cover 114. The guide rail 10 and the first support rail 116 for guiding movement of the filter cleaner 300 are mounted on the first rear cover 114.

Referring to FIG. 2, the guide rail 10 is disposed above the first inlet 102a. The first support rail 116 is disposed at the upper end of the first rear cover 114. The guide rail 10 may be provided separately from the first rear cover 114. The first support rail 116 may be formed integrally with the first rear cover 114.

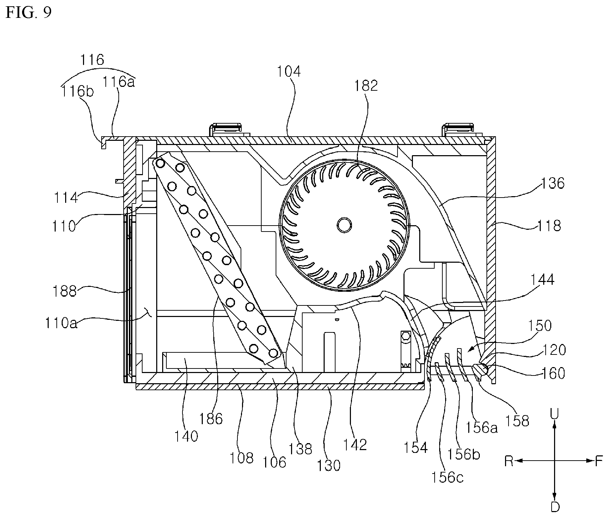

Referring to FIG. 9, the first support rail 116 includes a first top plate 116a, which protrudes rearwards from the upper end of the first rear cover 114, and a first bent portion 116b, which is bent and extends downwards from the rear end of the first top plate 116a.

A top roller 326 (refer to FIG. 2) of the filter cleaner 300 may be in contact with the first bent portion 116b.

Referring to FIG. 9, the first rear cover 114 is disposed behind a first vertical plate 110 of the first lower cover 106, which will be described later. The first rear cover 114 is fixedly disposed behind the first vertical plate 110.

Referring to FIG. 6, the first upper cover 104 has a first fixing recess 104a formed in the upper surface thereof, into which a fixing member 12 for fixing the first case 102 to the ceiling is inserted. Referring to FIG. 6, a plurality of first fixing recesses 104a is formed in the upper surface of the first upper cover 104. The fixing member 12 is inserted into and fixed to each of the plurality of first fixing recesses 104a. The fixing member 12 may have a substantial "[" shape when viewed from the side. The fixing member 12 may be connected to a mounting member 14 that is fixed to the ceiling, thereby fixing the first case 102 to the ceiling.

The first upper cover 104 may include two side plates 105, which are bent and extend downwards from both side ends thereof. Each of the two side plates 105 may be connected to a respective one of the two first side covers 128.

Referring to FIG. 6, the first lower cover 106 is disposed below the first housing 132. The first louver-driving device 174 is disposed on the first lower cover 106. The first lower cover 106 includes a first horizontal plate 108, which is disposed above the first bottom cover 130, a first vertical plate 110, which is disposed at the rear side of the first horizontal plate 108 so as to be perpendicular thereto and in which a first inner suction hole 110a is formed, and two first side walls 112, which are bent and extend upwards from both side ends of the first horizontal plate 108.

The first louver-driving device 174 is disposed on the first horizontal plate 108. The first horizontal plate 108 has a connection slit 108a formed therein to allow a vertical protrusion 131 of the first bottom cover 130 to be inserted thereinto.

Referring to FIG. 6, each of the two first side covers 128 is connected at the lower portion thereof to the first lower cover 106, and is connected at the upper portion thereof to the first upper cover 104. A first rotation support rod 168 for supporting rotation of the first louver 150 is disposed on each of the two first side covers 128. The first rotation support rod 168 is connected to each of both ends of the first louver 150, thereby supporting rotation of the first louver 150.

Referring to FIG. 9, the first front cover 118 is disposed in front of the first housing 132. Referring to FIG. 9, the lower end of the first front cover 118 is spaced a predetermined gap apart from the front end portion 106a of the first lower cover 106. The first outlet 102b is formed between the first front cover 118 and the first lower cover 106. A first louver protrusion 120, in which a first louver groove 122 for receiving a louver rotation shaft 160 is formed, is formed on the first front cover 118 in order to limit the range within which the first louver 150 can rotate.

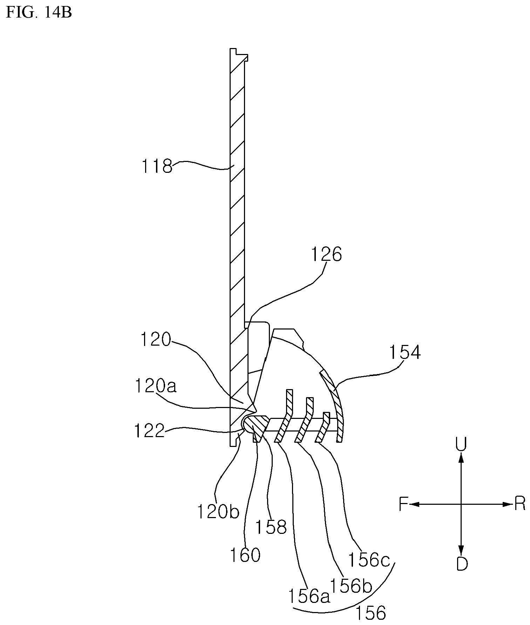

The first louver protrusion 120 is formed to be long in the leftward-rightward direction, in which the first front cover 118 is formed. Referring to FIG. 14B, the first louver protrusion 120 has the first louver groove 122 formed therein to allow the louver rotation shaft 160 of the first louver 150 to be disposed therein. The first louver groove 122 is also formed to be long in the leftward-rightward direction, in which the first louver protrusion 120 extends.

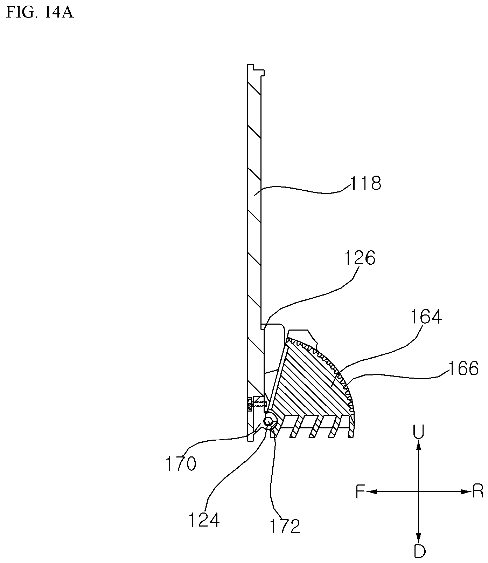

Referring to FIG. 14A, a first support-rod recess 124 in which a first auxiliary support rod 170 is disposed is formed between the left end and the right end of the first louver protrusion 120. The first auxiliary support rod 170 may be fixedly disposed on the first front cover 118, and may support rotation of the first louver 150. The first auxiliary support rod 170 is disposed between the two first rotation support rods 168, which will be described later. The first auxiliary support rod 170 may be connected to the first louver 150 via a first auxiliary rotation shaft 172.

Referring to FIG. 14B, the first louver protrusion 120 includes an upper protruding portion 120a, which forms a surface that is inclined from the upper end of the first louver groove 122 in the rearward-upward direction, and a lower protruding portion 120b, which forms a surface that is inclined from the lower end of the first louver groove 122 in the forward-downward direction.

When the upper surface of the louver rotation shaft 160 of the first louver 150, which will be described later, comes into contact with the upper protruding portion 120a, rotation of the first louver 150 in one direction is limited by the upper protruding portion 120a. When an axial vane 158 of the first louver 150, which will be described later, comes into contact with the lower protruding portion 120b, rotation of the first louver 150 in the opposite direction is limited by the lower protruding portion 120b.

Referring to FIG. 14B, a first stepped portion 126, which interferes with an end portion of a first upper housing 134 to be described later, is formed in the first front cover 118.

### <First Housing>

Referring to FIG. 9, the first housing 132 is disposed inside the first case 102, and forms therein a space through which air flows. The first fan 182 and the heat exchanger 186 are disposed inside the first housing 132. Referring to FIG. 9, the heat exchanger 186 is disposed in a region adjacent to the first inlet 102a. The heat exchanger 186 is disposed so as to be inclined toward the first fan 182 to thereby increase a heat-exchange area and minimize resistance to air flow.

The first fan motor 184 for rotating the first fan 182 is disposed inside the first housing 132. The first fan motor 184 is disposed on the rotation shaft of the first fan 182 in order to rotate the first fan 182. The first fan 182 may be implemented as a cross-flow fan, which is configured to suction air into one side thereof in the radial direction and to discharge air from another side thereof in the radial direction.

Referring to FIG. 6, a fan support bracket 146 may be disposed inside the first housing 132 in order to support rotation of the first fan 182 or to support placement of the first fan motor 184.

Referring to FIG. 6, the first housing 132 includes a first upper housing 134, which is disposed above the first fan 182, and a first lower housing 138, which is disposed below the first fan 182.

Referring to FIG. 9, the first upper housing 134 and the first lower housing 138 form discharge guides 136 and 144, along which air flows from the first fan 182 to the first outlet 102b.

The first upper housing 134 may be mounted to the first upper cover 104. The lower end of the first upper housing 134 may be disposed on the upper side of the first stepped portion 126 of the first front cover 118. Referring to FIG. 9, the first upper housing 134 includes an upper guide 136, along which air flowing out of the first fan 182 moves to the first outlet 102b. The upper guide 136 induces air flowing along the first fan 182 to move downwards. The upper guide 136 induces air flowing out of the first fan 182 to move toward the first front cover 118.

The first lower housing 138 is disposed above the first lower cover 106. Referring to FIG. 9, the first lower housing 138 includes a drain pan 140, which is disposed below the heat exchanger 186 in order to collect therein condensation dropping from the heat exchanger 186. The drain pan 140 is disposed below the heat exchanger 186 in the region in which the heat exchanger 186 is disposed.

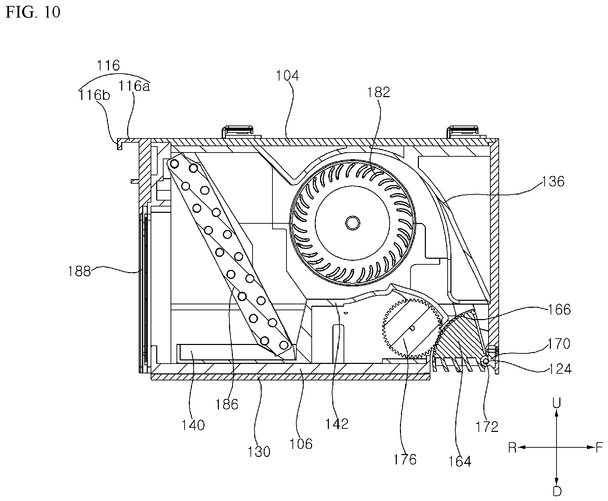

Referring to FIG. 10, the first lower housing 138 includes a driving device cover 142, which is disposed in front of the drain pan 140 and which protrudes upwards from the first lower cover 106. The driving device cover 142 forms a space thereunder in which to dispose the first louver-driving device 174. The driving device cover 142 protrudes at an incline further upwards from the region in which the drain pan 140 is disposed to the region in which the first fan 182 is disposed. The driving device cover 142 may induce air passing through the heat exchanger 186 to flow to the region in which the first fan 182 is disposed.

The driving device cover 142 includes a lower guide 144 for inducing air passing through the first fan 182 to flow to the first outlet 102b. The lower guide 144 is spaced apart from the upper guide 136 so as to form a discharge flow path 132a. The lower guide 144 has a first gear hole 142a formed in the portion thereof corresponding to the region in which the first louver gear 176 of the first louver-driving device 174 is disposed. Referring to FIG. 9, a portion of the first louver gear 176 may protrude outside the first gear hole 142a and may be in contact with the first louver 150.

### <Louver & Driving Device>

Referring to FIG. 6, the first air-processing apparatus 100 includes a first louver 150, which is rotatably disposed in the first outlet 102b in order to adjust the direction of air blown out through the first outlet 102b, and a first louver-driving device 174 for adjusting the orientation of the first louver 150.

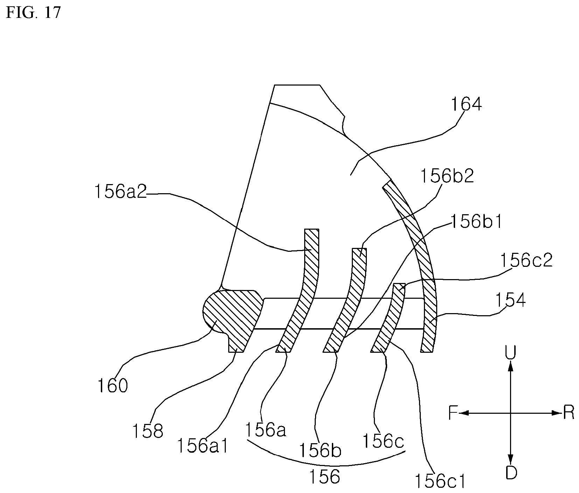

Referring to FIG. 17, the first louver 150 includes a plurality of vanes 154, 156, and 158, which are spaced apart from each other in the radial direction based on the rotation shaft.

Referring to FIG. 17, the first louver 150 includes a louver rotation shaft 160, which extends along the rotation center of the first louver 150, an outer vane 154, which is spaced outwards apart from the louver rotation shaft 160 in the radial direction, a plurality of inner vanes 156, which are spaced apart from each other in the radial direction between the louver rotation shaft 160 and the outer vane 154, and a vane gear 166, which is formed on the outer surface of the outer vane 154 in the circumferential direction.

The plurality of vanes 154, 156, and 158 may include the outer vane 154 and the plurality of inner vanes 156.

Referring to FIG. 14B, the louver rotation shaft 160 may be disposed so as to be in contact with the first front cover 118. The louver rotation shaft 160 is disposed in the first louver groove 122 in the first front cover 118. When the louver rotation shaft 160 rotates, the orientation of the plurality of vanes 154, 156, and 158, which are spaced apart from each other in the radial direction based on the louver rotation shaft 160, may be changed.

The louver rotation shaft 160 may include an axial vane 158, which extends from the louver rotation shaft 160 in a direction parallel to the inner vanes 156. The axial vane 158 extends in a direction parallel to the lower portions of the inner vanes 156.

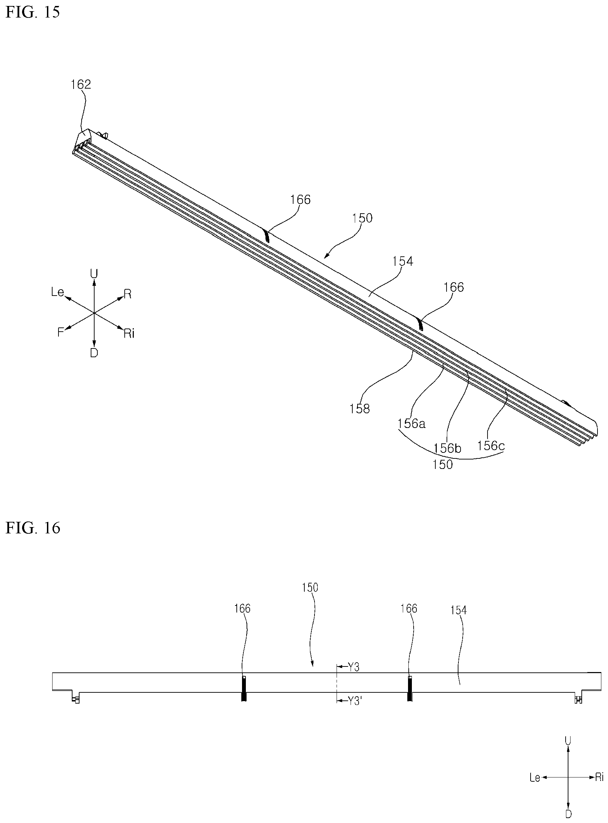

Referring to FIG. 17, the outer vane 154 is disposed farther from the louver rotation shaft 160 than the inner vanes 156. The outer vane 154 may be longer than the inner vanes 156 in the circumferential direction. Referring to FIG. 16, the outer vane 154 is formed in the circumferential direction based on the louver rotation shaft 160.

Referring to FIG. 17, the inner vanes 156 are disposed between the louver rotation shaft 160 and the outer vane 154 so as to be spaced apart from each other. The inner vanes 156 are shorter than the outer vane 154. The inner vanes 156 are longer than the axial vane 158.

Referring to FIG. 17, the inner vanes 156 have different lengths, respectively. The lengths of the inner vanes 156 gradually increase in a direction approaching the louver rotation shaft 160. The lengths of the inner vanes 156 gradually decrease in a direction approaching the outer vane 154.

Referring to FIG. 17, the inner vanes 156 include lower inner vane portions 156a1, 156b1, and 156c1, which are inclined so as to be gradually closer to the louver rotation shaft 160 in a downward direction, and upper inner vane portions 156a2, 156b2, and 156c2, which are bent and extend upwards from the upper ends of the lower inner vane portions 156a1, 156b1, and 156c1. The axial vane 158 extends in a direction parallel to the lower inner vane portions 156a1, 156b1, and 156c1.

The inner vanes 156 include a first inner vane 156a, which is disposed closest to the louver rotation shaft 160, a second inner vane 156b, which is disposed farther from the louver rotation shaft 160 than the first inner vane 156a, and a third inner vane 156c, which is disposed farther from the louver rotation shaft 160 than the second inner vane 156b.

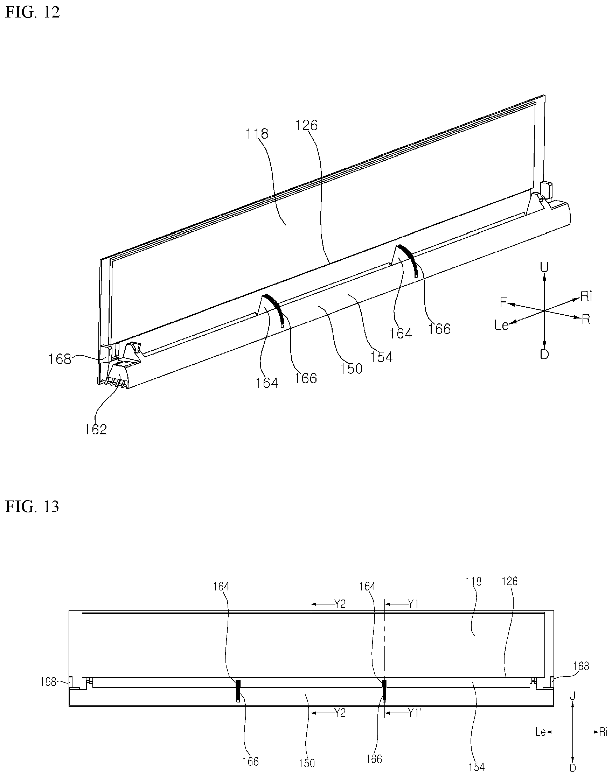

Referring to FIG. 12, the first louver 150 includes end panels 162, which are disposed at both ends of the vanes 154, 156, and 158 in a direction perpendicular to the vanes 154, 156, and 158, and a support panel 164, which is disposed between the end panels 162. The vane gear 166 is disposed on one side of the support panel 164. The end panels 162, which are disposed at both ends of the vanes 154, 156, and 158, may prevent the air flowing through the first louver 150 from being discharged in the leftward-rightward direction.

The support panel 164, which is disposed between the end panels 162, may support the vanes 154, 156, and 158. The vanes 154, 156, and 158 are formed to be long in the longitudinal direction, in which the louver rotation shaft 160 is formed. Accordingly, the support panel 164 may stably maintain the arrangement of the vanes 154, 156, and 158.

Referring to FIG. 14A, the support panel 164 may be formed in a fan shape. The vane gear 166 is disposed on the outer circumferential end of the support panel 164. The vane gear 166 may form threads on the outer circumferential end of the support panel 164 in the circumferential direction.

Referring to FIG. 14A, the support panel 164 may be connected to the first auxiliary support rod 170. The support panel 164 forms a space in which the first auxiliary support rod 170 is disposed in the portion in which the louver rotation shaft 160 is formed. The first auxiliary rotation shaft 172 is disposed inside the first auxiliary support rod 170, and the first auxiliary support rod 170 is connected to the louver rotation shaft 160 via the first auxiliary rotation shaft 172.

The vanes 154, 156, and 158 are disposed so as to protrude downwards further than the end panels 162 and the support panel 164.

The first louver 150 may include an output interface 191 for displaying the operational state of the first air-processing apparatus 100. The output interface 191 may provide visual or auditory information about the operational state of the first air-processing apparatus 100 to the user.

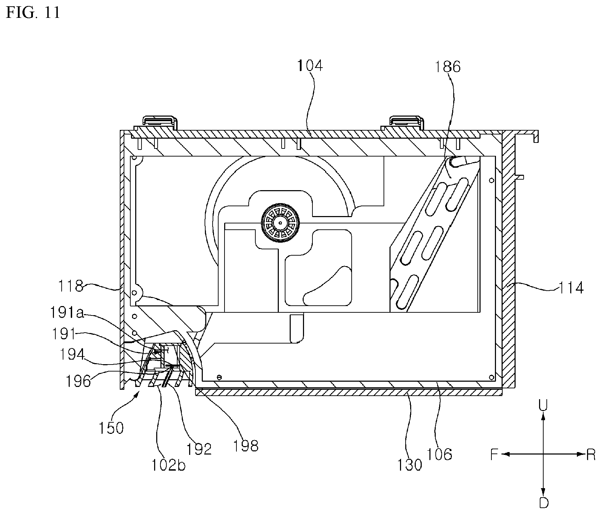

Referring to FIG. 11, the output interface 191 may visually display information about the operational state of the first air-processing apparatus 100. Also, the output interface 191 may output information about operational errors of the first air-processing apparatus 100.

The output interface 191 may include a lamp 196, a printed circuit board 194 for controlling the operation of the lamp 196, and a transparent panel 192 for transmitting the light radiated from the lamp 196 to the outside. The transparent panel 192 may be disposed on one of the vanes 154, 156, and 158. Referring to FIG. 11, the transparent panel 192 may be mounted on the inner vane 156.

The first louver 150 has formed therein a space 191a in which the lamp 196 and the printed circuit board 194 are disposed. The space 191a is disposed above the transparent panel 192. A wiring hole 198, through which a wire connected to the printed circuit board 194 passes, is formed in the upper side of the space 191a.

The first louver-driving device 174 is spaced apart from the louver rotation shaft 160 of the first louver 150 in the centrifugal direction. The first louver-driving device 174 is spaced apart from the louver rotation shaft 160, and is disposed so as to be in contact with the outer circumferential surface of the first louver 150.

Referring to FIG. 6, the first louver-driving device 174 includes a first louver gear 176, which is in contact with the first louver 150 in order to rotate the first louver 150, and a first louver motor 178 for rotating the first louver gear 176. According to the embodiment, two first louver gears 176 are provided so as to be spaced apart from each other, and the first louver-driving device 174 further includes a first gear rotation shaft 180 interconnecting the two first louver gears 176. The two first louver gears 176, which are connected to each other via the first gear rotation shaft 180, may rotate in the same direction.

### <Operation of Louver>

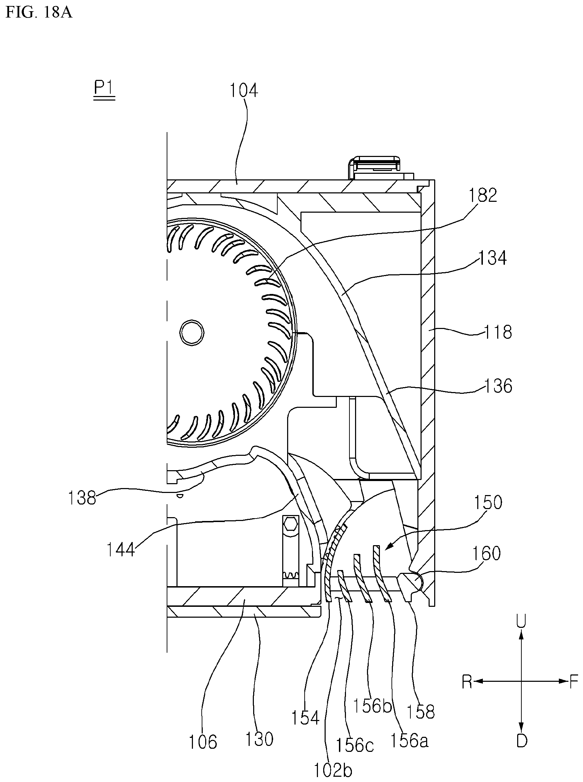

Referring to FIGS. 18A to 18C, the first louver 150 may be switched to a first mode P1 for forming an oblique air current in the forward direction, a second mode P2 for forming a horizontal air current in the forward direction, and a third mode P3 for forming a vertical air current toward the floor.

Referring to FIG. 18A, the first louver 150 is disposed above the first bottom cover 130 in the first mode P1. In the first mode P1, the lower end of each of the vanes 154, 156, and 158 of the first louver 150 may be disposed above the first bottom cover 130 in the vertical direction.

In the first mode P1, the lower end of the outer vane 154 may be oriented in a direction perpendicular to the floor. In the first mode P1, the lower end of each of the inner vanes 156a, 156b, and 156c may be inclined in the forward direction.

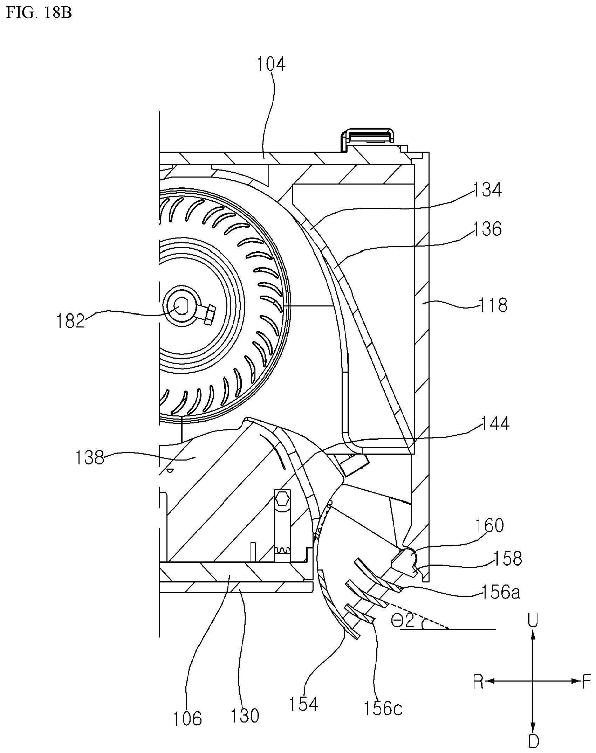

Referring to FIG. 18B, a portion of the first louver 150 is disposed below the first bottom cover 130 in the second mode P2. In the second mode P2, the lower end of the outer vane 154 and the lower end of each of the inner vanes 156a, 156b, and 156c may be disposed below the first bottom cover 130 in the vertical direction.

In the second mode P2, the inclination angle θ2 formed by the lower inner vane portion 157a of each of the inner vanes 156a, 156b, and 156c and the floor may be set to 30 degrees or less. Accordingly, in the second mode P2, the air flowing through the first louver 150 may be discharged in a direction substantially parallel to the floor.

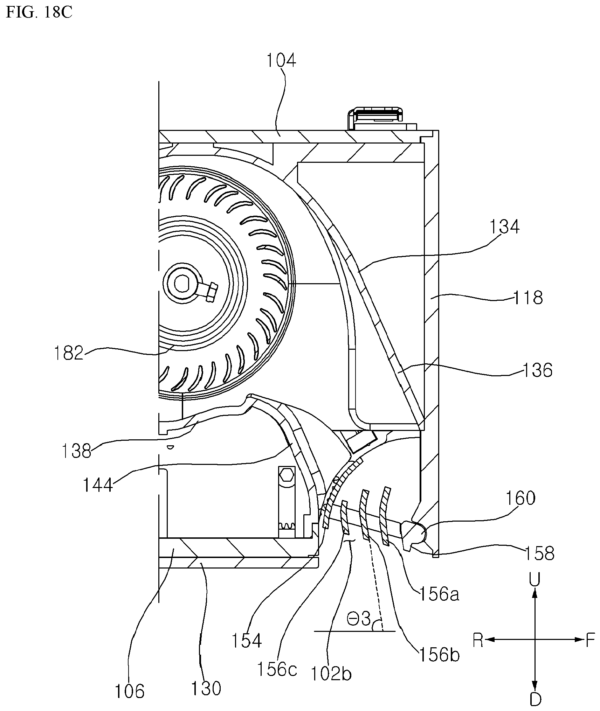

Referring to FIG. 18C, the first louver 150 is disposed above the first bottom cover 130 in the third mode P3. In the third mode P3, the lower end of the outer vane 154 and the lower end of each of the inner vanes 156a, 156b, and 156c may be disposed above the first bottom cover 130 in the vertical direction.

In the third mode P3, the inclination angle θ3 formed by the lower inner vane portion 157a of each of the inner vanes 156a, 156b, and 156c and the floor may be set to a range from 60 degrees to 90 degrees. Accordingly, in the third mode P3, the air flowing through the first louver 150 may be discharged in a direction substantially perpendicular to the floor.

### <Second Air-Processing Apparatus>

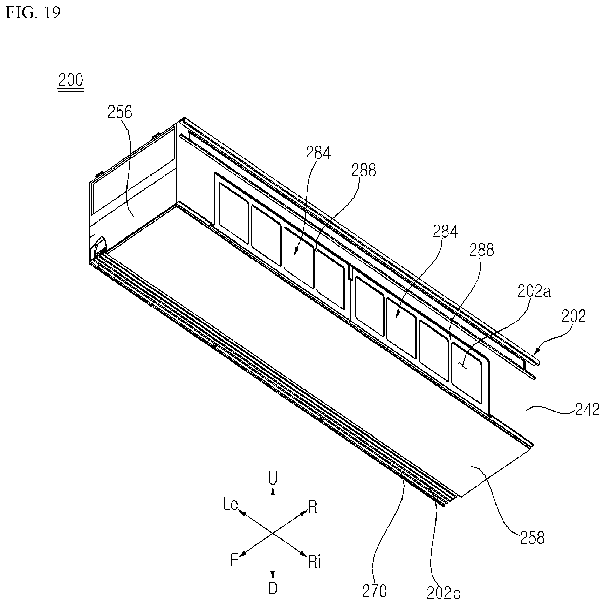

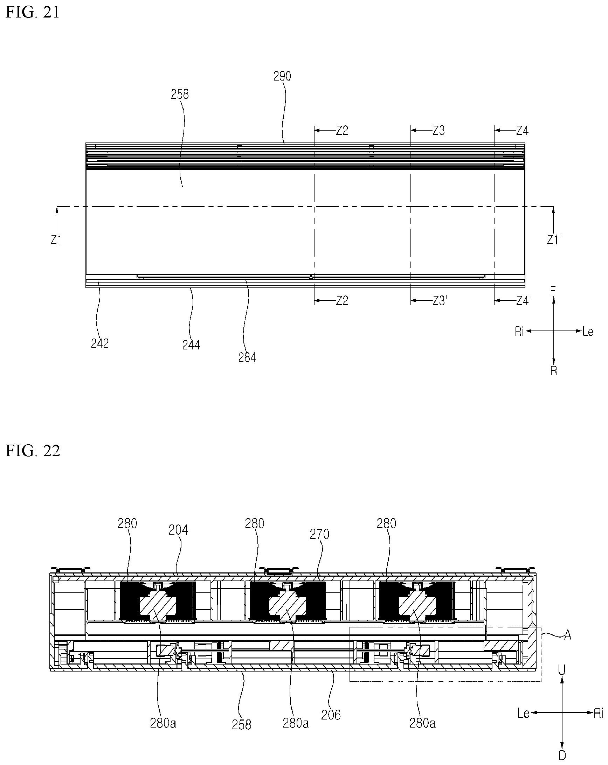

Hereinafter, a second air-processing apparatus according to an embodiment of the present disclosure will be described with reference to FIGS. 19 to 35C.

The second air-processing apparatus 200 induces air to flow through a filter device 284 and discharges the air to the outside. The second air-processing apparatus 200 has a second inlet 202a formed in one side thereof in order to suction air thereinto and a second outlet 202b formed in another side thereof perpendicular to the second inlet 202a in order to discharge air therefrom. Referring to FIG. 19, the second inlet 202a is formed so as to be perpendicular to the surface of the floor or ceiling. The second outlet 202b is formed so as to be open downwards. The second outlet 202b is formed perpendicular to the second inlet 202a.

Referring to FIG. 20, the second air-processing apparatus 200 includes a second fan 280, which causes air to flow, and a second fan motor 280a, which rotates the second fan 280. According to the embodiment, a plurality of second fans 280 is provided, and a plurality of second fan motors 280a is provided such that each of the second fan motors 280a is connected to a respective one of the second fans 280.

The second air-processing apparatus 200 includes a second case 202, which forms the external appearance of the second air-processing apparatus 200, and a second housing 268, which is disposed inside the second case 202 and which forms a flow path through which air flows. The second air-processing apparatus 200 includes a second louver 290, which is rotatably disposed in the second case 202 in order to adjust the direction of air that is discharged from the second outlet 202b, and a second louver-driving device 294, which changes the orientation of the second louver 290.

The second louver 290 and the second louver-driving device 294 disposed in the second air-processing apparatus 200 may have the same structures and perform the same functions as the first louver 150 and the first louver-driving device 174 of the first air-processing apparatus 100 described above with reference to FIGS. 12 to 17. Therefore, the description of the first louver 150 and the first louver-driving device 174 of the first air-processing apparatus 100 may apply to the second louver 290 and the second louver-driving device 294 disposed in the second air-processing apparatus 200.

The second air-processing apparatus 200 may include a second control box 290 for controlling the operation of the second fan motor 280a or the operation of the second louver-driving device 294.

### <Second Case>

Referring to FIG. 20, the second case 202 includes a second upper cover 204, which is secured to the ceiling, a second lower cover 206, which is disposed below the second upper cover 204, a second rear cover 242, which forms therein the second inlet 202a and to which the filter device 284 is mounted, a second front cover 246, which is disposed so as to be spaced forwards apart from the second rear cover 242, and two second side covers 256, which are disposed at both side ends of the second lower cover 206. The second case 202 further includes a second bottom cover 258, which is disposed below the second lower cover 206 so as to be movable in the forward-rearward direction.

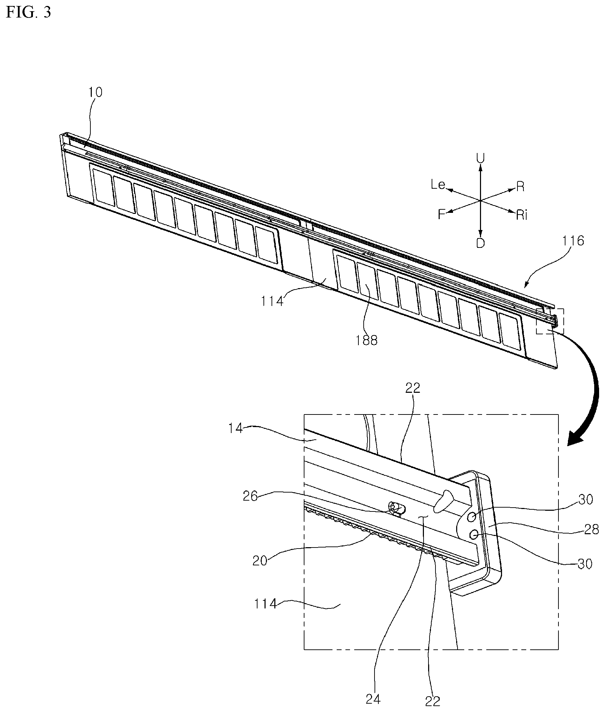

Referring to FIG. 20, the second inlet 202a is formed in the second rear cover 242. The guide rail 10 (refer to FIG. 3) may be mounted on the outer surface of the second rear cover 242. The second inlet 202a, in which the filter device 284 is mounted, is formed in the lower portion of the second rear cover 242. The guide rail 10 and the second support rail 244 for guiding movement of the filter cleaner 300 are mounted on the second rear cover 242.

The guide rail 10 is disposed above the second inlet 202a. Referring to FIG. 24, the second support rail 244 is disposed at the upper end of the second rear cover 242.

The second support rail 244 includes a second top plate 244a, which protrudes rearwards from the upper end of the second rear cover 242, and a second bent portion 244b, which is bent and extends downwards from the rear end of the second top plate 244a. The top roller 326 of the filter cleaner 300 may be in contact with the second bent portion 244b.

The second rear cover 242 is disposed behind a second vertical plate 214 of the second lower cover 206, which will be described later. The second rear cover 242 is fixedly disposed behind the second vertical plate 214.

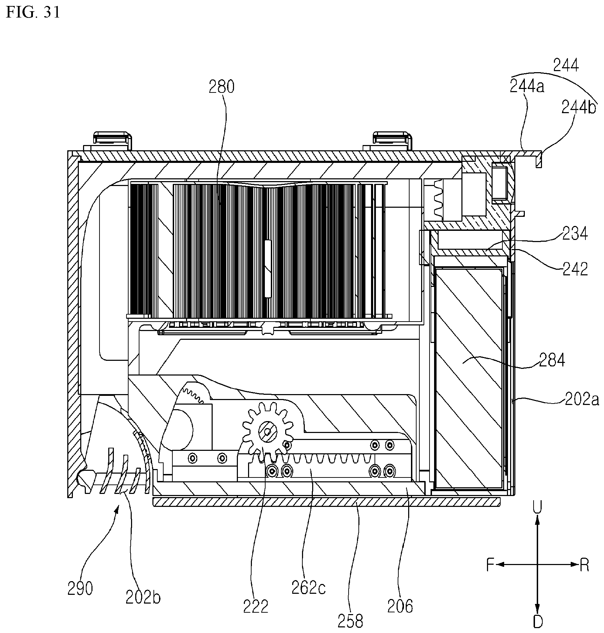

A filter-mounting part 234 (refer to FIG. 31) for moving the filter device 284 in the upward-downward direction is disposed in the second inlet 202a in the second rear cover 242. The filter-mounting part 234 may be moved in the upward-downward direction by a filter-driving device 228, which will be described later.

Referring to FIG. 20, the second upper cover 204 has a second fixing recess 204a formed in the upper surface thereof, into which a fixing member 12 for fixing the second case 202 to the ceiling is inserted. The second fixing recess 204a formed in the second upper cover 204 may have the same shape as the first fixing recess 104a formed in the first upper cover 104. Accordingly, the second upper cover 204 may be fixed to the mounting member 14 mounted to the ceiling by the fixing member 12 disposed at the upper side of the first upper cover 104.

Referring to FIG. 20, the second upper cover 204 may include two side plates 266d, which are bent and extend downwards from both side ends thereof. Each of the two side plates 266d may be connected to a respective one of the two second side covers 256.

Referring to FIG. 23, the second lower cover 206 is disposed below the second housing 268. The second louver-driving device 294 is disposed on the second lower cover 206. A cover-driving device 220 for moving the second bottom cover 258 in the forward-rearward direction is disposed on the second lower cover 206. The filter-driving device 228 for moving the filter device 284 and the filter-mounting part 234 in the upward-downward direction is disposed on the second lower cover 206.

The second lower cover 206 includes a second horizontal plate 208, which is disposed above the second bottom cover 258, a second vertical plate 214, which is disposed at the rear side of the second horizontal plate 208 so as to be perpendicular thereto and in which a second inner suction hole 214a is formed, and two second side walls 216, which are bent and extend upwards from both side ends of the second horizontal plate 208.

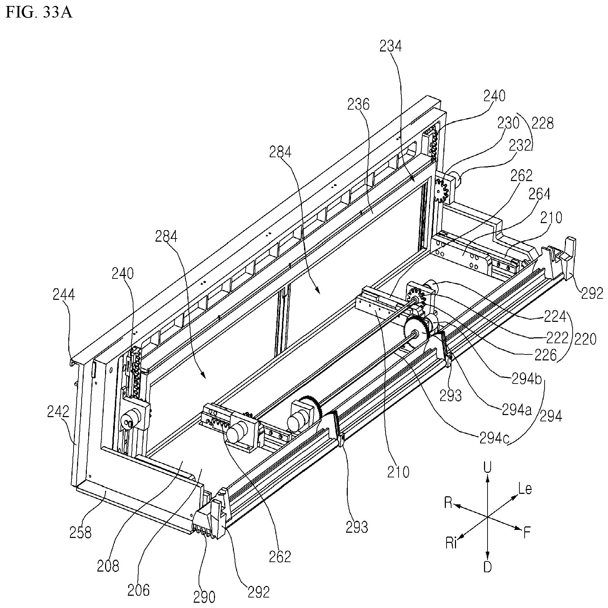

Referring to FIG. 33A, the second louver-driving device 294 is disposed on the second horizontal plate 208. The cover-driving device 220 is disposed above the second horizontal plate 208. The second horizontal plate 208 has guide grooves 208a formed therein to allow cover guides 262 and 264 of the second bottom cover 258 to be inserted thereinto.

Referring to FIGS. 31 and 33A, the cover-driving device 220 includes a cover-driving gear 222, which meshes with a guide gear 262c of the first cover guide 262, which will be described later, so as to rotate together therewith, and a cover-driving motor 224 for rotating the cover-driving gear 222.

According to the embodiment, two cover-driving gears 222 may be provided so as to be spaced apart from each other in the leftward-rightward direction. The cover-driving device 220 includes a cover-driving shaft 226 for interconnecting the two cover-driving gears 222 spaced apart from each other. Accordingly, the two cover-driving gears 222 connected to both ends of the cover-driving shaft 226 may rotate identically.

Referring to FIG. 33A, the second horizontal plate 208 is provided with fixing guides 210, which are connected to the cover guides 262 and 264 of the second bottom cover 258 in order to prevent the second bottom cover 258 from moving in the upward-downward direction. The fixing guides 210 protrude upwards from the second horizontal plate 208, and extend in the forward-rearward direction.

Referring to FIG. 33A, the fixing guides 210 may be disposed so as to be in contact with the first cover guide 262 or the second cover guide 264, which will be described later. The fixing guides 210 support the movement of the second bottom cover 258 in the forward-rearward direction. The fixing guides 210 prevent the second bottom cover 258 from moving in the upward-downward direction.

Referring to FIG. 23, the fixing guides 210 may have fixing protrusions 212, which protrude toward the cover guides 262 and 264. The fixing protrusions 212 extend in the forward-rearward direction. The fixing protrusions 212 may be disposed so as to be in contact with a first guide protrusion 262b of the first cover guide 262 or a second guide protrusion 264b of the second cover guide 264.

The fixing protrusions 212 have a structure corresponding to the first guide protrusion 262b of the first cover guide 262 or the second guide protrusion 264b of the second cover guide 264, thereby preventing the second bottom cover 258 from moving in the upward-downward direction.

Referring to FIG. 20, the second vertical plate 214 has a second inner suction hole 214a formed therein. The second inner suction hole 214a may be formed to have a size corresponding to the second inlet 202a. The filter-driving device 228 is disposed on the second vertical plate 214.

Each of the two second side covers 256 is connected at the lower portion thereof to the second lower cover 206, and is connected at the upper portion thereof to the second upper cover 204. A second rotation support rod 292 for supporting rotation of the second louver 290 is disposed on each of the two second side covers 256. The second rotation support rod 292, which is connected to each of the second side covers 256, may have the same shape as the first rotation support rod 168 connected to each of the first side covers 128.

The second front cover 246 is disposed in front of the second housing 268. The second front cover 246 may have the same shape as the first front cover 118. Also, the second front cover 246 may be disposed in the same manner as the first front cover 118. Therefore, the lower end of the second front cover 246 is spaced a predetermined gap apart from the front end portion of the second lower cover 206, thereby forming the second outlet 202b.

In addition, a second louver protrusion 248, in which a second louver groove 250 for receiving a second louver rotation shaft 270a of the second louver 290 is formed, is formed on the second front cover 246 in order to limit the range within which the second louver 290 can rotate. A second support-rod recess 252 in which a second auxiliary support rod 293 is disposed is formed between the left end and the right end of the second louver protrusion 248.

Referring to FIG. 24, a second stepped portion 254, which interferes with an end portion of a second upper housing 270 to be described later, is formed in the second front cover 246.

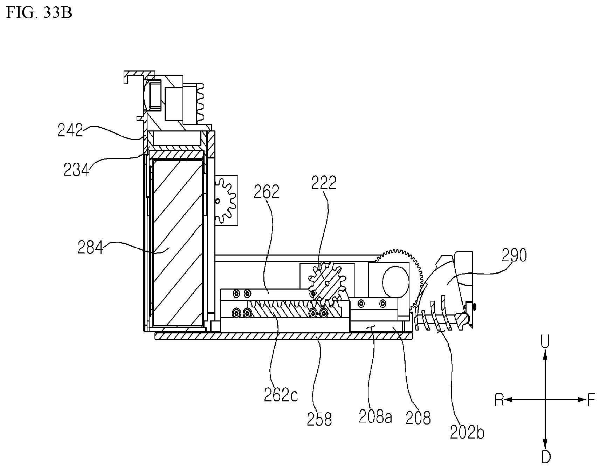

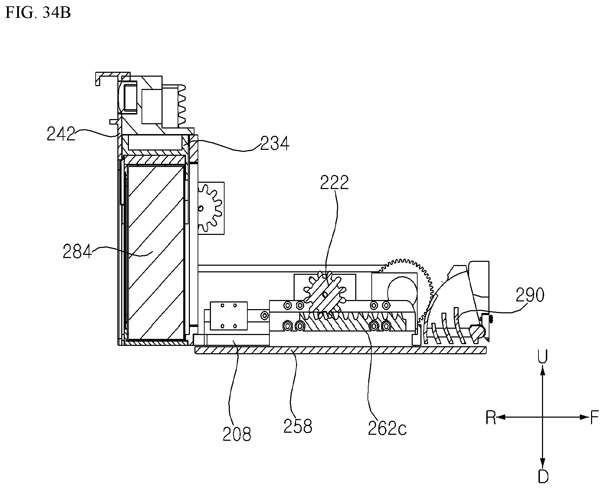

The second bottom cover 258 is disposed at the second lower cover 206 so as to be movable in the forward-rearward direction. Referring to FIG. 33B, when the second bottom cover 258 is disposed at a rear position adjacent to the second rear cover 242, the second bottom cover 258 may cover the lower side of the filter device 284. Referring to FIG. 34B, when the second bottom cover 258 is disposed at a front position adjacent to the second front cover 246, the second bottom cover 258 may block the second outlet 202b. Referring to FIG. 34B, when the second bottom cover 258 is disposed at a front position adjacent to the second front cover 246, the second bottom cover 258 may open the lower side of the filter device 284.

Referring to FIG. 20, the second bottom cover 258 includes a bottom plate 260, which is disposed below the second lower cover 206, and cover guides 262 and 264, which protrude upwards from the bottom plate 260 and which move the bottom plate 260 in the forward-rearward direction.

Referring to FIG. 23, the cover guides 262 and 264 include a first cover guide 262, which is connected to the cover-driving device 220 to move the bottom plate 260, and a second cover guide 264, which prevents the bottom plate 260 from vibrating in the upward-downward direction.

Referring to FIG. 23, the first cover guide 262 includes a first guide wall 262a, which protrudes upwards from the bottom plate 260 and extends in the forward-rearward direction, a guide gear 262c, which is disposed on one side of the first guide wall 262a and is screwed to the cover-driving device 220, and a first guide protrusion 262b, which is disposed on the opposite side of the first guide wall 262a and guides the movement of the second bottom cover 258 in the forward-rearward direction. A recess 262b 1, into which the fixing protrusion 212 is inserted, is formed in the first guide protrusion 262b.

Referring to FIG. 23, the second cover guide 264 includes a second guide wall 264a, which protrudes upwards from the bottom plate 260 and extends in the forward-rearward direction, and a second guide protrusion 264b, which is disposed on one side of the second guide wall 264a and guides the movement of the second bottom cover 258 in the forward-rearward direction. A recess 264b1, into which the fixing protrusion 212 is inserted, is formed in the second guide protrusion 264b.

Referring to FIG. 20, the second air-processing apparatus 200 includes an inner cover 266, which is disposed above the second lower cover 206 and covers the upper sides of the second louver-driving device 294 and the cover-driving device 220. Referring to FIG. 24, the inner cover 266 may guide the flow of air flowing inside the second case 202, and may prevent the air from flowing to the second louver-driving device 294. The inner cover 266 is coupled to the second lower cover 206 to form a space in which the second louver-driving device 294 and the cover-driving device 220 are disposed.

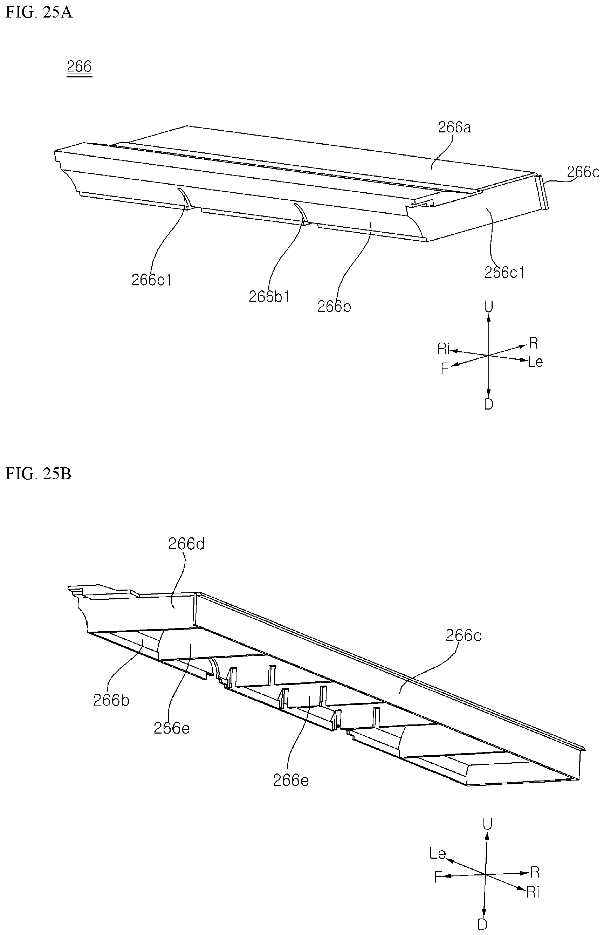

Referring to FIGS. 25A and 25B, the inner cover 266 includes an upper plate 266a, which is disposed above the second louver-driving device 294, a front plate 266b, which covers the front side of the second louver-driving device 294, a rear plate 266c, which covers the rear side of the second louver-driving device 294, and side plates 266d, which cover the lateral sides of the second louver-driving device 294.

The rear plate 266c may prevent the air flowing through the filter device 284 from flowing to the space under the inner cover 266. The upper plate 266a may guide the air flowing through the filter device 284 to the space in which the second fan 280 is disposed. The front plate 266b may guide the air flowing through the second fan 280 toward the second outlet 202b. The front plate 266b has a second gear hole 266b1 formed in the region in which a second louver gear 294a of the second louver-driving device 294 is disposed. A portion of the second louver gear 294a may protrude outside the second gear hole 266b1 (refer to FIG. 25A), and may be in contact with the second louver 290.

Referring to FIG. 25B, the inner cover 266 includes a plurality of partition walls 266e, which vertically extend downwards from the upper plate 266a. The plurality of partition walls 266e may be spaced apart from each other in the leftward-rightward direction, and may increase the rigidity of the inner cover 266.

### <Second Housing>

Referring to FIG. 24, the second housing 268 is disposed inside the second case 202 to form a space in which air flows. A second fan 280 and a second fan motor 280a for rotating the second fan 280 are disposed inside the second housing 268.

The second fan 280 may be implemented as a centrifugal fan, which suctions air in a direction parallel to the rotation axis and discharges air in the centrifugal direction. Accordingly, referring to FIG. 24, the second fan motor 280a may be disposed inside the second fan 280 to rotate the second fan 280.

The second fan motor 280a may be fixed to a second upper housing 270, which will be described later.

Referring to FIG. 24, the second housing 268 includes a second upper housing 270, which is disposed above the second fan 280, and a second lower housing 274, which is disposed below the second fan 280.

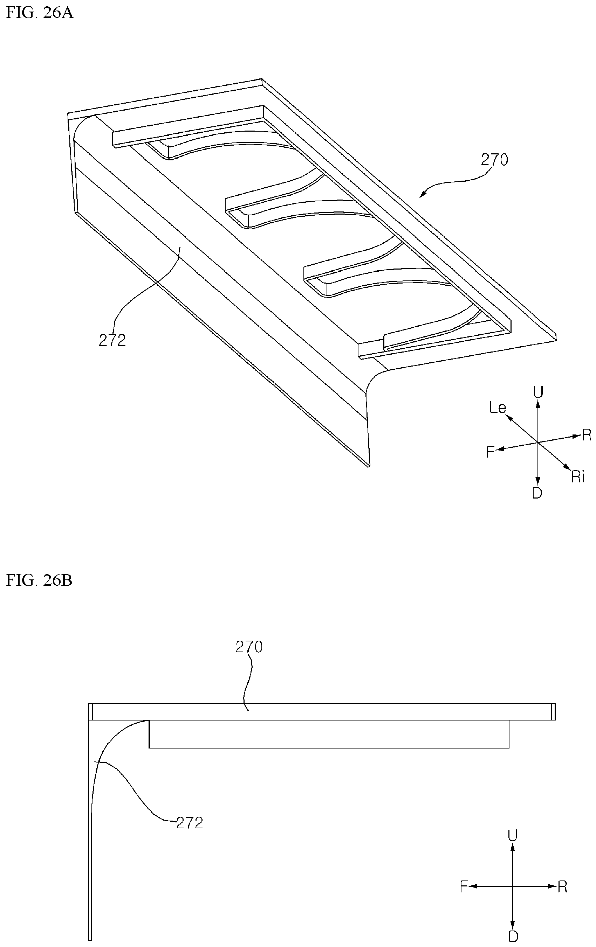

Referring to FIGS. 26A and 26B, the second upper housing 270 may be mounted to the second upper cover 204. The lower end of the second upper housing 270 may be disposed on the second stepped portion 254 of the second front cover 246. The second upper housing 270 includes a front guide 272 for guiding the air flowing through the second fan 280 to the second outlet 202b. The front guide 272 extends downwards from the front end of the second upper housing 270.

Referring to FIG. 24, the front guide 272 causes the air flowing along the second fan 280 to flow downwards. The front guide 272 guides the air flowing through the second fan 280 to the second outlet 202b.

The front guide 272 is disposed so as to be smoothly connected to the second front cover 246. Accordingly, the air flowing along the front guide 272 flows to the second outlet 202b via the second front cover 246.

Referring to FIG. 24, the second fan motor 280a is mounted in the second upper housing 270.

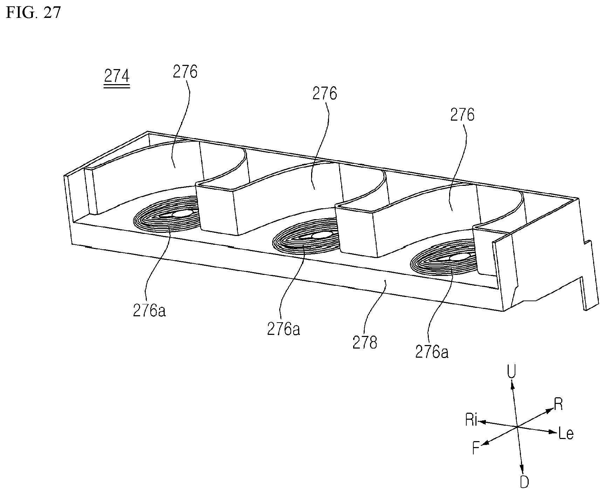

Referring to FIG. 24, the second lower housing 274 is disposed above the inner cover 266. Referring to FIG. 27, the second lower housing 274 includes a plurality of fan housings 276 forming spaces in which a plurality of second fans 280 is disposed. Each of the fan housings 276 is spaced apart from the outer circumferential surface of the second fan 280 in the radial direction. Each of the fan housings 276 has an open front portion. Accordingly, the air flowing in the radial direction of the second fan 280 may be discharged to the open front portion of each of the fan housings 276. A fan inlet 276a, through which air is introduced into the second fan 280, is formed below each of the fan housings 276.

The second lower housing 274 is spaced upwards apart from the inner cover 266. Accordingly, a suction flow path 268a, through which the air passing through the filter device 284 flows, is formed between the second lower housing 274 and the inner cover 266.

The second lower housing 274 is spaced rearwards apart from the front guide 272 of the second upper housing 270. The second lower housing 274 includes a rear guide 278, which is spaced apart from the front guide 272 and extends downwards. The second lower housing 274 is spaced upwards apart from the inner cover 266 by the rear guide 278. The rear guide 278 forms a second discharge flow path 268b in the upward-downward direction together with the front guide 272.

The front guide 272 and the rear guide 278 may guide the air flowing from the second fan 180 to the second outlet 202b.

### <Filter Device & Filter-Driving Device>

The filter device 284 is mounted to the filter-mounting part 234. The filter-mounting part 234 is movably disposed in the second case 202. The filter device 284 and the filter-mounting part 234 may be coupled to each other by means of a first magnet 287 disposed in the filter device 284 and a second magnet 238 disposed in the filter-mounting part 234. Accordingly, the position of the filter device 284 may be changed in the upward-downward direction according to movement of the filter-mounting part 234. Also, a user may easily separate the filter device 284 from the filter-mounting part 234.

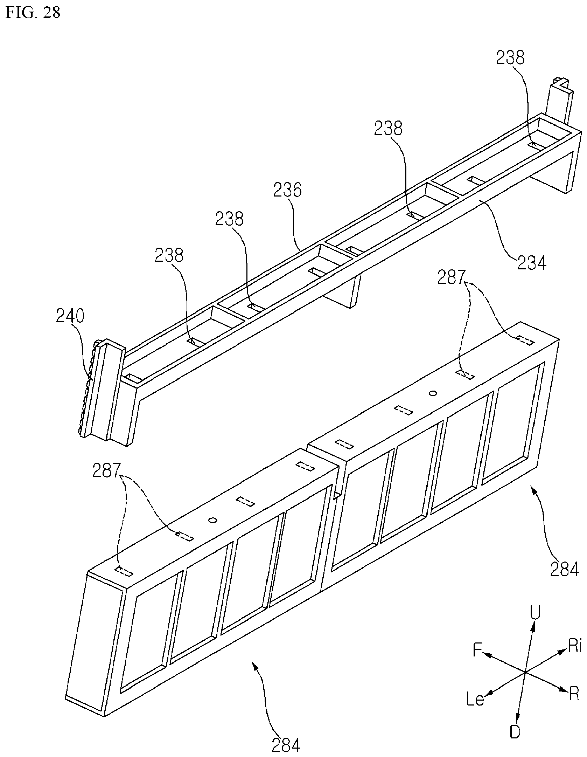

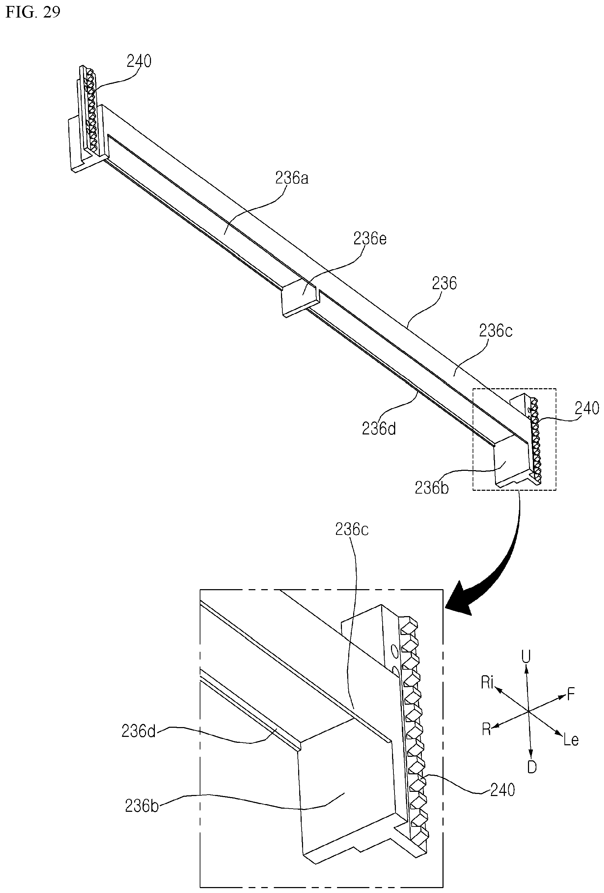

Referring to FIGS. 28 and 29, the filter-mounting part 234 includes a mounting body 236, to which the filter device 284 is mounted, and a body gear 240 for adjusting the position of the mounting body 236.

Referring to FIGS. 28 and 29, the mounting body 236 includes an upper body 236a, which is disposed above the filter device 284, side bodies 236b, which extend downwards from both ends of the upper body 236a, a front body 236c, which extends downwards from the front end of the upper body 236a, and a rear body 236d, which extends downwards from the rear end of the upper body 236a. The side bodies 236b extend downwards to be longer than the front body 236c or the rear body 236d. Two side bodies 236 may be provided at respective ends of the upper body 236a. A partition body 236e for isolating a plurality of filter devices 284 from each other may be disposed between the two side bodies 236b.

The length that the front body 236c extends downwards from the upper body 236a may be longer than the length that the rear body 236d extends downwards from the upper body 236a.

The front body 236c, the rear body 236d, and the side bodies 236b may guide mounting of the filter device 284 to the filter-mounting part 234.

A body gear 240 is disposed outside the side body 236b. The body gear 240 may be a rack gear in which threads protruding forwards extend in the upward-downward direction.

A plurality of second magnets 238 is disposed above the upper body 236a.

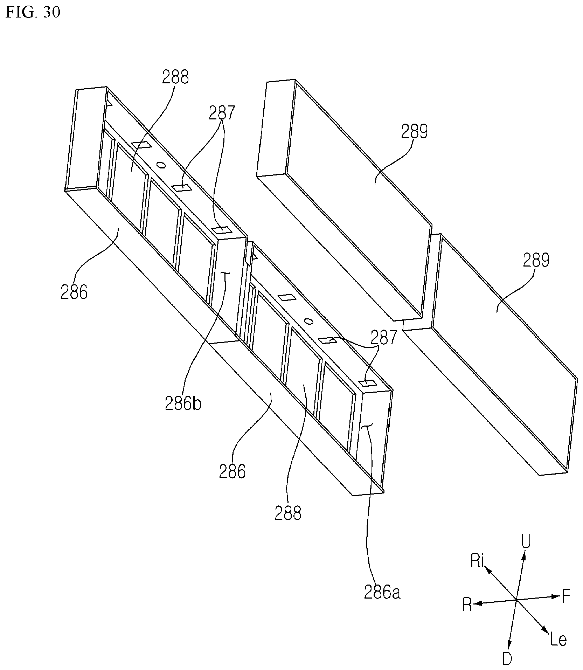

Referring to FIG. 30, the filter device 284 includes a filter case 286, which supports a second pre-filter 288 disposed in one side thereof and has an open opposite side, and a HEPA filter 289, which is disposed so as to be inserted into or withdrawn out of the filter case 286 and functions to remove fine dust.

The filter case 286 is formed to have a size capable of accommodating the HEPA filter 289. The second pre-filter 288 for primarily removing foreign substances from the air introduced into the second inlet 202a is disposed in one side of the filter case 286. The filter case 286 has an opening 286a formed in a surface thereof opposite the second pre-filter 288. The HEPA filter 289 may be inserted into or withdrawn out of the filter case 286 through the opening 286a.

The first magnet 287 is disposed on the upper wall of the filter case 286. The first magnet 287 is disposed at a position corresponding to the second magnet 238 when the filter device 284 is mounted to the filter-mounting part 234.

Referring to FIG. 33A, the filter-driving device 228 is disposed on the second lower cover 206, and moves the filter-mounting part 234 in the upward-downward direction. The filter-driving device 228 is disposed on the second vertical plate 214. The filter-driving device 228 is disposed at each of both side ends of the second vertical plate 214.

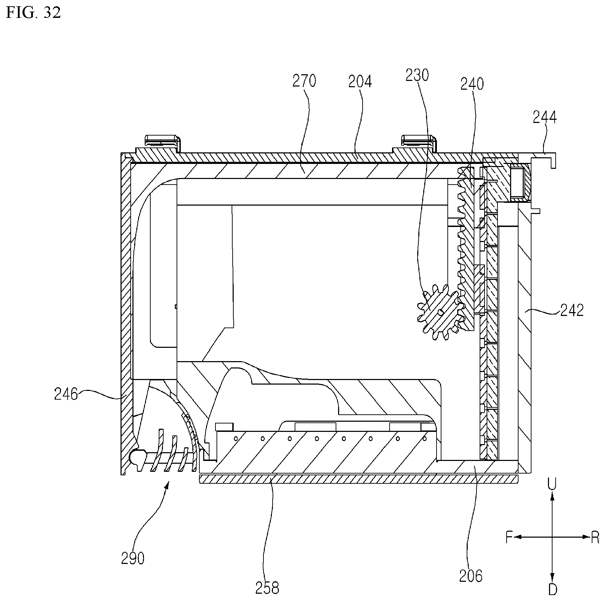

Referring to FIGS. 32 and 33A, the filter-driving device 228 includes a filter-driving gear 230, which meshes with the body gear 240 and rotates together therewith, and a filter-driving motor 232, which rotates the filter-driving gear 230. The filter-driving gear 230 may be implemented as a spur gear. The filter-driving gear 230 and the filter-driving motor 232 are fixedly disposed on the second vertical plate 214.

### <Louver & Driving Device>

The second air-processing apparatus 200 includes a second louver 290, which is rotatably disposed in the second outlet 202b in order to adjust the direction of air that is discharged from the second outlet 202b, and a second louver-driving device 294, which adjusts the orientation of the second louver 290.

The second louver 290 and the second louver-driving device 294 may have the same structures and perform the same functions as the first louver 150 and the first louver-driving device 174 of the first air-processing apparatus 100 described above. Therefore, the description of the first louver 150 and the first louver-driving device 174 of the first air-processing apparatus 100 may apply to the second louver 290 and the second louver-driving device 294.

### <Operation of Bottom Cover and Filter-Mounting Part>

Hereinafter, the movement of the second bottom cover 258, the filter-mounting part 234, and the filter device 284 will be described with reference to FIGS. 33A to 35C.

Referring to FIGS. 33A and 33B, the second bottom cover 258 is disposed below the filter device 284. Accordingly, the lower side of the second louver 270 may be opened, and thus the orientation of the second louver 270 may be changed. The filter device 284 and the filter-mounting part 234 for moving the filter device 284 are disposed above the second bottom cover 258.

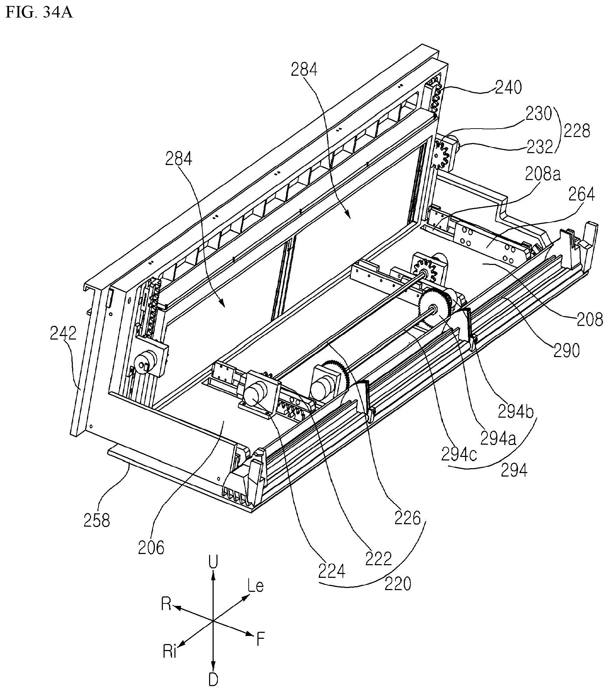

Referring to FIGS. 34A and 34B, the second bottom cover 258 may be moved forwards, and may be disposed below the second outlet 202b. The second bottom cover 258 may be moved forwards by the operation of the cover-driving device 220.

Referring to FIG. 34B, when the second bottom cover 258 is moved forwards, the region below the filter device 284 is opened. Referring to FIG. 34B, when the second bottom cover 258 is moved forwards, the lower side of the second outlet 202b is blocked. Accordingly, the rotation of the second louver 270 is restricted.

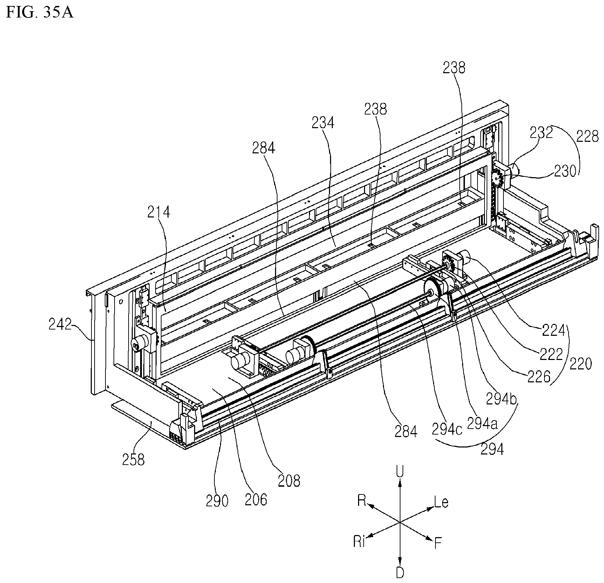

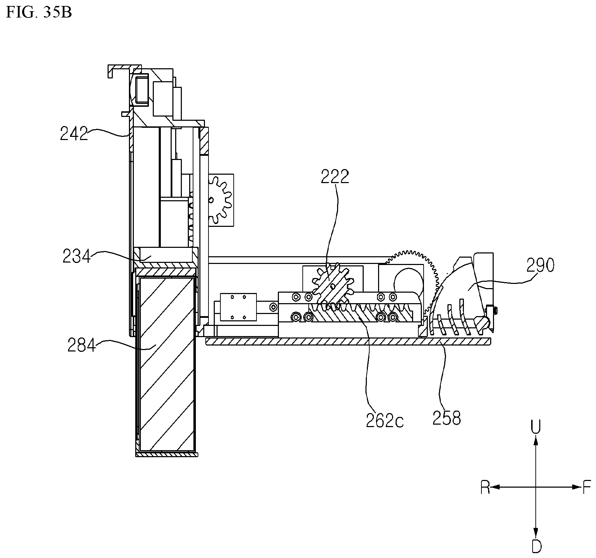

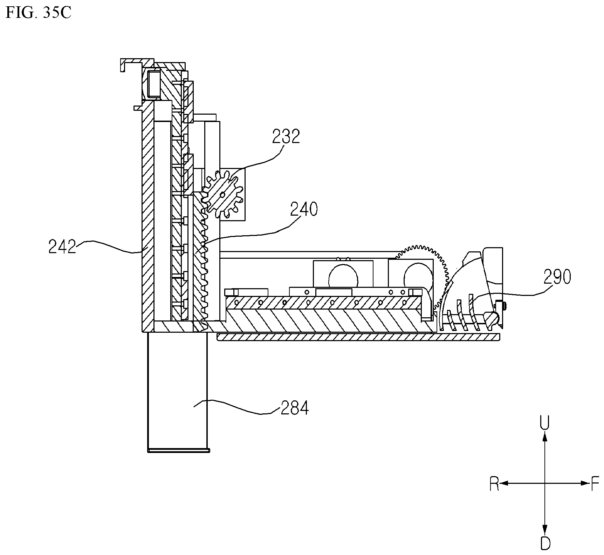

Referring to FIGS. 35A to 35C, in the state in which the second bottom cover 258 is moved forwards, the filter device 284 and the filter-mounting part 234 may be moved downwards. The filter-mounting part 234 may be moved downwards by the filter-driving device 228.

The coupled state of the filter-mounting part 234 and the filter device 284 may be maintained by the first magnet 287 and the second magnet 238. Accordingly, when the filter-mounting part 234 is moved downwards, the filter device 284 is also moved downwards.

When the filter device 284 is moved downwards by the filter-mounting part 234, a user may easily separate the filter device 284 from the filter-mounting part 234.

A filter cleaner 300 of the present disclosure may clean a pre-filter 188 disposed in a case of an air-processing apparatus for adjusting the temperature of air or an air-processing apparatus for purifying air. The air-processing apparatus may include a first air-processing apparatus 100 for adjusting the temperature of air to be discharged and a second air-processing apparatus 200 for removing foreign substances from the air to be discharged. Hereinafter, the present disclosure will be described with reference to the first air-processing apparatus 100 (hereinafter referred to as an "air-processing apparatus"). The following description of the configuration of the air-processing apparatus 100 may also apply to the second air-processing apparatus.

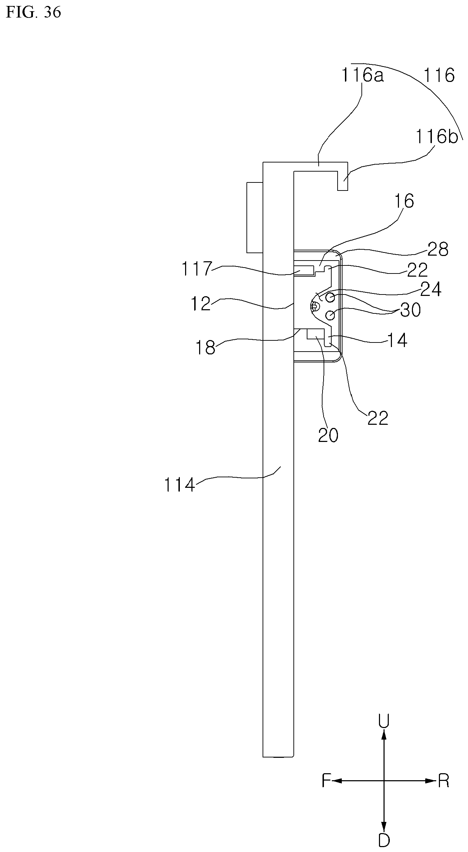

Referring to FIG. 36, FIG. 3 and FIG. 4, the guide rail 10 includes a gear rail 20, which has threads to be engaged with a moving gear 358 of the filter cleaner 300, and a roller rail 22, which is in contact with guide rollers 308a and 308b of the filter cleaner 300.

Referring to FIG. 36, the roller rail 22 is disposed at each of the upper and lower ends of the rear surface 14 of the guide rail 10. The roller rail 22 is disposed behind the gear rail 20. The roller rail 22 is disposed at each of the upper side and the lower side of the guide rail 10. The roller rail 22 may have a rib structure that protrudes from the rear end of the guide rail 10 in the upward-downward direction. The roller rail 22 is formed so as to protrude downwards further than the threads of the gear rail 20.

The gear rail 20 is disposed in front of the roller rail 22. The gear rail 20 is formed on the lower surface of the guide rail 10. The gear rail 20 may have the shape of a rack gear. In addition, the moving gear 358, which is engaged with the gear rail 20, may have the shape of a pinion gear.

When viewed from the rear, the guide rail 10 may have a structure in which the gear rail 20 is shielded by the roller rail 22.

Referring to FIG. 36, the front surface 12 of the guide rail 10, which faces the rear cover 114, and the upper surface 16 of the guide rail 10, which faces the rail-fixing protrusion 117, may be in contact with the rear cover 114. A rail groove 24 is formed in the rear surface 14 of the guide rail 10.

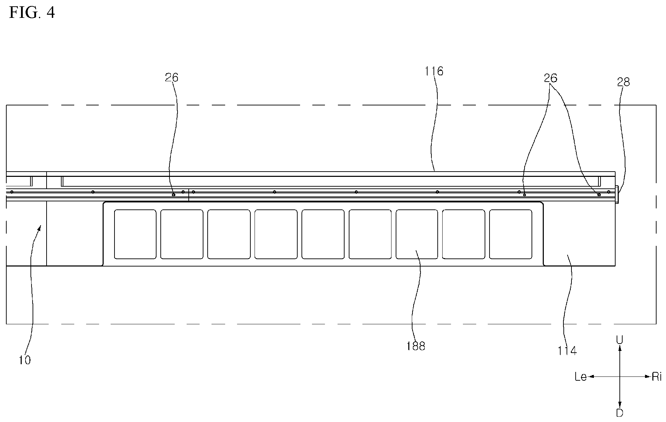

The rail groove 24 has a shape that is recessed in the forward direction, and extends in the leftward-rightward direction. An object to be sensed 26 is disposed in the rail groove 24. Referring to FIG. 4, the object to be sensed 26 may be provided in a plural number, and the plurality of objects to be sensed 26 may be disposed so as to be spaced apart from each other in the leftward-rightward direction. A position detection sensor 322 may be disposed at the filter cleaner 300, and when the position detection sensor 322 senses the object to be sensed 26, the position of the filter cleaner 300 may be detected.

The object to be sensed 26 may be formed in a structure corresponding to the position detection sensor 322. For example, when the position detection sensor 322 is a switch sensor, the object to be sensed 26 may have the shape of a protrusion that protrudes rearwards. Alternatively, when the position detection sensor 322 is a Hall sensor, the object to be sensed 26 may be implemented as a magnet.

Referring to FIGS. 3 and 4, an end plate 28 for limiting the movement of the filter cleaner 300 in one direction is disposed at the left end or the right end of the guide rail 10. The end plate 28 is disposed in a direction perpendicular to the direction in which the guide rail 10 extends. The end plate 28 protrudes rearwards from the rear cover 114.

The end plate 28 is provided with a charging terminal 30, with which a connection terminal 320 of the filter cleaner 300 is brought into contact. The charging terminal 30 protrudes from the end plate 28 in the direction in which the guide rail 10 extends. Accordingly, when the filter cleaner 300 reaches the end plate 28, the connection terminal 320 of the filter cleaner 300 may be brought into contact with and connected to the charging terminal 30.

### <Filter Cleaner>

The filter cleaner 300 is disposed at the rear side of the air-processing apparatus 100 so as to be movable in the leftward-rightward direction. The filter cleaner 300 moves in the leftward-rightward direction along the guide rail 10 disposed on the rear cover 114. The filter cleaner 300 may remove foreign substances adhered to the pre-filter 188.

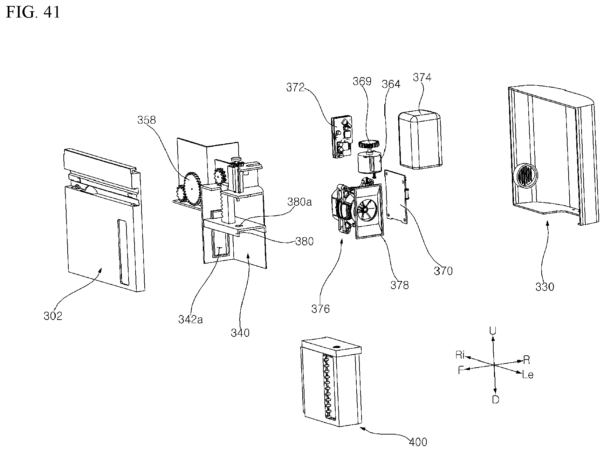

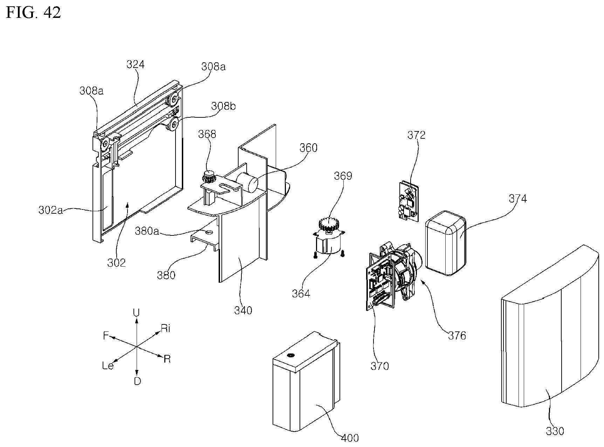

Referring to FIGS. 41 and 42, the filter cleaner 300 includes housings 302 and 330, which define the external appearance of the filter cleaner 300, a moving gear 358, which is rotatably disposed inside the housings 302 and 330 in order to move the housings 302 and 330, a gear motor 356, which is disposed inside the housings 302 and 330 in order to rotate the moving gear 358, guide rollers 308a and 308b, which are rotatably disposed inside the housings 302 and 330 in order to guide the movement of the housings 302 and 330, a dust container device 400, which receives foreign substances removed from the pre-filter 188, and a suction device 376, which forms the flow of air to the dust container device 400.

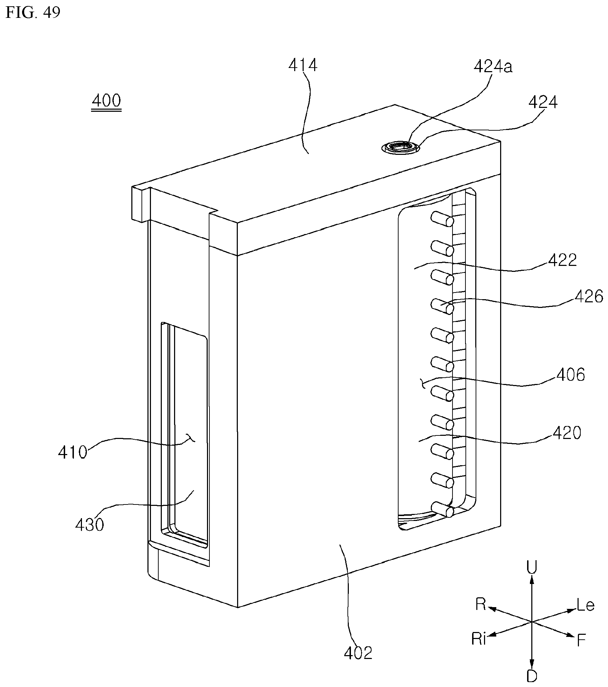

The dust container device 400 includes a dust container housing 402 and an agitator 420 (refer to FIG. 49), which removes foreign substances from the pre-filter 188 by contacting the same. The concrete configuration of the dust container device 400 will be described in detail later.

Referring to FIGS. 41 and 42, the filter cleaner 300 includes a partition wall 340, which is disposed inside the housings 302 and 330 in order to partition the inner space in the housings 302 and 330, and a dust container guide 380, which is movably disposed on the partition wall 340 in order to displace the dust container device 400.

### <Housings>

Referring to FIGS. 41 and 42, the housings 302 and 330 define the external appearance of the filter cleaner 300. The housings 302 and 330 include a first housing 302, which is disposed so as to face the rear cover 114 when the filter cleaner 300 is mounted to the guide rail 10, and a second housing 330, which is disposed at the rear side of the first housing 302 in order to cover the same.

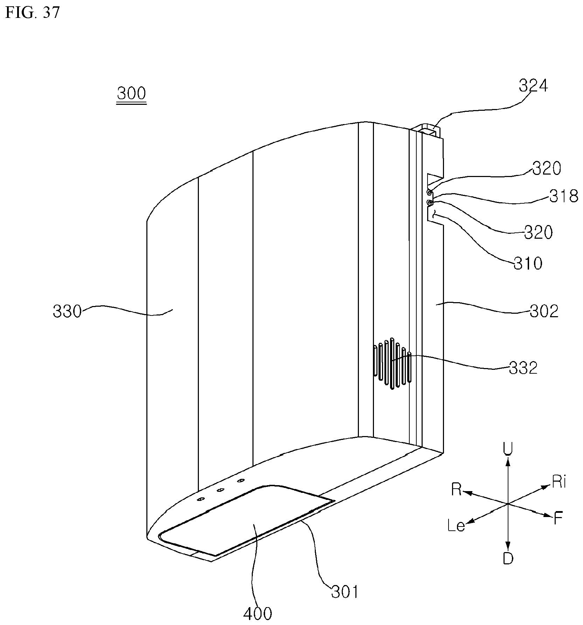

Referring to FIG. 37, the housings 302 and 330 have a dust container hole 301 formed in the lower surfaces thereof to allow the dust container device 400 to be withdrawn therefrom or inserted thereinto.

The first housing 302 may have the shape of a plate that is parallel to the pre-filter 188. When the filter cleaner 300 moves in the region behind the pre-filter 188, the first housing 302 may be maintained at a constant interval behind the pre-filter 188.

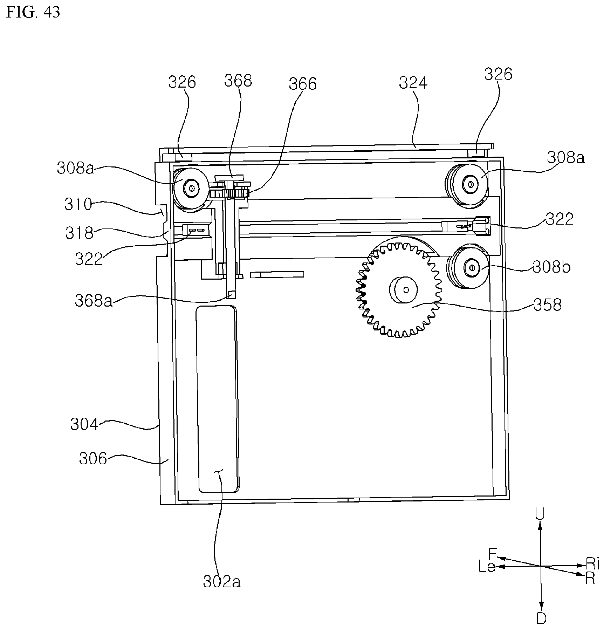

Referring to FIG. 43, the first housing 302 includes a base plate 304, which has the shape of a plate that is parallel to the pre-filter 188, and a guide groove 310, which is formed in the base plate 304 so as to be recessed rearwards in order to provide a space in which the guide rail 10 is disposed.

Referring to FIG. 43, the base plate 304 has a suction hole 302a formed therein to introduce foreign substances into the dust container device 400 therethrough. The agitator 420 is disposed at a position corresponding to the suction hole 302a. The suction hole 302a may be formed to have a size corresponding to that of the pre-filter 188 disposed on the rear cover 114. That is, the height of the suction hole 302a in the upward-downward direction may be set to correspond to the height of the pre-filter 188 in the upward-downward direction.

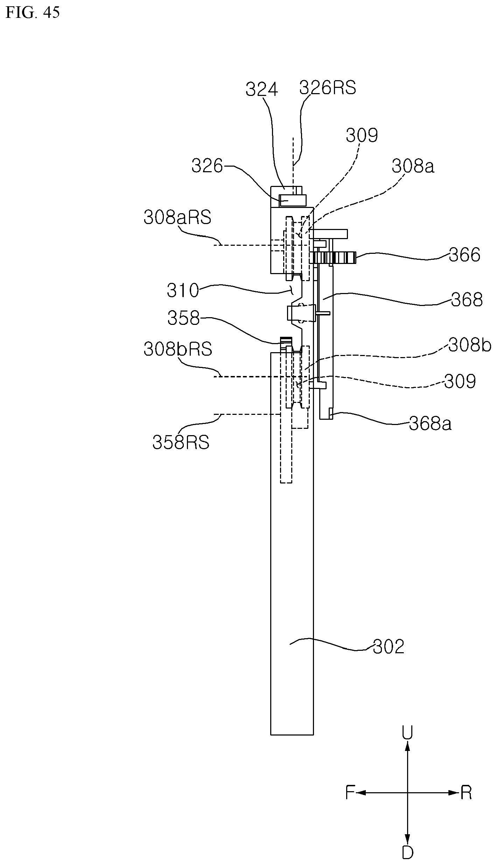

Referring to FIG. 45, the first housing 302 includes a peripheral wall 306, which extends rearwards from the periphery of the base plate 304, and a top wall 324, which is bent and extends rearwards from the upper end of the base plate 304. The top wall 324 is disposed so as to be spaced upwards apart from the peripheral wall 306. A support roller 326, which is in contact with the support rail 116 of the rear cover 114, is disposed on the top wall 324.

Referring to FIG. 45, the support roller 326 rotates about a rotation axis 326RS extending in the upward-downward direction. The rotation axis 326RS of the support roller 326 extends perpendicular to the rotation axes 308aRS and 308bRS of the guide rollers 308a and 308b. The rotation axis 326RS of the support roller 326 extends perpendicular to the rotation axis 358RS of the moving gear 358.

The support roller 326 may be in contact with the bent portion 116b of the support rail 116, thereby supporting displacement of the filter cleaner 300.

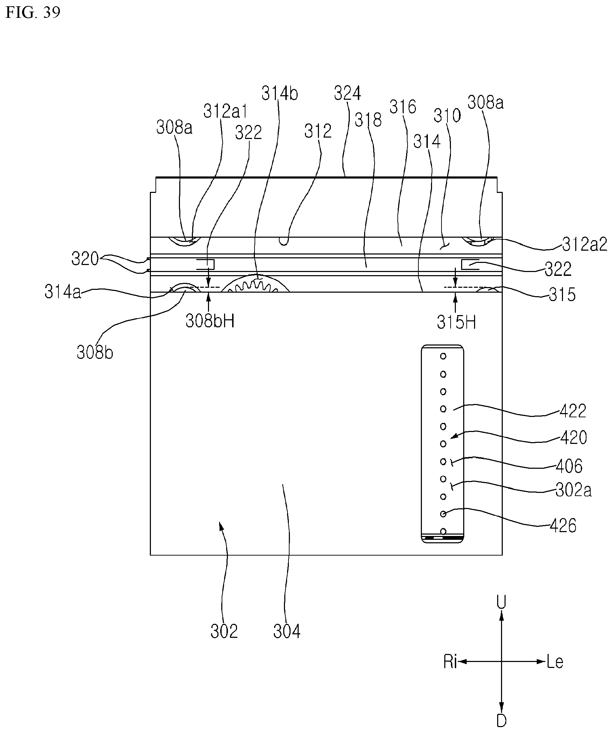

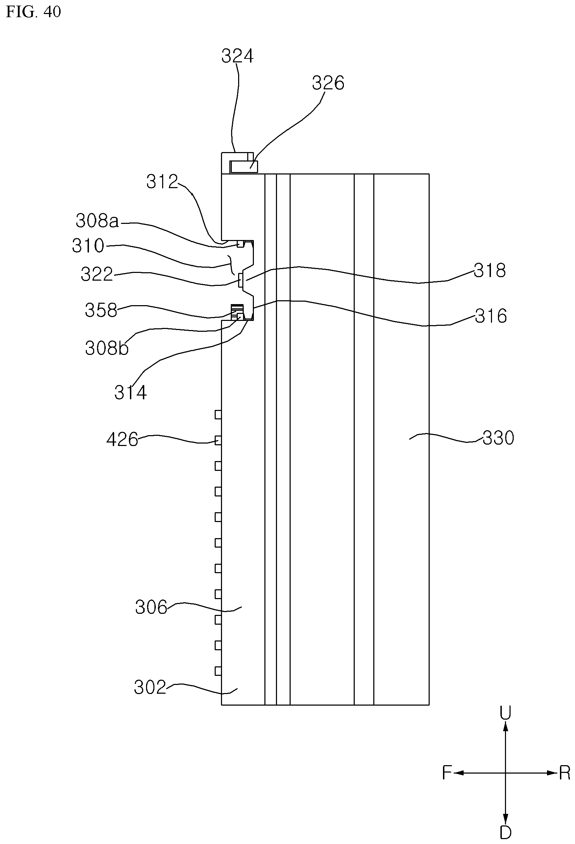

Referring to FIGS. 39 and 40, the guide groove 310 may be defined by an upper wall 312, a lower wall 314, and an inner wall 316. The upper wall 312 covers the upper portion of the guide groove 310. The upper wall 312 has therein upper roller holes 312a1 and 312a2, through which portions of the guide rollers 308a pass. According to the embodiment, two upper roller holes 312a1 and 312a2 may be disposed in the upper wall 312 so as to be spaced apart from each other in the leftward-rightward direction.

The upper roller holes 312a1 and 312a2 include a first upper roller hole 312a1 and a second upper roller hole 312a2, which is spaced apart from the first upper roller hole 312a1 in the leftward-rightward direction. Referring to FIG. 39, the first upper roller hole 312a1 is disposed above a lower roller hole 314a, and the second upper roller hole 312a2 is disposed above a support protrusion 315.

The lower wall 314 covers the lower portion of the guide groove 310. The lower wall 314 has therein a lower roller hole 314a, through which a portion of the guide roller 308b passes, and a gear hole 314b, through which a portion of the moving gear 358 passes. The lower wall 314 is provided with a support protrusion 315 protruding upwards toward the guide rail.

Referring to FIG. 39, the support protrusion 315 is spaced apart from the lower roller hole 314a in the leftward-rightward direction. The support protrusion 315 may be disposed above the dust container device 400. The gear hole 314b is formed between the support protrusion 315 and the lower roller hole 314a. Referring to FIG. 39, the height 315H by which the support protrusion 315 protrudes upwards from the lower wall 314 is set to be lower than the height 308bH by which the guide roller 308b protrudes from the lower wall 314.

The inner wall 316 interconnects the rear end of the lower wall 314 and the rear end of the upper wall 312.

Referring to FIG. 40, the inner wall 316 is provided with a protruding portion 318 protruding forwards. The protruding portion 318 extends in the leftward-rightward direction along the inner wall 316. The position detection sensor 322 is disposed on the protruding portion 318 in order to detect the position of the filter cleaner 300. The position detection sensor 322 may be implemented as a switch sensor or a Hall sensor. The position detection sensor 322 may react with the object to be sensed 26 disposed on the guide rail 10, thereby detecting the position of the filter cleaner 300.

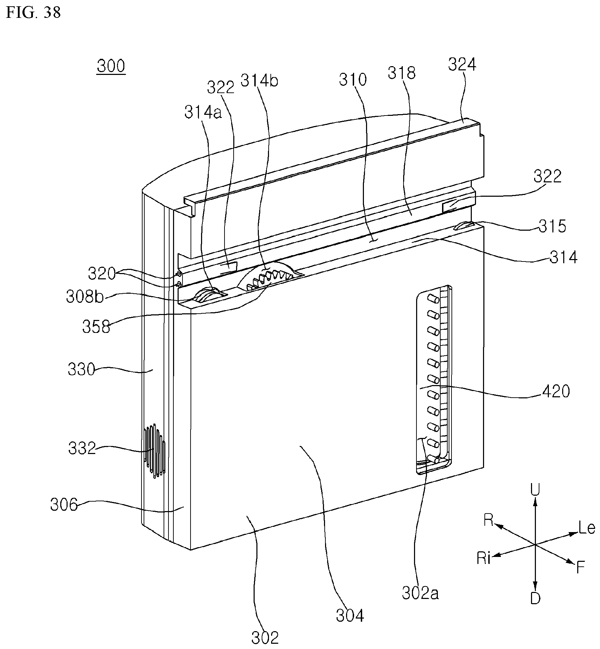

Referring to FIG. 38, the connection terminal 320 protrudes from one lateral end of the protruding portion 318. The connection terminal 320 protrudes toward the end plate 28. When the connection terminal 320 is brought into contact with the charging terminal 30 of the end plate 28, power may be supplied to a battery 374 disposed inside the housings 302 and 330.

Referring to FIG. 39, the guide rollers 308a and 308b are disposed in the first housing 302 so as to rotate in contact with the roller rail 22 of the guide rail 10 and to guide the movement of the filter cleaner 300. The guide rollers 308a and 308b are disposed in the guide groove 310 in the upward-downward direction. The guide rollers 308a and 308b are disposed such that portions thereof protrude into the guide groove 310. The guide rollers 308a and 308b are disposed inside the first housing 302.

The guide rollers 308a and 308b may include upper rollers 308a disposed at the upper side of the guide groove 310 and a lower roller 308b disposed at the lower side of the guide groove 310.

Referring to FIG. 45, each of the guide rollers 308a and 308b has a groove 309 formed concavely in the circumferential surface thereof in the circumferential direction. The roller rail 22 of the guide rail 10 may be inserted into the groove 309 formed in each of the guide rollers 308a and 308b. Since the roller rail 22 is inserted into the guide rollers 308a and 308b, the filter cleaner 300 may move stably.

Referring to FIG. 39, the filter cleaner 300 includes two upper rollers 308a and one lower roller 308b. The two upper rollers 308a are spaced apart from each other in the leftward-rightward direction. One of the two upper rollers 308a is disposed above the lower roller 308b. The support protrusion 315 may be disposed below the other one of the two upper rollers 308a.

Referring to FIG. 45, the rotation axes 308aRS and 308bRS of the guide rollers 308a and 308b extend perpendicular to the rotation axis 326RS of the support roller 326.

The moving gear 358 is rotatably disposed at the lower side of the guide groove 310. A portion of the moving gear 358 is disposed in the guide groove 310 through the gear hole 314b formed in the lower wall 314. The moving gear 358 may be rotatably mounted in the first housing 302 or to the partition wall 340 to be described later.

Referring to FIG. 45, the moving gear 358 is disposed at a position further forward than the guide rollers 308a and 308b. The rotation axis of the moving gear 358 extends parallel to the rotation axes of the guide rollers 308a and 308b.

A space in which an agitator gear 366 and an agitator connection shaft 368, which will be described later, are rotatably disposed is formed in the inner surface of the first housing 302.

### <Partition Wall>

The partition wall 340 is disposed between the first housing 302 and the second housing 330. The partition wall 340 may include a plurality of partition plates to partition the interior of the housings 302 and 330. The partition wall 340 may be disposed inside the housings 302 and 330 to increase the rigidity of the housings 302 and 330.

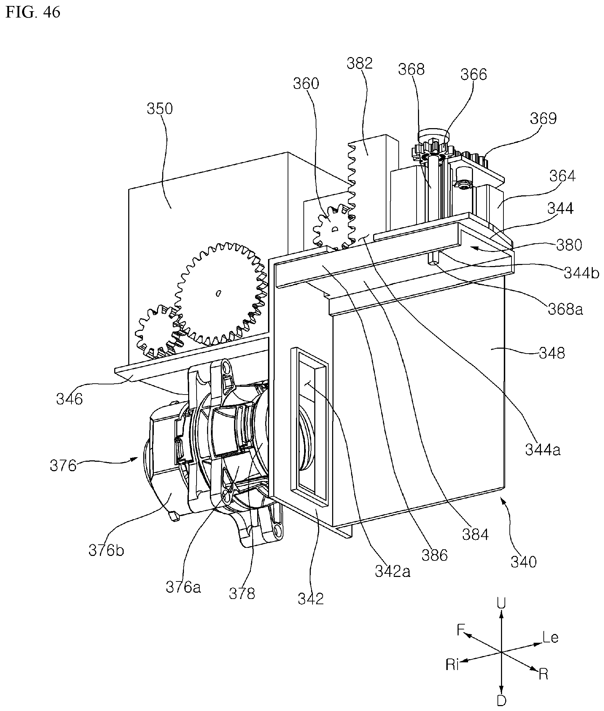

Referring to FIG. 46, the partition wall 340 forms a space in which the dust container device 400 is disposed. A dust container guide 380 for guiding the movement of the dust container device 400 is disposed on the partition wall 340. The dust container guide 380 may be displaced in the upward-downward direction by a dust container gear and a dust container motor 360, which are disposed on the partition wall 340.

The partition wall 340 may isolate the space in which the dust container device 400 is disposed from the space in which the suction device 376 is disposed. The partition wall 340 may isolate the space in which the dust container device 400 is disposed from the space in which the dust container gear 362 for displacing the dust container device 400 is disposed. The partition wall 340 may isolate the space in which the dust container device 400 is disposed from the space in which a first printed circuit board 370 is disposed. The partition wall 340 may isolate the space in which the battery 374 is disposed from the space in which the suction device 376 is disposed. The partition wall 340 may isolate the space in which the battery 374 is disposed from the space in which the moving gear 358 is disposed. The partition wall 340 may isolate the space in which the dust container motor 360 is disposed from the space in which the agitator motor 364 is disposed.

That is, the partition wall 340 may partition the inner space in the housings 302 and 330 into a plurality of regions using a plurality of plates arranged perpendicular to or parallel to each other.

Specifically, the partition wall 340 includes a vertical partition 342, which partitions the interior of the housings 302 and 330 in the leftward-rightward direction, horizontal partitions 344 and 346, which partition the interior of the housings 302 and 330 in the upward-downward direction, and forward-rearward partitions 348 and 350, which partition the interior of the housings 302 and 330 in the forward-rearward direction.

Referring to FIG. 46, the vertical partition 342 isolates the space in which the suction device 376 is disposed from the space in which the dust container device 400 is disposed. The vertical partition 342 extends in the upward-downward direction inside the housings 302 and 330. The vertical partition 342 isolates the space in which the battery 374 is disposed from the space in which the dust container device 400 is disposed. The vertical partition 342 isolates the space in which the battery 374 is disposed from the space in which the dust container gear 362 and the agitator gear 366 are disposed. The battery 374 is disposed above the suction device 376.

The vertical partition 342 has therein a communication hole 342a formed at a portion corresponding to the suction device 376, through which the suction device 376 and the dust container device 400 communicate with each other.

Referring to FIG. 46, the horizontal partitions 344 and 346 include a first horizontal partition 344, which isolates the space in which the dust container device 400 is disposed from the space in which the dust container gear 362 and the agitator gear 366 are disposed, and a second horizontal partition 346, which isolates the space in which the suction device 376 is disposed from the space in which the battery 374 is disposed.

The first horizontal partition 344 has a shaft hole 344b formed therein to allow the agitator connection shaft 368 to pass therethrough. The first horizontal partition 344 has a guide hole 344a formed therein to allow some components of the dust container guide 380 to pass therethrough.

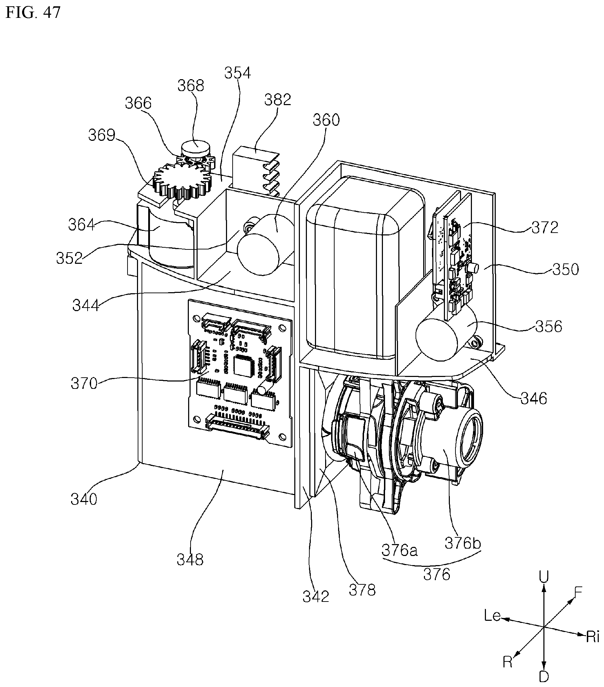

Referring to FIGS. 46 and 47, the forward-rearward partitions 348 and 350 include a first forward-rearward partition 348, which isolates the space in which the dust container device 400 is disposed from the space in which the first printed circuit board 370 is disposed, and a second forward-rearward partition 350, which isolates the space in which the battery 374 is disposed from the space in which the moving gear 358 is disposed.

Referring to FIG. 47, the partition wall 340 includes a first support plate 352, which is disposed on the first horizontal partition 344 to support placement of the dust container motor 360, and a second support plate 354, which is disposed above the first horizontal partition 344 to support placement of the agitator gear 366 and the agitator connection shaft 368.

The dust container device 400 is disposed below the first horizontal partition 344. The dust container device 400 is disposed on one side of the vertical partition 342.

The dust container guide 380 is disposed above the dust container device 400. The dust container guide 380 may be connected to the dust container gear 362 to displace the dust container device 400.

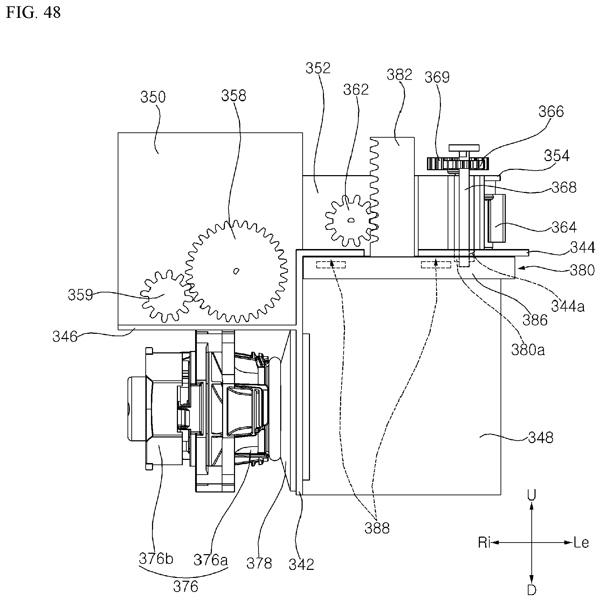

Referring to FIG. 48, the dust container guide 380 includes a guide plate 384, which is disposed above the dust container device 400, and a guide gear 382, which extends upwards from the guide plate 384 and is engaged with the dust container gear 362.

The guide plate 384 is disposed below the first horizontal partition 344. A magnet 388 may be disposed on the guide plate 384. Accordingly, when the dust container device 400 is brought into contact with the magnet 388, the dust container device 400 may be secured to the dust container guide 380 by the magnet 388.

Referring to FIG. 46, the dust container guide 380 includes mounting guides 386, which are bent and extend downwards from the front end and the rear end of the guide plate 384. When the dust container device 400 moves to the guide plate 384, the mounting guides 386 may guide the dust container device 400 to move to the correct position on the guide plate 384.

Referring to FIG. 48, the guide plate 384 has a connection hole 380a formed therein to allow the agitator connection shaft 368 to pass therethrough. The connection hole 380a is formed at a position corresponding to the shaft hole 344b formed in the first horizontal partition 344. When the dust container device 400 is mounted in the housings, the shaft hole 344b and the connection hole 380a are located so as to be aligned with each other.

The guide gear 382 is disposed through the guide hole 344a formed in the first horizontal partition 344. The guide gear 382 may be implemented as a rack gear. The guide gear 382 meshes with the dust container gear 362. The guide gear 382 may move in the upward-downward direction in response to rotation of the dust container gear 362. Accordingly, when the dust container motor 360 operates, the dust container guide 380 may move in the upward-downward direction. The dust container motor 360 is disposed above the first horizontal partition 344, and is mounted to the first support plate 352.

The first printed circuit board 370 is disposed on the rear surface of the first forward-rearward partition 348.

Referring to FIG. 48, the suction device 376 is disposed below the second horizontal partition 346. The suction device 376 is disposed on the opposite side of the vertical partition 342. The suction device 376 may include a fan 376a, which causes air to flow, and a fan motor 376b, which rotates the fan 376a. A connection pipe 378 for connecting the suction device 376 to the vertical partition 342 may be disposed at one side of the suction device 376. The connection pipe 378 is fixed to the portion of the vertical partition 342 in which the communication hole 342a is formed, thereby inducing air to flow from the dust container device 400 to the suction device 376.

Referring to FIG. 47, the battery 374 may be disposed above the second horizontal partition 346. The battery 374 may be disposed above the suction device 376. A second printed circuit board 372 and a gear motor 356 for rotating the moving gear 358 are disposed in the space in which the battery 374 is disposed. The second printed circuit board 372 and the moving gear 358 are mounted to the second forward-rearward partition 350.

The moving gear 358 and a connection gear 359, which meshes with the moving gear 358 and which is connected to the gear motor 356, are disposed in front of the second forward-rearward partition 350. The moving gear 358 may have a larger radius than the connection gear 359.

Referring to FIG. 47, the agitator motor 364 and the agitator gear 366 are disposed above the first horizontal partition 344. The second support plate 354 is spaced upwards apart from the first horizontal partition 344. The second support plate 354 is disposed parallel to the first horizontal partition 344. The agitator motor 364 is disposed below the second support plate 354. The agitator gear 366 and an auxiliary gear 369, which is connected to the agitator motor 364 and which meshes with the agitator gear 366, are disposed above the second support plate 354.

The agitator gear 366 is fixedly disposed on the circumference of the agitator connection shaft 368. Accordingly, when the agitator gear 366 rotates, the agitator connection shaft 368 also rotates together therewith. The agitator connection shaft 368 is disposed so as to penetrate the second horizontal partition 346. The agitator connection shaft 368 may have a circular-shaped section. However, the lower end of the agitator connection shaft 368 may have an elliptical-shaped or polygonal-shaped section in order to transmit rotational force to the agitator 420.

### <Dust Container Device>

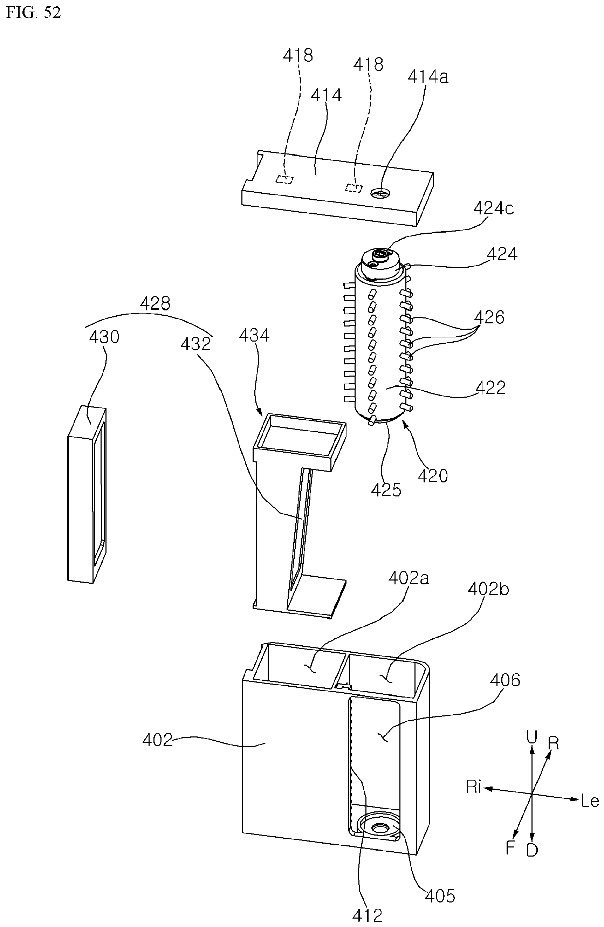

Referring to FIG. 52, the dust container device 400 includes a storage space 402a, in which foreign substances removed from the pre-filter 188 are stored, a dust container housing 402, which forms an agitator space 402b in which the agitator 420 is disposed, a dust container cover 414, which covers an open side of the dust container housing 402, an agitator 420, which is rotatably disposed inside the dust container housing 402, and a dust container filter 428, which is disposed at one side of the dust container housing 402 in order to remove foreign substances from the air discharged from the dust container housing 402.

Referring to FIG. 52, the agitator space 402b in which the agitator 420 is disposed and the storage space 402a in which dust is stored are formed inside the dust container housing 402. The dust container housing 402 has an open upper portion. Accordingly, the agitator 420 or the dust container filter 428 may be withdrawn out of the dust container housing 403 through the open upper portion of the dust container housing 403.

The dust container housing 402 has an agitator hole 406 formed therein to allow the agitator space 402b to communicate with the outside. A portion of the agitator 420 may be exposed to the outside of the dust container housing 402 through the agitator hole 406. The agitator hole 406 may be formed to have a size corresponding to the size of the suction hole 302a in the first housing 302.

Referring to FIG. 49, the dust container housing 402 has a flow hole 410 formed therein to allow the air in the storage space 402a to flow to the outside of the dust container housing 402. The flow hole 410 is formed in the lateral surface of the dust container housing 402. The flow hole 410 is formed to have a size corresponding to the size of the communication hole 342a in the vertical partition 342. When the dust container housing 402 is disposed inside the housings 302 and 330, the flow hole 410 is disposed at a position corresponding to the communication hole 342a.

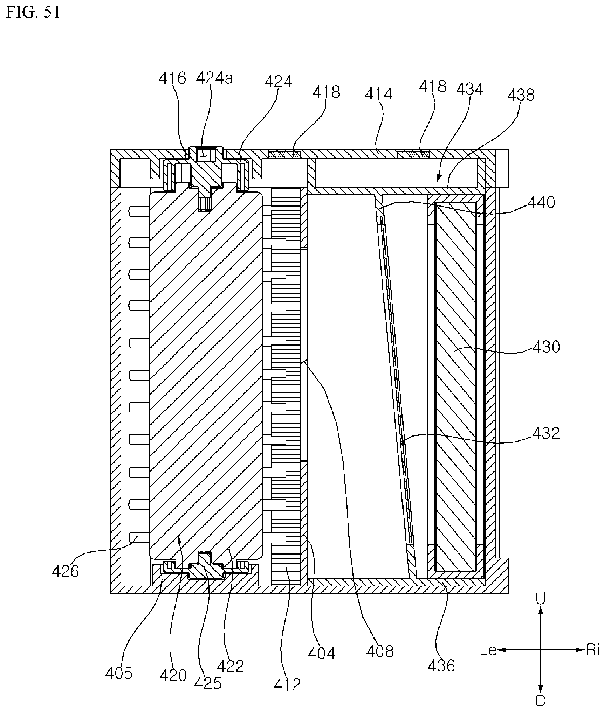

Referring to FIG. 51, an inner partition 404 for isolating the storage space 402a and the agitator space 402b from each other is disposed in the dust container housing 402. The inner partition 404 is formed so as to extend in the upward-downward direction. The inner partition 404 has an inner hole 408 formed therein to allow the storage space 402a and the agitator space 402b to communicate with each other.

Referring to FIG. 51, a duster 412 is disposed in the agitator space 402b so as to be in contact with an end portion of the agitator 420. The duster 412 may remove foreign substances from a blade 426 of the agitator 420, which will be described later. The duster 412 may be disposed so as to rub the blade 426 when the agitator 420 rotates. The duster 412 may be disposed so as to protrude toward the agitator 420. The duster 412 has a sawtooth shape, and is disposed on one side of the inner hole 408.

The duster 412 protrudes so as to contact the blade 426. Accordingly, when the agitator 420 operates, the duster 412 may remove foreign substances from the blade 426 of the agitator 420. Also, when the dust container device 400 is removed from the filter cleaner 300, the duster 412 may prevent the foreign substances stored in the storage space 402a from escaping to the outside through the agitator space 402b.

Referring to FIG. 51, an agitator-mounting part 405, to which the agitator 420 is mounted, is disposed in the dust container housing 402. The agitator-mounting part 405 may be disposed at the lower portion of the agitator space 402b, and the lower end portion of the agitator 420 may be seated on the agitator-mounting part 405.

Referring to FIG. 52, the dust container cover 414 covers the open upper portion of the dust container housing 402. The dust container cover 414 has therein a through-hole 416, through which the lower portion of the agitator connection shaft 368 passes. The through-hole 416 is formed at a position corresponding to the connection hole 380a formed in the guide plate 384 of the dust container guide 380. Accordingly, when the dust container device 400 is mounted to the dust container guide 380, the connection hole 380a and the through-hole 416 may be located so as to be aligned with each other.

Referring to FIG. 52, a counterpart member 418, which responds to the magnet 388 disposed on the guide plate 384, may be disposed on the dust container cover 414. The counterpart member 418 may be made of a material that is attracted to the magnet 388. Accordingly, when the dust container device 400 is brought close to the dust container guide 380, the dust container device 400 may be secured to the dust container guide 380 due to the magnet 388 and the counterpart member 418.

The agitator 420 is rotatably mounted to the dust container housing 402. The agitator 420 may rotate about a rotation axis extending in the upward-downward direction. The agitator 420 may be disposed so as to be in contact with the outer side of the pre-filter. The agitator 420 may shake foreign substances off the pre-filter 188.

Referring to FIG. 52, the agitator 420 includes a rotating body 422, which rotates about a rotation axis extending in the upward-downward direction, a plurality of blades 426, which protrude from the outer circumferential surface of the rotating body 422 in the radial direction, and a connection body 424, which is disposed at one end of the rotating body 422 and which is connected to the agitator connection shaft 368.

The agitator 420 further includes a mounting body 425, which is rotatably connected to the rotating body 422. The mounting body 425 is mounted to the agitator-mounting part 405 of the dust container housing 402 in order to fix the agitator 420 in place. Since the mounting body 425 is rotatably connected to the rotating body 422, the agitator 420 may rotate stably in the state of being fixed to the agitator-mounting part 405.

The connection body 424 is disposed at the upper side of the rotating body 422. The connection body 424 has a connection recess 424a formed in the upper surface thereof to allow the lower end of the agitator connection shaft 368 to be inserted thereinto. The connection recess 424a may have a shape corresponding to the shape of the lower end of the agitator connection shaft 368. Accordingly, when the agitator connection shaft 368 is inserted into the connection recess 424a in the connection body 424, the agitator connection shaft 368 and the agitator 420 may rotate together.

Referring to FIG. 51, the dust container filter 428 is disposed in the storage space 402a in the dust container housing 402. The dust container filter 428 includes a first filter 430, which is disposed on one side of the flow hole 410 in the dust container housing 402 to remove fine foreign substances from the air flowing to the flow hole 410, a second filter 432, which is disposed in the storage space 402a while being spaced apart from the first filter 430, and a mounting body 434, which fixes the second filter 432 in place.

Referring to FIG. 51, the mounting body 434 has a structure that is capable of being mounted in the storage space 402a. The mounting body 434 includes a lower plate 436, which is disposed in the lower side of the storage space 402a, an upper plate 438, which is disposed so as to be spaced upwards apart from the lower plate 436, and a connection plate 440, which interconnects the lower plate 436 and the upper plate 438 and supports the second filter 432, which is disposed on one side thereof.

Referring to FIG. 51, the lower plate 436 is fixed to the lower portion of the storage space 402a. The upper plate 438 is fixed to the upper portion of the storage space 402a. Accordingly, when the dust container filter 428 is disposed in the storage space 402a, the position of the dust container filter 428 inside the storage space 402a may be maintained. The second filter 432 may be fixedly disposed on the mounting body 434. That is, the second filter 432 may be formed integrally with the connection plate 440.

Referring to FIG. 51, the connection plate 440 may be disposed so as to be inclined relative to the first filter 430. The second filter 432 may be spaced apart from the first filter 430, and may be inclined relative to the first filter 430.

The first filter 430 may be implemented as a high-efficiency particulate air (HEPA) filter to remove fine foreign substances. The second filter 432 may implemented as a filter that removes foreign substances having a size larger than the size of foreign substances removed by the first filter 430. The second filter 432 may be implemented as a filter that is capable of being washed for reuse.

The first filter 430 may be mounted in the mounting body 434. The first filter 430 may be disposed between the upper plate 438 and the lower plate 436 of the mounting body 434.

### <Operation>

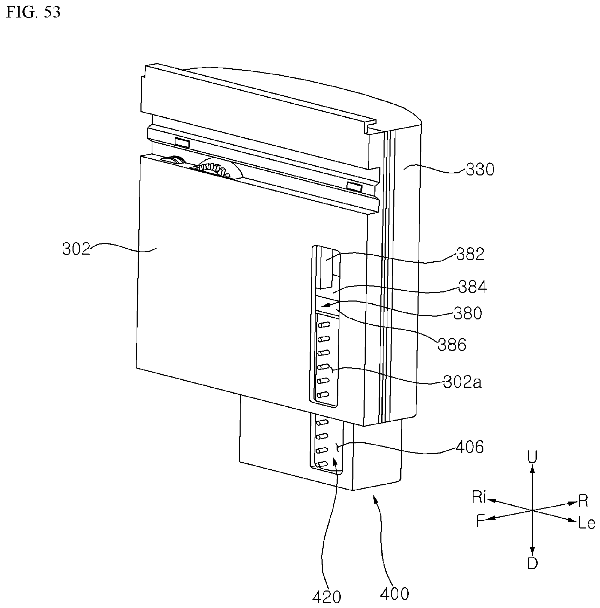

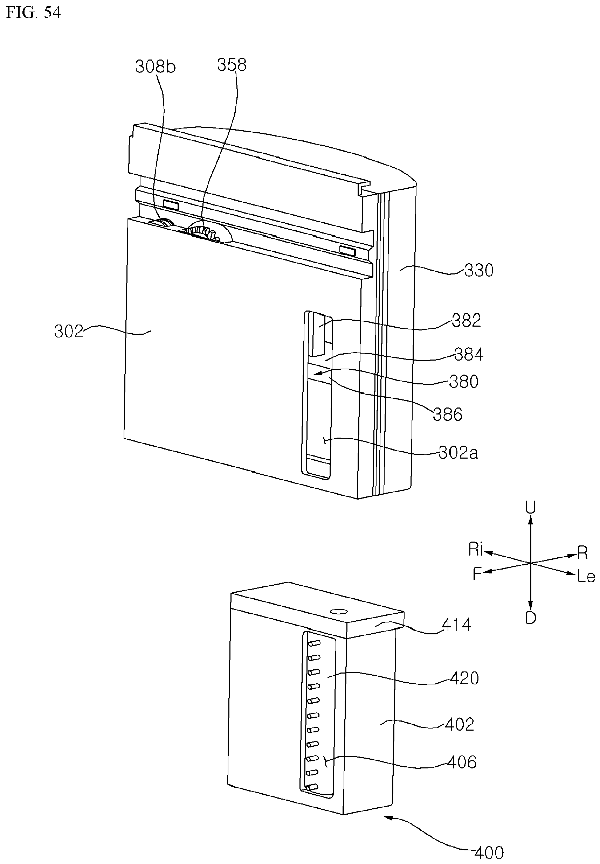

Hereinafter, a process of separating the dust container device 400 from the filter cleaner 300 will be described with reference to FIGS. 53 and 54.

The filter cleaner 300 is maintained in the state in which the same is mounted on the guide rail 10. Therefore, it may be difficult for a user to reach the filter cleaner 300 mounted in the ceiling-mounted air-processing apparatus 100. However, according to the embodiment, since the dust container device 400 is capable of being moved downwards by the dust container guide 380, the user may easily reach the same.

The dust container device 400 may be moved in the upward-downward direction by the dust container guide 380. The dust container guide 380 may be moved in the upward-downward direction by the operation of the dust container gear 362.

The dust container device 400 may be securely disposed on the dust container guide 380 by the magnet 388 of the dust container guide 380. The magnet 388 of the dust container guide 380 attracts the counterpart member 418 of the dust container device 400, so the dust container device 400 may be secured to the dust container guide 380.

The dust container device 400 may be located at a first position P1, at which the same is located inside the housings 302 and 330, or a second position P2, at which a portion of the dust container device 400 is located outside the housings 302 and 330. When the dust container device 400 is located at the first position P1, the agitator 420 is connected to the agitator connection shaft 368. Accordingly, when the dust container device 400 is located at the first position P1, the agitator 420 may be rotated by the operation of the agitator motor 364.

As shown in FIG. 53, when the dust container device 400 is located at the second position P2, the agitator 420 is separated from the agitator connection shaft 368. Accordingly, when the dust container device 400 is located at the second position P2, the agitator 420 is not rotated even when the agitator motor 364 operates.

Thereafter, the user is capable of separating the dust container device 400 from the filter cleaner 300, as shown in FIG. 54.

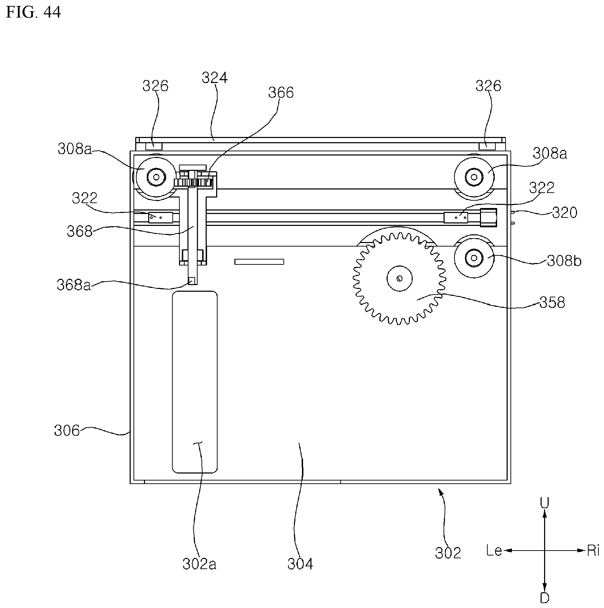

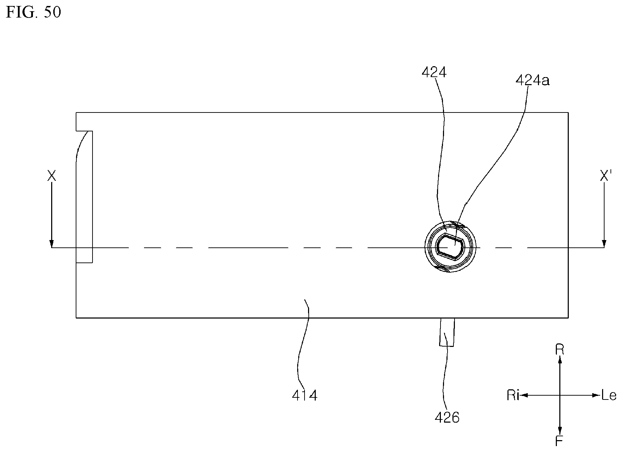

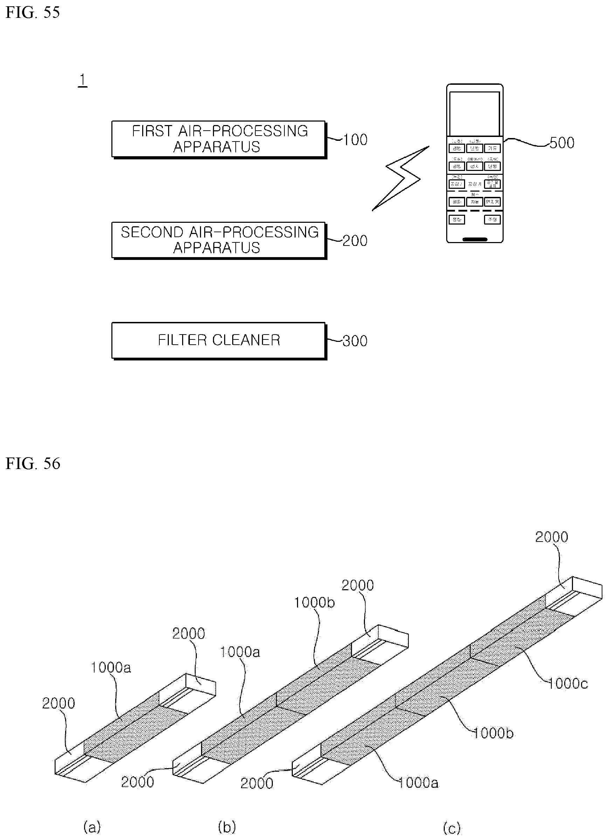

The air-conditioning system according to the embodiment of the present disclosure has been described in detail with reference to FIGS. 1 to 54. Hereinafter, an air-conditioning system and an operation method thereof according to embodiments of the present disclosure will be described in detail with reference to FIGS. 55 to 91. Hereinafter, a description of the same parts as those described with reference to FIGS. 1 to 54 will be omitted or made briefly. Therefore, it will be apparent that embodiments to be described below can be implemented in combination with the components, structure, and operation of the embodiments described with reference to FIGS. 1 to 54 even when there is no special description thereof.

FIG. 55 is a diagram illustrating the configuration of an air-conditioning system according to an embodiment of the present disclosure.

Referring to FIG. 55, an air-conditioning system 1 according to an embodiment of the present disclosure may include a first air-processing apparatus 100, which has a first inlet 102a formed in one surface thereof, which is perpendicular to the floor or the ceiling, and a first outlet 102b formed in another surface thereof, which is perpendicular to the first inlet 102a, and induces the air introduced into the first inlet 102a to exchange heat with refrigerant and to be delivered to the first outlet 102b, and a second air-processing apparatus 200, which has a second outlet 202b formed therein so as to be open in the same direction as the first outlet 102b and a second inlet 202a formed therein so as to be open in the same direction as the first inlet 102a.

It is desirable that the first air-processing apparatus 100 and the second air-processing apparatus 200 be different types of air-processing apparatuses. The first air-processing apparatus 100 includes a heat exchanger, which induces the air introduced into the first inlet 102a to exchange heat with refrigerant. The first air-processing apparatus 100 may adjust the temperature of an indoor space by performing a cooling operation or a heating operation. The second air-processing apparatus 200 includes a filter device 284, which removes foreign substances from the air introduced into the second inlet 202a. The second air-processing apparatus 200 may purify indoor air by performing an air purification operation in which air flowing therein passes through the filter device 284 and is then discharged to the outside.

The air-conditioning system 1 according to an embodiment of the present disclosure may include one or more first air-processing apparatuses 100 and one or more second air-processing apparatuses 200. The inlets 102a and 202a may be formed in the surfaces of the first and second air-processing apparatuses 100 and 200 that are perpendicular to the floor. Alternatively, the inlets 102a and 202a may be formed in the surfaces of the first and second air-processing apparatuses 100 and 200 that are perpendicular to the ceiling. In many cases, the ceiling and the floor are parallel to each other, so the inlets 102a and 202a may be formed perpendicular to the ceiling and the floor. The outlets 102b and 202b, which are open toward the floor, may be formed perpendicular to the inlets 102a and 202a. In addition, the air-conditioning system 1 according to an embodiment of the present disclosure may be driven in a combined operation mode in which the first air-processing apparatus 100 and the second air-processing apparatus 200 operate simultaneously.

Also, the air-conditioning system 1 according to an embodiment of the present disclosure may be driven in an independent operation mode in which only one of the air-processing apparatuses 100 and 200 provided therein operates. That is, in the independent operation mode, the first air-processing apparatus 100 or the second air-processing apparatus 200 may operate. For example, the first air-processing apparatus 100 may independently perform a cooling operation or a heating operation. Alternatively, the second air-processing apparatus 200 may independently perform an air purification operation.

In addition, the air-conditioning system 1 according to an embodiment of the present disclosure is capable of driving some of predetermined types of air-processing apparatuses.

The air-conditioning system 1 according to an embodiment of the present disclosure may automatically operate in the combined operation mode or the independent operation mode based on the state of the air in the indoor space. In addition, the air-conditioning system 1 may operate based on other information about the indoor space as well as the state of the air. For example, the air-conditioning system 1 may operate based on information about whether there is an occupant in the indoor space, information about the number of occupants present in the indoor space, or the like.

As described above with reference to FIGS. 1 to 54, the first air-processing apparatus 100 may include a first pre-filter 188, which is disposed in the first inlet 102a, and the second air-processing apparatus 200 may include a second pre-filter 288, which is disposed in the second inlet 202a.

The first air-processing apparatus 100 and the second air-processing apparatus 200 are disposed adjacent to each other. In addition, the first inlet 102a and the second inlet 202a are disposed in a line.

The air-conditioning system 1 according to an embodiment of the present disclosure may further include a filter cleaner 300 for cleaning at least one of the first pre-filter 188 or the second pre-filter 288.

A guide rail 10 is disposed on one side of the first air-processing apparatus 100 and on one side of the second air-processing apparatus 200. The guide rail 10 is disposed above the first inlet 102a and the second inlet 202a.

The filter cleaner 300 cleans the first pre-filter 188 and the second pre-filter 288 while moving along the guide rail 10. According to an embodiment of the present disclosure, since the pre-filters 188 and 288 disposed in the first air-processing apparatus 100 and the second air-processing apparatus 200 are cleaned by a single filter cleaner 300, it is possible to efficiently manage the pre-filters 188 and 288.

According to an embodiment of the present disclosure, the first air-processing apparatus 100 or the second air-processing apparatus 200 may be independently or selectively driven. In this case, the filter cleaner 300 may clean all of the pre-filters while moving the entire movement section, or may selectively clean the pre-filter of an apparatus that has been driven.

According to an embodiment of the present disclosure, when the operation of the first air-processing apparatus 100 or the second air-processing apparatus 200 is stopped, the filter cleaner 300 may automatically move along the guide rail 10 to clean at least one of the first pre-filter 188 or the second pre-filter 288.

The air-conditioning system 1 according to an embodiment of the present disclosure may further include a remote control device 500. The remote control device 500 may input a user's control command to the first air-processing apparatus 100 and the second air-processing apparatus 200. Accordingly, it is possible to control all of the air-processing apparatuses 100 and 200 included in the air-conditioning system 1 using a single remote control device 500. In addition, it is possible to drive the air-processing apparatuses 100 and 200 in a combined operation mode or an independent operation mode using the remote control device 500.

For example, the remote control device 500 may transmit a control command to the air-processing apparatuses 100 and 200 using an infrared radiation (IR) method or a radio frequency (RF) method. The remote control device 500 may include an IR-type or RF-type transmitter, and at least one of the air-processing apparatuses 100 and 200 may include an IR-type or RF-type receiver depending on the transmission method of the remote control device 500. In some embodiments, the remote control device 500 may employ Bluetooth, Ultra Wideband (UWB), ZigBee, Nearfield Communication (NFC), or the like.

According to an embodiment of the present disclosure, the remote control device 500 may receive and display information about the states of the first air-processing apparatus 100 and the second air-processing apparatus 200.

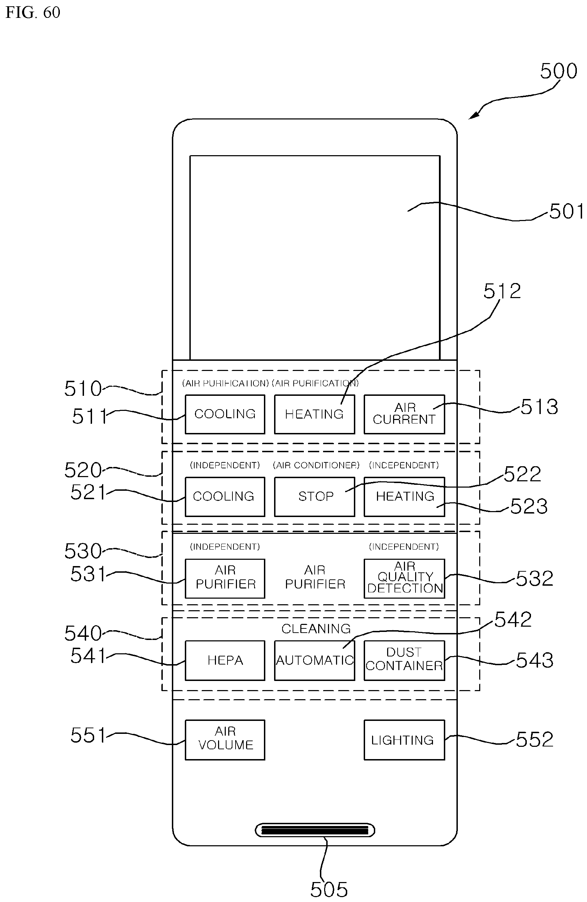

Also, the remote control device 500 may include a display 501 (refer to FIG. 60) in order to display various pieces of information. For example, the remote control device 500 may display, through the display 501, information for guiding the user to replace the filter device 284, information for guiding the user to empty the dust container device 400, and the like.

The remote control device 500 is connected to the first air-processing apparatus 100 and the second air-processing apparatus 200 in order to enable input of a user's control command thereto and to receive and display information about the states of the first air-processing apparatus 100 and the second air-processing apparatus 200. In this case, the remote control device 500 may communicate with the air-processing apparatuses 100 and 200 in a wired or wireless manner depending on the type of connection therewith.

According to an embodiment of the present disclosure, the remote control device 500 may communicate with one of the air-processing apparatuses 100 and 200 included in the air-conditioning system 1, and the air-processing apparatus that communicates with the remote control device 500 may transmit a control command to the remaining air-processing apparatuses. Accordingly, each of the plurality of air-processing apparatuses may include only a wired communication module or a short-range wireless communication module in order to communicate with other air-processing apparatuses disposed nearby, thereby reducing manufacturing costs.

In some embodiments, the first air-processing apparatus 100 and the second air-processing apparatus 200 may be the same type of air-processing apparatus. It is possible to easily add one or more air-processing apparatuses and to conveniently expand an air-conditioning area by arranging multiple air-processing apparatuses in a line.

FIG. 56 is a view for explaining module extension of the air-conditioning system according to an embodiment of the present disclosure.

Referring to FIG. 56, the air-processing apparatuses 100 and 200 may have a standardized common external appearance, and may be combined with each other in a modular structure in order to expand the performance and functions thereof according to the purpose thereof. Each of the air-processing apparatuses 100 and 200 may be referred to as an air-processing module.

Referring to FIG. 56(a), only one independent air-processing module 1000a may be installed. The air-processing module 1000a, which is disposed between left and right finishing materials 2000, may be the first air-processing apparatus 100 or the second air-processing apparatus 200.

Referring to FIG. 56(b), two air-processing modules 1000a and 1000b may be combined with each other.

If the two air-processing modules 1000a and 1000b are of the same type and are arranged in a line, the air-processing modules 1000a and 1000b may be extended in the longitudinal direction thereof.

More desirably, the air-conditioning system 1 according to an embodiment of the present disclosure may include two different types of air-processing modules 1000a and 1000b, which are combined with each other so as to extend in the longitudinal direction thereof in order to perform multiple functions. For example, one first air-processing apparatus 100, which functions as an air conditioner, and one second air-processing apparatus 200, which functions as an air purifier, may be combined with each other.

Also, referring to FIG. 56(c), three air-processing modules 1000a, 1000b, and 1000c may be combined with each other. In this case, the first air-processing apparatus 100, which functions as an air conditioner, and the second air-processing apparatus 200, which functions as an air purifier, may be combined with each other. For example, two first air-processing apparatuses 100 and one second air-processing apparatus 200 may be combined with each other.

Alternatively, each of the first air-processing apparatus 100 and the second air-processing apparatus 200 may be provided in a plural number. When any one of the first air-processing apparatus 100 and the second air-processing apparatus 200 is provided in a plural number, it is desirable to alternately arrange the plurality of modules and the remaining module. For example, in the case illustrated in FIG. 56(c), the air-processing module 1000b that is disposed in the middle may be the first air-processing apparatus 100, and the air-processing modules 1000a and 1000c that are disposed on the left and right may be the second air-processing apparatuses 200. Alternatively, the air-processing module 1000b that is disposed in the middle may be the second air-processing apparatus 200, and the air-processing modules 1000a and 1000c that are disposed on the left and right may be the first air-processing apparatuses 100. Accordingly, different types of air-processing apparatuses 100 and 200 may be disposed in a line so as to be adjacent to each other, and may be driven to perform multiple different functions.

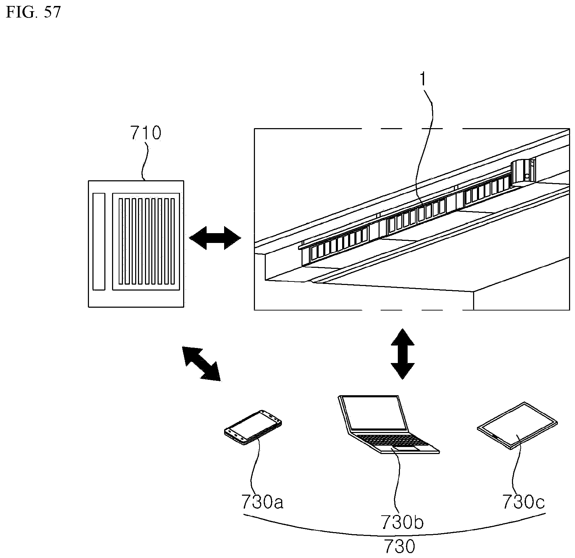

FIG. 57 is a view illustrating the configuration of the air-conditioning system according to an embodiment of the present disclosure.

Referring to FIG. 57, the air-conditioning system 1 according to an embodiment of the present disclosure may communicate with a server 710, or may be connected to a network.

At least one of the air-processing apparatuses 100 and 200 may be provided with a Wi-Fi communication module. Alternatively, at least one of the air-processing apparatuses 100 and 200 may be provided with different types of communication modules or a plurality of communication modules. For example, at least one of the air-processing apparatuses 100 and 200 may include a Bluetooth communication module, a ZigBee communication module, and the like.

At least one of the air-processing apparatuses 100 and 200 may be connected to a predetermined server 710 via a Wi-Fi communication module or the like, and may support smart functions, such as remote monitoring and remote control.

An air-conditioning control system according to an embodiment of the present disclosure may include a mobile terminal 730, such as a smartphone 730a, a laptop computer 730b, or a tablet computer 730c.

The user may check information about the air-processing apparatuses 100 and 200 in the air-conditioning system 1, or may control the air-processing apparatuses 100 and 200 using the mobile terminal 730.

Meanwhile, the air-conditioning system 1 according to an embodiment of the present disclosure may include sensors (not shown) for acquiring various data related to indoor air and outdoor air. The sensors may serve to sense the temperature, humidity, and quality of indoor air. The sensors may include a temperature sensor, a humidity sensor, and a sensor for sensing one or more aspects of air quality, such as dust and CO₂ content. For example, the dust sensor may sense the concentration of dust for each size of dust particle. The dust sensor may separately sense the concentration of dust particles having various sizes, for example, PM 1.0, PM 2.5, and PM 10.0. Each of the aforementioned sensors may be provided in a plural number.

At least some of the sensors may be provided in the apparatuses 100, 200, 300, and 500 in the air-conditioning system 1. In addition, the air-conditioning system 1 may combine data sensed by the sensors provided in the apparatuses 100, 200, 300, and 500 in order to manage data for each location and to improve the accuracy of the sensed data.

In addition, the sensors may include sensors disposed outdoors. The sensors disposed outdoors may be, for example, a temperature sensor and a dust sensor.

Alternatively, the air-conditioning system 1 may receive and use data sensed by an external sensor. At least one apparatus in the air-conditioning system 1 may directly receive data sensed by an external sensor, or may receive sensed data via the server 710 or the mobile terminal 730.

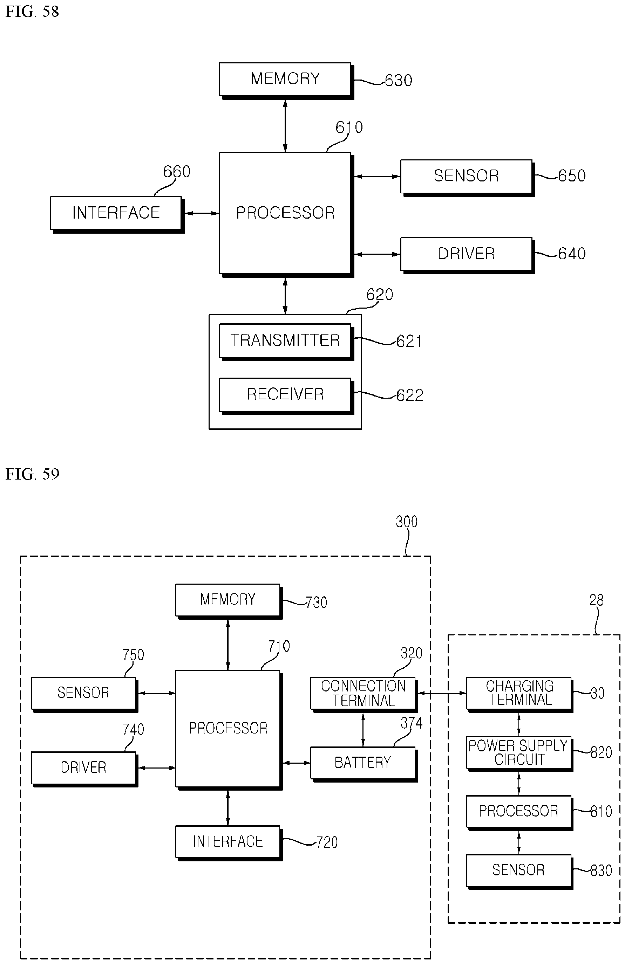

FIG. 58 is a block diagram schematically illustrating the internal structure of each of the air-processing apparatuses 100 and 200 according to an embodiment of the present disclosure.

Referring to FIG. 58, each of the air-processing apparatuses 100 and 200 may include a driver 640, a sensor 650, an interface 660, a memory 630, a communication module 620, and a processor 610 for controlling the overall operation thereof. These components are commonly included in the air-processing apparatuses 100 and 200. However, depending on the characteristics of the apparatuses 100 and 200, the detailed configuration thereof may vary, or an additional component may be added thereto. For example, the driver 640 of the first air-processing apparatus 100 may include a first louver-driving device 174, and the driver 640 of the second air-processing apparatus 200 may include a cover-driving device 220, a filter-driving device 228, and a second louver-driving device 294.

The types, number, and mounting positions of sensors included in the sensor 650 may be set differently depending on the types of air-processing apparatuses 100 and 200. For example, the second air-processing apparatus 200 may include a sensor capable of sensing one or more aspects of air quality, such as dust and CO₂ content. The sensor 650 may include a sensor capable of sensing the operational states of the air-processing apparatuses 100 and 200 and a sensor for acquiring various data (e.g. temperature, humidity, and air quality) related to indoor air. In addition, in some embodiments, each of the air-processing apparatuses 100 and 200 may further include a sensor for sensing an occupant in the indoor space.

The memory 630 stores control data for controlling the operation of the air-processing apparatuses 100 and 200 and operation data generated or sensed during operation of the air-processing apparatuses 100 and 200. The memory 630 stores an executable program for each function of the unit, data used for operation control, and transmitted and received data.

The interface 660 may include a component for receiving a user's control command. For example, the interface 660 may include a receiver for receiving a control command transmitted from the remote control device 500. In some embodiments, the interface 660 may include at least one input means, such as a button, a switch, or a touch input means. When a user command or predetermined data is input thereto in response to operation of the input means, the interface 660 applies the input data to the processor 610.

The processor 610 may control the air-processing apparatuses 100 and 200 in response to a user command or the like. For example, the processor 610 may control the louver-driving devices 174 and 294 to adjust the direction of air that is discharged from the air-processing apparatuses.

The interface 660 may include at least one of a lamp, which is controlled so as to be turned on or off, a speaker, which outputs a predetermined sound, or a display in order to output information about the operational states of the air-processing apparatuses 100 and 200. The lamp indicates whether the unit is operating by changing between an on state and an off state, changing the color of light emitted therefrom, or operating in a flashing or constant manner. The speaker indicates the operational state of the unit by outputting a predetermined warning sound or sound effects.

Each of the air-processing apparatuses 100 and 200 may communicate with other apparatuses, the mobile terminal 730, and the like via the communication module 620. The communication module 620 of at least one of the air-processing apparatuses 100 and 200 may include a wireless communication module in order to wirelessly communicate with the mobile terminal 730 and the like.

Each of the air-processing apparatuses 100 and 200 may include a transmitter 621, which transmits predetermined data to other apparatuses. In addition, each of the air-processing apparatuses 100 and 200 may include a receiver 622, which receives predetermined data from other apparatuses. The transmitter 621 and the receiver 622 may be integrated in the form of a transceiver.

FIG. 59 is a block diagram schematically illustrating the internal structures of the filter cleaner and the charging system according to an embodiment of the present disclosure.

Referring to FIG. 59, the filter cleaner 300 may include an interface 720, a driver 740, a sensor 750, a memory 730, and a processor 710 for controlling the overall operation thereof.

The driver 740 may drive a gear motor 356, an agitator motor 364, and a suction device 376.

The processor 710 controls the overall operation of the filter cleaner 300. The processor 710 may control the driver 740 to move the filter cleaner 300. Also, the processor 710 may control the driver 740 to perform an operation of cleaning the pre-filters 188 and 288.

The memory 730 stores control data for controlling the operation of the filter cleaner 300 and operation data generated or sensed during operation of the filter cleaner 300.

The interface 720 may include a component for receiving a user's control command. For example, the interface 720 may include a receiver for receiving a control command transmitted from the remote control device 500.

The interface 720 may include at least one of a lamp, which is controlled so as to be turned on or off, a speaker, which outputs a predetermined sound, or a display in order to output information about the operational state of the filter cleaner 300. The lamp indicates whether the unit is operating by changing between an on state and an off state, changing the color of light emitted therefrom, or operating in a flashing or constant manner. The speaker indicates the operational state of the unit by outputting a predetermined warning sound or sound effects.

The filter cleaner 300 may include a battery 374, and may operate using the power stored in the battery 374. The filter cleaner 300 may be provided on one side thereof with a connection terminal 320 to which power for charging the battery 374 is supplied.

The charging system for supplying power to the battery 374 may be provided inside the end plate 28 described above.

A charging terminal 30 is provided on one side of the end plate 28. The charging terminal 30 and the connection terminal 320 may be disposed at the same height.

When the charging terminal 30 and the connection terminal 320 are connected to each other, a power supply circuit 820 supplies power to the connection terminal 320. The power supplied by the power supply circuit 820 charges the battery 374 via the connection terminal 320 and the charging terminal 30.

A sensor 830 may sense the voltage and/or current of the power supply circuit 820, and a processor 810 may perform overall charging operation control.

The sensor 750 may include a sensor for sensing the operational state of the filter cleaner 300 and a position detection sensor 322 for detecting the position of the filter cleaner 300. The sensor 750 may include a dust container sensor (not shown) for detecting the amount of dust collected in the dust container device 400 and a battery sensor (not shown) for detecting the state of charge of the battery.

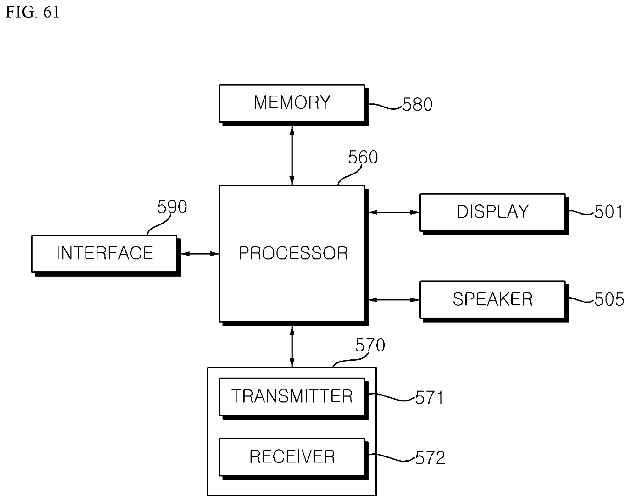

FIG. 60 is a front view of the remote control device of the air-conditioning system according to an embodiment of the present disclosure, and FIG. 61 is a block diagram schematically illustrating the internal structure of the remote control device according to an embodiment of the present disclosure.

Referring to FIGS. 60 and 61, the remote control device 500 may include an input interface 590, which includes a plurality of buttons, and a display 501, which displays predetermined information. In addition, the remote control device 500 may include a speaker 505, which outputs a predetermined sound.

The display 501 and the speaker 505 may visually and audibly output various pieces of information related to the air-conditioning system 1. For example, the display 501 and the speaker 505 may output information about the state of the air-conditioning system 1, data sensed by the sensors, guidance information indicating specific operation and functions, and the like.

In some embodiments, the display 501 may be implemented as a touch screen, and thus may also function as an input means. When the display 501 is a touch screen, at least some of the hard buttons included in the input interface 590 may be omitted.

FIG. 60 illustrates hard buttons disposed on the front surface of the remote control device 500.

Referring to FIG. 60, buttons 511, 512, and 513 for a combined operation may be disposed in a first region 510. When the user presses a cooling button 511 in the first region 510, a combined cooling operation is performed such that the first air-processing apparatus 100 performs a cooling operation and such that the second air-processing apparatus 200 performs an air purification operation. When the user presses a heating button 512 in the first region 510, a combined heating operation is performed such that the first air-processing apparatus 100 performs a heating operation and such that the second air-processing apparatus 200 performs an air purification operation. In this case, the display 501 and the speaker 505 may output a guidance message indicating commencement of cooling/heating and air purification.

The user may manipulate an air current button 513 to set an automatic air current control function or to select the type of air current, such as a vertical air current mode, a horizontal air current mode, or a repeated rotation mode. If the automatic air current control function is set, the air-conditioning system 1 may automatically control the air current based on at least one of whether a combined operation is being performed, whether a cooling or heating operation is being performed, information about the quality of air, or information about occupants in the indoor space. The vertical air current mode is a mode in which the ceiling-mounted air-processing apparatuses 100 and 200 discharge air toward the region of the floor that is the closest thereto, thereby forming an air current that is perpendicular to the surface of the ceiling or the floor (within a predetermined angular range with respect to a vertical line). The vertical air current mode may be used for a heating operation, an air-curtain function, or the like. The horizontal air current mode is a mode in which the ceiling-mounted air-processing apparatuses 100 and 200 discharge air toward the uppermost region in the indoor space. The horizontal air current mode may be used for a cooling operation, an air purification operation, a situation requiring rapid diffusion of air current, or the like. The repeated rotation mode is a mode of repeatedly rotating the louvers 150 and 290 within a predetermined angular range. The display 501 and the speaker 505 may output a guidance message related to air current control.

Buttons 521, 522, and 523 corresponding to independent operation of the first air-processing apparatus 100 may be disposed in a second region 520. When the user manipulates a cooling button 521 or a heating button 523, the first air-processing apparatus 100 may perform a cooling operation or a heating operation.

When the user presses a stop button 522, the first air-processing apparatus 100 may stop operating. Alternatively, the stop button 522 may be a button for stopping all of the modules of the air-conditioning system 1.

Buttons 531 and 532 corresponding to independent operation of the second air-processing apparatus 200 may be disposed in a third region 530. When the user manipulates an air purification button 531, the second air-processing apparatus 200 may perform an air purification operation. When the user manipulates an air quality detection mode button 532, the second air-processing apparatus 200 may automatically operate based on air quality data. For example, the second air-processing apparatus 200 may perform an air purification operation or may increase the rotation speed of the fan until the acquired air quality data corresponds to a "good state".

During the independent operation, the display 501 and the speaker 505 may also output a guidance message related to the state of the independent operation.

Buttons 541 and 543 related to the filters may be disposed in a fourth region 540. For example, a HEPA button 541 may be a button for enabling the user to input a command for replacing the consumable filter device 284 including the HEPA filter 289. When the user presses the HEPA button 541, the filter device 284 may descend in order to improve convenience of replacement. The user may manipulate an automatic cleaning button 542 to set an automatic cleaning function using the filter cleaner 300. A dust container emptying button 543 may be a button for enabling the user to input a command for emptying the dust container device 400. When the user presses the dust container emptying button 543, the dust container device 400 may descend in order to facilitate removal of the dust container device 400.

The remote control device 500 may further include other buttons 551 and 552. For example, the remote control device 500 may include an air volume control button 551 for changing the volume of air current and a lighting button 552 for operating a light source provided in the air-conditioning system 1.

The buttons illustrated in FIG. 60 are given by way of example, and the present disclosure is not limited thereto.

The remote control device 500 may include a processor 560 for controlling the overall operation thereof and a memory 580 for storing various data. The memory 580 stores control data for controlling the operation of the remote control device 500 and operation data generated or sensed during operation of the remote control device 500.

In addition, the remote control device 500 may include a communication module 570 in order to communicate with other devices. The remote control device 500 may include a transmitter 571, which transmits a control command to the air-processing apparatuses 100 and 200. In some embodiments, the remote control device 500 may further include a receiver 572, which receives predetermined data. The transmitter 571 and the receiver 572 may be integrated in the form of a transceiver.

The air-conditioning system 1 according to an embodiment of the present disclosure may communicate with the mobile terminal 730 and the server 710, and the user may remotely monitor and control the air-conditioning system 1 using the mobile terminal 730 or other devices that communicate with the server 710.

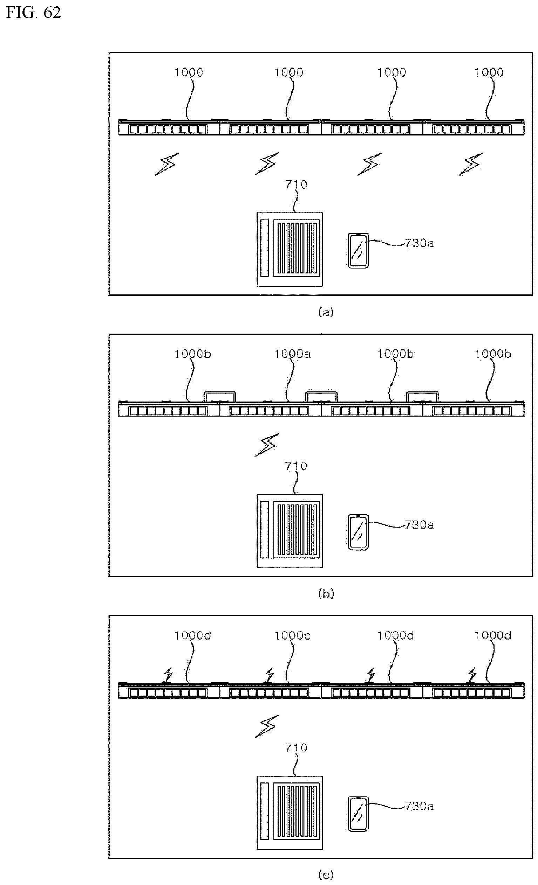

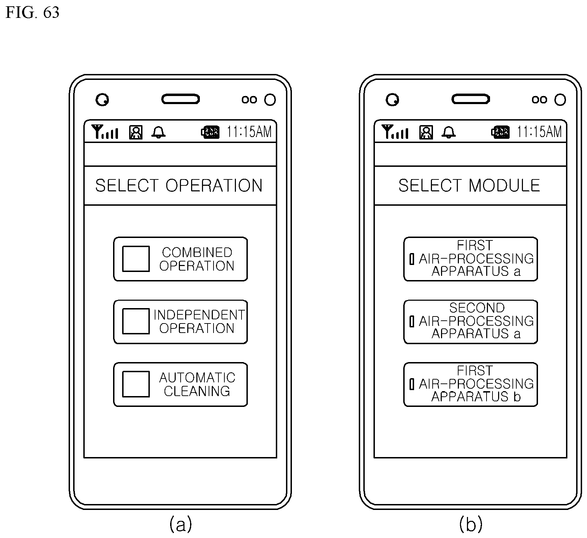

FIGS. 62 and 63 are views for explaining the communication structure and remote control of the air-conditioning system according to an embodiment of the present disclosure. FIG. 62 illustrates various examples of the communication structure, and FIG. 63 illustrates a screen of a user interface that is provided through the mobile terminal.

Referring to FIG. 62(a), the server 710 and the smartphone 730a may wirelessly communicate with each air-processing module 1000, which is the first air-processing apparatus 100 or the second air-processing apparatus 200, to transmit a user's control command to each air-processing module 1000 and to receive and display information about the state of each air-processing module 1000. For example, each air-processing module 1000 may include a Wi-Fi communication module in order to communicate with the server 710 and the smartphone 730a.

According to an embodiment of the present disclosure, the server 710 and the smartphone 730a may communicate with one of the plurality of air-processing modules 1000 included in the air-conditioning system 1, and the air-processing module 1000 that communicates with the remote control device 500 may transmit a control command to the remaining air-processing modules.

Referring to FIG. 62(b), the air-processing modules 1000a and 1000b may be wiredly connected to each other to communicate with each other in a wired manner. The server 710 and the smartphone 730a may wirelessly communicate with the air-processing module 1000a, which includes a wireless communication module (e.g. a Wi-Fi communication module), to transmit a user's control command to the air-processing module 1000a and to receive and display information about the states of the air-processing modules 1000a and 1000b. The air-processing module 1000a may transmit the received control command to the remaining air-processing modules 1000b. In addition, the air-processing module 1000a may transmit the data received from the remaining air-processing modules 1000b to the server 710 and the smartphone 730a.

Referring to FIG. 62(c), the air-processing modules 1000c and 1000d may communicate with each other in a short-range wireless communication manner (e.g. Bluetooth). The server 710 and the smartphone 730a may wirelessly communicate with the air-processing module 1000c, which includes a wireless communication module (e.g. a Wi-Fi communication module), to transmit a user's control command to the air-processing module 1000c and to receive and display information about the states of the air-processing modules 1000c and 1000d. The air-processing module 1000c may transmit the received control command to the remaining air-processing modules 1000d. In addition, the air-processing module 1000c may transmit the data received from the remaining air-processing modules 1000d to the server 710 and the smartphone 730a.

Accordingly, each of the plurality of air-processing modules 1000b and 1000d may include only a wired communication module or a short-range wireless communication module in order to communicate with other air-processing apparatuses disposed nearby, thereby reducing manufacturing costs.

The user may remotely monitor and control the air-conditioning system 1 by executing an application or accessing a predetermined website via the smartphone 730a.

Referring to FIG. 63(a), the user may first select an upper-level operation menu, such as a combined operation, an independent operation, or automatic cleaning, and thereafter may select detailed control. If selecting an independent operation, the user may select and control a control target module in a module selection screen shown in FIG. 63(b).

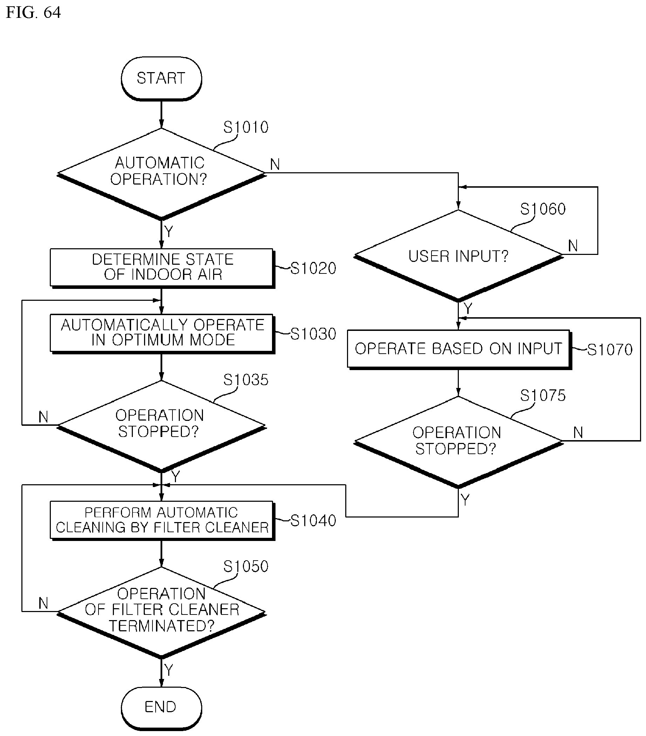

FIG. 64 is a flowchart showing an operation method of the air-conditioning system according to an embodiment of the present disclosure.

The air-conditioning system 1 according to an embodiment of the present disclosure may include a first air-processing apparatus 100, which has a first inlet 102a formed in one surface thereof, which is perpendicular to the floor or the ceiling, and a first outlet 102b formed in another surface thereof, which is perpendicular to the first inlet 102a, and induces the air introduced into the first inlet 102a to exchange heat with refrigerant and to be delivered to the first outlet 102b. To this end, the first air-processing apparatus 100 may include a heat exchanger 186, which induces the air introduced into the first inlet 102a to exchange heat with refrigerant.

In addition, the air-conditioning system 1 according to an embodiment of the present disclosure may include a second air-processing apparatus 200, which has a second inlet 202a formed therein so as to be open in the same direction as the first inlet 102a and a second outlet 202b formed therein so as to be open in the same direction as the first outlet 102b. To this end, the second air-processing apparatus 200 may include a filter device 284, which removes foreign substances from the air introduced into the second inlet 202a.

The air-conditioning system 1 according to an embodiment of the present disclosure may be driven in a combined operation mode in which the first air-processing apparatus 100 and the second air-processing apparatus 200 operate together.

Also, the air-conditioning system 1 according to an embodiment of the present disclosure may be driven in an independent operation mode in which only one of the air-processing apparatuses 100 and 200 provided therein operates.

When automatic operation is set (S1010), the air-conditioning system 1 according to an embodiment of the present disclosure may automatically select an optimum mode from among the combined operation mode and the independent operation mode, and may operate in the optimum mode (S1030). When automatic operation is not set (S1010), the air-conditioning system 1 according to an embodiment of the present disclosure may receive user input from the remote control device 500 and the mobile terminal 700 (S1060), and may perform operation based on the received user input (S1070). Also, the air-conditioning system 1 according to an embodiment of the present disclosure may stop operating based on the user input (S1075).

More desirably, the air-conditioning system 1 may automatically operate in the combined operation mode or the independent operation mode based on the state of the air in the indoor space (S1030). The air-conditioning system 1 may determine the state of the air in the indoor space based on information acquired by the sensors provided in the apparatuses included in the system and information received from the server 710, the mobile terminal 730, and other external sensors (S1020). Also, the air-conditioning system 1 may automatically operate in the optimum mode suitable for the determined state of the air in the indoor space (S1030).

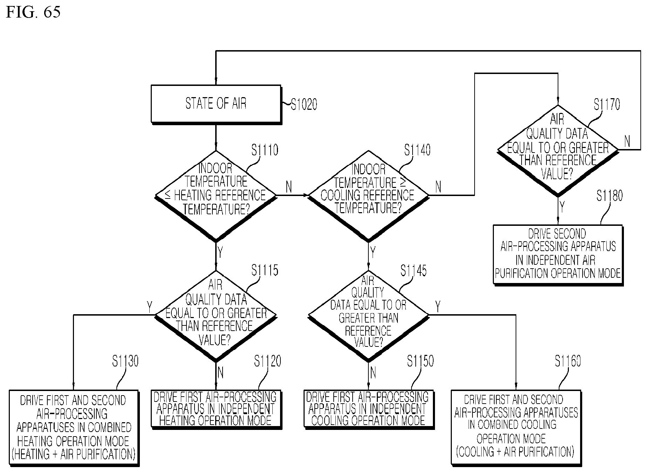

FIG. 65 is a flowchart showing an operation method of the air-conditioning system according to an embodiment of the present disclosure. FIG. 65 shows in detail the process of automatically operating in the optimum mode (S1030) based on the state of the air in the indoor space (S1020).

Referring to FIG. 65, when the indoor temperature is equal to or lower than a heating reference temperature (S1110) and the air quality data is equal to or greater than a reference value (S1115), the first air-processing apparatus 100 may perform a heating operation, and the second air-processing apparatus 200 may perform an air purification operation in which the air introduced into the second inlet 202a is filtered and the filtered air is delivered to the second outlet (S1130). That is, the air-conditioning system 1 may perform a combined heating operation (S1130).

When the indoor temperature is equal to or lower than the heating reference temperature (S1110) and the air quality data is less than the reference value (S1115), only the first air-processing apparatus 100 may perform a heating operation. That is, the air-conditioning system 1 may perform an independent heating operation (S1120).

Meanwhile, when the indoor temperature is equal to or higher than a cooling reference temperature (S1140) and the air quality data is equal to or greater than the reference value (S1145), the first air-processing apparatus 100 may perform a cooling operation, and the second air-processing apparatus may perform an air purification operation (S1160). That is, the air-conditioning system 1 may perform a combined cooling operation (S1160).

When the indoor temperature is equal to or higher than the cooling reference temperature (S1140) and the air quality data is less than the reference value (S1145), only the first air-processing apparatus 100 may perform a cooling operation (S1150). That is, the air-conditioning system 1 may perform an independent cooling operation (SI150).

Meanwhile, when the indoor temperature is higher than the heating reference temperature (S1110) but lower than the cooling reference temperature (S1140) and the air quality data is equal to or greater than the reference value (S1170), only the second air-processing apparatus 200 may perform an air purification operation (S1180). That is, the air-conditioning system 1 may perform an independent air purification operation (SI180).

According to at least one of the embodiments of the present disclosure, it is possible to effectively manage indoor air and to rapidly circulate heat-exchanged air and filtered air in the indoor space using a plurality of air-processing apparatuses in which outlets are formed in a line.

In addition, according to at least one of the embodiments of the present disclosure, it is possible to efficiently manage an air-conditioning operation by controlling a plurality of air-processing apparatuses in an automatically interlocking manner.

Meanwhile, the first air-processing apparatus 100 according to an embodiment of the present disclosure has an inlet 102a formed in one surface thereof, which is perpendicular to the floor or the ceiling, and a pre-filter 188 disposed in the inlet 102a, and the second air-processing apparatus 200 according to an embodiment of the present disclosure has an inlet 202a formed in one surface thereof, which is perpendicular to the floor or the ceiling, and a pre-filter 288 disposed in the inlet 202a.

When the operation of at least one of the air-processing apparatuses 100 and 200 is stopped (S1035), the filter cleaner 300 may automatically move to clean at least one of the pre-filters 188 and 288 provided in the air-processing apparatuses 100 and 200 (S1040).

When the cleaning operation by the filter cleaner 300 is finished (S1050), operation of the air-conditioning system 1 may be terminated. That is, according to an embodiment of the present disclosure, the pre-filters 188 and 288 may automatically perform cleaning when a predetermined operation is finished, thereby always maintaining the pre-filters 188 and 288 and the inlets 102a and 202a clean. Accordingly, it is possible to prevent deterioration in suction performance, thus ensuring improved air-conditioning efficiency.

Since the pre-filters 188 and 288 respectively disposed in the first air-processing apparatus 100 and the second air-processing apparatus 200 are cleaned by a single filter cleaner 300, it is possible to efficiently manage the pre-filters 188 and 288.

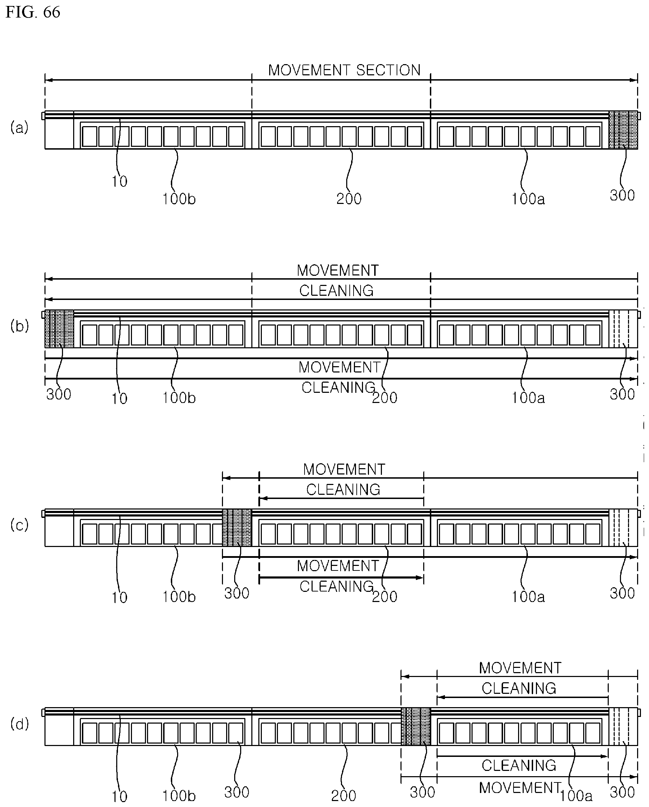

FIG. 66 is a view for explaining movement of, and cleaning performed by, the filter cleaner according to an embodiment of the present disclosure.

Referring to FIG. 66(a), the air-processing apparatuses 100a, 200, and 100b may be disposed adjacent to each other in the leftward-rightward direction. The filter cleaner 300 may clean at least one of the pre-filters 188 and 288 included in the air-processing apparatuses 100a, 200, and 100b while moving in the leftward-rightward direction.

A guide rail 10 for guiding the movement of the filter cleaner 300 is disposed on one side of each of the air-processing apparatuses 100a, 200, and 100b. The guide rail 10 may be disposed above the pre-filters 188 and 288 of the air-processing apparatuses 100a, 200, and 100b so as to extend in the leftward-rightward direction.

The filter cleaner 300 may move in the leftward-rightward direction along the guide rail 10. The filter cleaner 300 is configured to be movable between the start point and the end point of the movement section. The filter cleaner 300 may stand by at the start point of the movement section, and may start to move toward the end point of the movement section when a predetermined event, such as stoppage of operation, occurs or when a user's cleaning command is received. The end plate 28 may be disposed on the guide rail 10 in order to restrict the movement of the filter cleaner 300 and to define the range of the movement section.

Referring to FIG. 66(b), the filter cleaner 300 may clean all of the pre-filters 188 and 288 included in the air-processing apparatuses 100a, 200, and 100b while moving. The filter cleaner 300 may move from the start point to the end point. Also, when the filter cleaner 300 arrives at the end point, the direction that the filter cleaner 300 moves may change. The filter cleaner 300 may return from the end point to the start point.

According to an embodiment of the present disclosure, some of the pre-filters 188 and 288 may be cleaned. In particular, in the case in which some of the air-processing apparatuses 100a, 200, and 100b are driven in the independent operation mode, only the pre-filters 188 and 288 included in the air-processing apparatuses 100a, 200, and 100b that have operated may be cleaned when the operation is stopped. Accordingly, it is possible to shorten the cleaning time, improve cleaning efficiency, and minimize consumption of power of the battery of the filter cleaner 300.

Referring to FIG. 66(c), in the case in which only the second air-processing apparatus 200 that is located in the middle among the air-processing apparatuses 100a, 200, and 100b performs an air purification operation, the filter cleaner 300 may clean only the pre-filter 288 included in the second air-processing apparatus 200 while moving when the air purification operation is stopped. In this case, the filter cleaner 300 may pass by the first air-processing apparatus 100a without operating the suction device 376 or the agitator 420. After passing by the first air-processing apparatus 100a, the filter cleaner 300 may operate the suction device 376 and the agitator 420 to clean the pre-filter 288 included in the second air-processing apparatus 200.

Referring to FIG. 66(d), in the case in which only the first air-processing apparatus 100a, which is located close to the start point, among the air-processing apparatuses 100a, 200, and 100b, performs a cooling operation, the filter cleaner 300 may clean only the pre-filter 188 included in the first air-processing apparatus 100a while moving when the cooling operation is stopped. In this case, it is unnecessary for the filter cleaner 300 to move to the other air-processing apparatuses 200 and 100b to clean the pre-filters thereof.

Although FIGS. 66(c) and 66(d) illustrate the case in which only one air-processing apparatus 200 or 100a is driven and only the pre-filter 288 or 188 included therein is cleaned, the present disclosure is not limited thereto. For example, when the first air-processing apparatuses 100a and 100b are driven, the pre-filters 188 of the first air-processing apparatuses 100a and 100b may be cleaned when the operation is stopped.

Meanwhile, when it is desired to clean the pre-filter 288 or 188 of the specific air-processing apparatus 200 or 100a, the portion of the guide rail 10 that corresponds to the specific air-processing apparatus 200 or 100a or the pre-filter 288 or 188 may be defined as a cleaning section, and the suction device 376 and the agitator 420 may operate between the start point and the end point of the cleaning section.

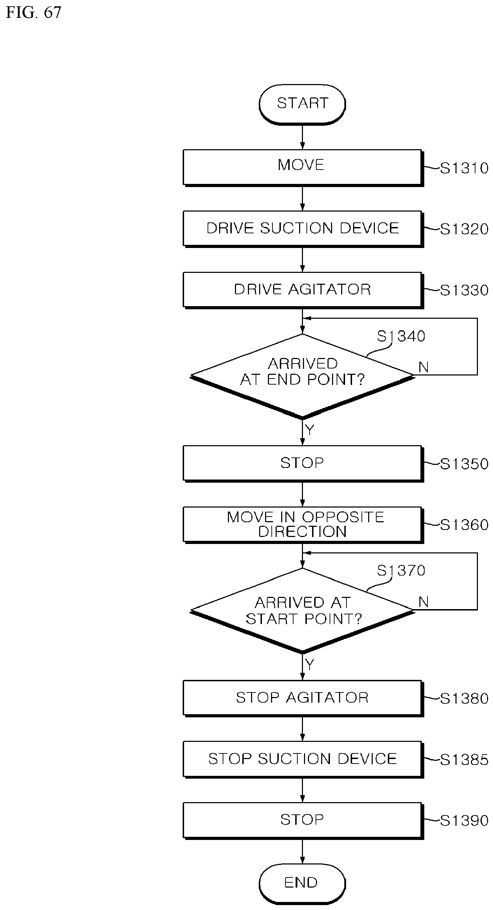

FIG. 67 is a flowchart showing an operation method of the air-conditioning system according to an embodiment of the present disclosure. FIG. 67 shows the embodiment in which the filter cleaner 300 cleans all of the pre-filters 188 and 288 provided in the air-conditioning system 1. The embodiment shown in FIG. 67 corresponds to the embodiment shown in FIG. 66(b).

Referring to FIG. 67, the filter cleaner 300 may stand by at the start point of the movement section, and may start to move toward the end point of the movement section when a predetermined event, such as stoppage of operation, occurs or when a user's cleaning command is received (S1310).

The filter cleaner 300 may move (S1310), and may drive the suction device 376 (S1320) and the agitator 420 (S1330) in order to perform a cleaning operation. The suction device 376 may be driven first, or the agitator 420 may be driven first. Alternatively, the suction device 376 and the agitator 420 may be driven simultaneously.

When arriving at the end point (S1340), the filter cleaner 300 may stop moving (S1350). The filter cleaner 300 may change the moving direction thereof so as to move in the opposite direction (S1360). That is, the filter cleaner 300 may move from the end point toward the start point (S1360).

When arriving at the start point (S1370), the filter cleaner 300 may stop driving the agitator 420 and the suction device 376 (S1380 and S1385), and may stop moving (S1390). Accordingly, the filter cleaner 300 may clean the pre-filters 188 and 288 twice while reciprocating.

In some embodiments, operation of the agitator 420 and the suction device 376 may be stopped when the filter cleaner 300 arrives at the end point (S1340), and may resume when the filter cleaner 300 moves in the opposite direction (S1360).

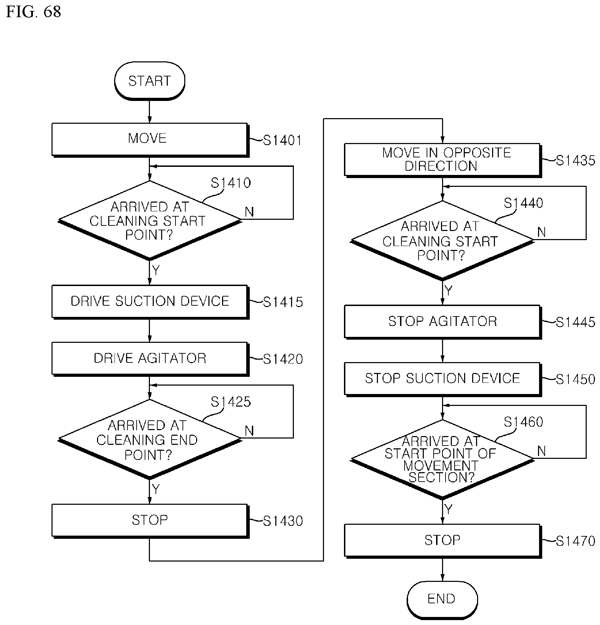

FIG. 68 is a flowchart showing an operation method of the air-conditioning system according to an embodiment of the present disclosure. FIG. 68 shows the embodiment in which the filter cleaner 300 cleans some of the pre-filters 188 and 288 provided in the air-conditioning system 1. The embodiment shown in FIG. 68 corresponds to the embodiment shown in FIG. 66(c).

Referring to FIG. 68, the filter cleaner 300 may stand by at the start point of the movement section, and may start to move toward the end point of the movement section when a predetermined event, such as stoppage of operation, occurs or when a user's cleaning command is received (S1401).

When arriving at the start point of the cleaning section (S1410), the filter cleaner 300 may drive the suction device 376 and the agitator 420 (S1415 and S1420).

When arriving at the end point of the cleaning section (S 1425), the filter cleaner 300 may stop moving (S1430). The filter cleaner 300 may change the moving direction thereof so as to move in the opposite direction (S1435). That is, the filter cleaner 300 may move from the end point of the cleaning section toward the start point of the movement section (S1435).

When arriving again at the start point of the cleaning section (S1440), the filter cleaner 300 may stop driving the suction device 376 and the agitator 420 (S1445 and S1450). Accordingly, the filter cleaner 300 may perform a cleaning operation twice while reciprocating the cleaning section.

In some embodiments, the operation of the agitator 420 and the suction device 376 may be stopped when the filter cleaner 300 arrives at the end point of the cleaning section (S1425), and may be resumed when the filter cleaner 300 moves in the opposite direction (S1435).

When arriving at the start point of the movement section (S1460), the filter cleaner 300 may stop moving (S1470).

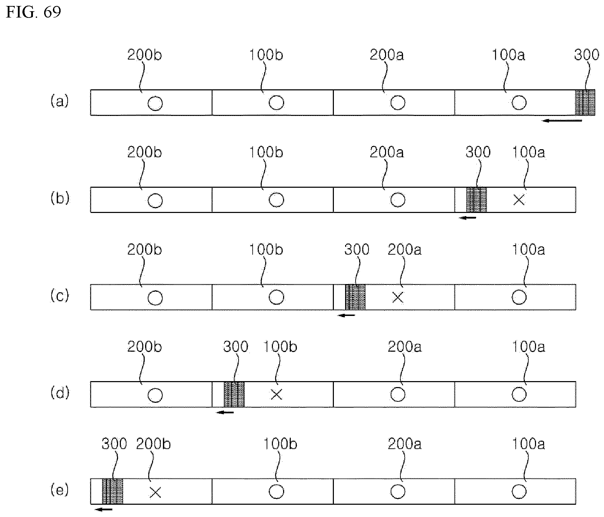

FIG. 69 is a view for explaining cleaning that is performed during operation of the air-conditioning system according to an embodiment of the present disclosure.

The air-conditioning system 1 according to an embodiment of the present disclosure may include a plurality of air-processing apparatuses 100 and 200, and may clean the pre-filters 188 and 288 when all or some of the plurality of air-processing apparatuses 100 and 200 are operating.

While the first air-processing apparatus 100 or the second air-processing apparatus 200 is operating, when the filter cleaner 300 enters a section corresponding to the air-processing apparatus that is operating, the air-processing apparatus that is operating may temporarily stop operating while the filter cleaner 300 passes through the corresponding section. Accordingly, it is possible to clean the pre-filters 188 and 288 without blocking the inlets 102a and 202a of the air-processing apparatuses 100 and 200 that are operating and without stopping the overall operation of the air-conditioning system 1.

FIG. 69 shows the case in which the air-conditioning system 1 includes two first air-processing apparatuses 100a and 100b and two second air-processing apparatuses 200a and 200b and the filter cleaner 300 sequentially moves along all of the air-processing apparatuses 100a, 100b, 200a, and 200b while the air-processing apparatuses 100a, 100b, 200a, and 200b are operating.

Referring to FIG. 69(a), when the air-processing apparatuses 100a, 100b, 200a, and 200b are operating, the filter cleaner 300 stands by at the start point.

If a user's cleaning command is received, operation of the air-processing apparatuses 100a, 100b, 200a, and 200b may be sequentially stopped, and the filter cleaner 300 may perform a cleaning operation (refer to FIGS. 69(b) to 69(e)).

Referring to FIGS. 69(b) and 69(c), when the filter cleaner 300 enters a section corresponding to the air-processing apparatuses 100a and 200a, the air-processing apparatuses 100a and 200a that are operating may temporarily stop operating while the filter cleaner 300 passes through the corresponding section.

Referring to FIGS. 69(d) and 69(e), when the filter cleaner 300 enters a section corresponding to the air-processing apparatuses 100b and 200b, the air-processing apparatuses 100b and 200b that are operating may temporarily stop operating while the filter cleaner 300 passes through the corresponding section.

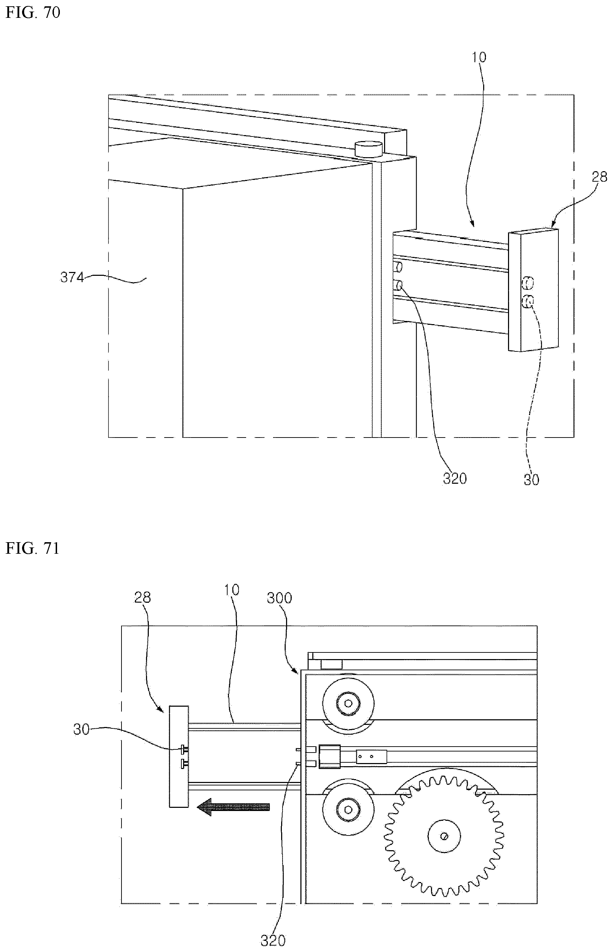

FIGS. 70 to 72 are views for explaining charging of the filter cleaner according to an embodiment of the present disclosure.

The air-conditioning system 1 according to an embodiment of the present disclosure may include air-processing apparatuses 100 and 200, which respectively include inlets 102a and 202a formed in the surfaces thereof, which are perpendicular to the floor or the ceiling, and pre-filters 188 and 288 disposed in the inlets 102a and 202a, a guide rail 10 disposed on one side of each of the air-processing apparatuses 100 and 200, and a filter cleaner 300, which includes a battery 374 and a connection terminal 320 to which power for charging the battery 374 is supplied and is configured to clean the pre-filters 188 and 288 included in the air-processing apparatuses 100 and 200 while moving along the guide rail 10 based on the power charged in the battery 374.

In addition, the air-conditioning system 1 according to an embodiment of the present disclosure may further include a charging system for charging the battery 374. The charging system for charging the battery 374 may be provided inside an end plate 28.

Referring to FIGS. 70 to 72 and 59, the air-conditioning system 1 according to an embodiment of the present disclosure may include an end plate 28, which includes a charging terminal 30 configured to be connected to the connection terminal 320 of the filter cleaner 300 and a power supply circuit 820 configured to supply power to the charging terminal 30 when the connection terminal 320 is connected to the charging terminal 30. The end plate 28 may be disposed at the left end or the right end of the guide rail 10.

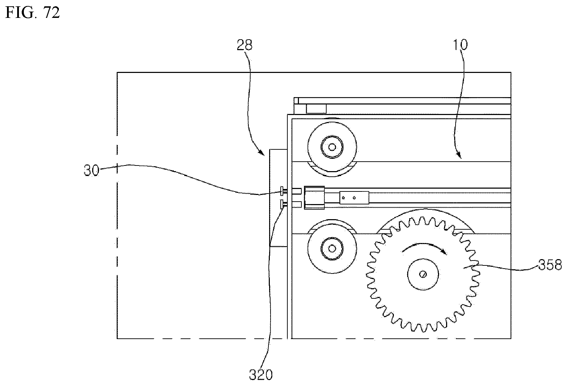

FIGS. 70 and 71 show the state before the connection terminal 320 and the charging terminal 30 are connected to each other, and FIG. 72 shows the state in which the connection terminal 320 and the charging terminal 30 are connected to each other.

The filter cleaner 300 may move along the guide rail 10 by rotation of the moving gear 358 in the clockwise or counterclockwise direction. When the moving gear 358 rotates in one direction, the filter cleaner 300 may approach the end plate 28, and may finally come into contact with the end plate 28.

The end plate 28 may be disposed in a direction perpendicular to the direction in which the guide rail 10 extends. The charging terminal 30 may be disposed so as to protrude in the direction in which the guide rail 10 extends. The connection terminal 320 and the charging terminal 30 may be formed in shapes corresponding to each other so as to be interconnected. The connection terminal 320 and the charging terminal 30 may be formed at the same height. Accordingly, the connection terminal 320 and the charging terminal 30 may be connected to each other when the filter cleaner 300 moves in one direction along the guide rail 10 to the end of the guide rail 10.

The start point of the movement section within which the filter cleaner 300 can move may be a position at which the connection terminal 320 and the charging terminal 30 are connected to each other. Accordingly, the filter cleaner 300 may stand by at the start point in the state in which the filter cleaner 300 is being charged or is fully charged, and may move therefrom in order to perform a cleaning operation.

The filter cleaner 300 may automatically clean the pre-filters 188 and 288 while moving, and may then return to the start point. When the connection terminal 320 and the charging terminal 30 are connected to each other, the power supply circuit 820 may supply power to the charging terminal 30 to charge the battery 374.

The filter cleaner 300 may clean the pre-filters 188 and 288 while moving by rotating the moving gear 358 in a first direction, and may then return to the start point by rotating the moving gear 358 in a second direction, which is opposite the first direction. That is, the filter cleaner 300 may change the moving direction thereof by changing the rotating direction of the moving gear 358.

According to an embodiment of the present disclosure, an operation of bringing the connection terminal 320 and the charging terminal 30 into close contact with each other may be performed in order to ensure connection therebetween. After returning to the start point, the filter cleaner 300 may rotate the moving gear 358 in the second direction by a predetermined angle, thereby applying tension to the connection terminal 320 and the charging terminal 30. For example, when finishing cleaning, the filter cleaner 300 may return to the start point at which the filter cleaner 300 stands by before moving, and thereafter may rotate the moving gear 358 in the second direction by a minimum controllable unit, thereby bringing the connection terminal 320 and the charging terminal 30 into close contact with each other.

Alternatively, in the case in which a support part (not shown) for supporting the filter cleaner 300 is further provided, it may be possible to apply pressure to the filter cleaner 300 toward the end plate 28 using the support part. Accordingly, the connection terminal 320 and the charging terminal 30 may come into close contact with each other.

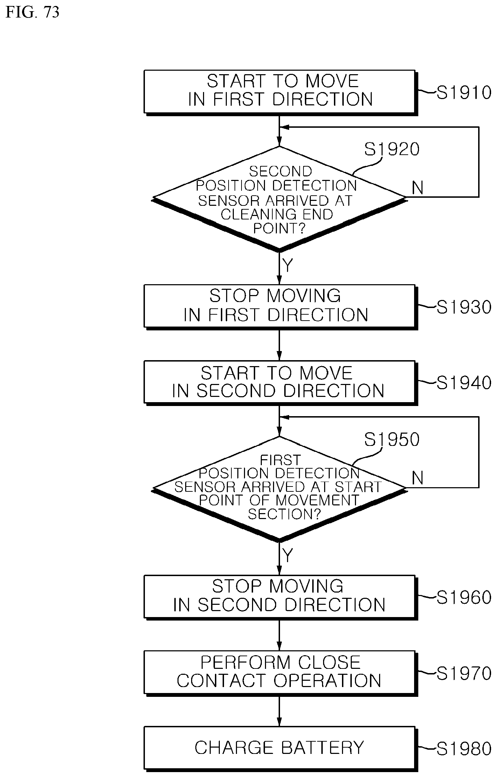

FIG. 73 is a flowchart showing an operation method of the air-conditioning system according to an embodiment of the present disclosure. FIG. 73 shows an example of movement of, and cleaning performed by, the filter cleaner 300.

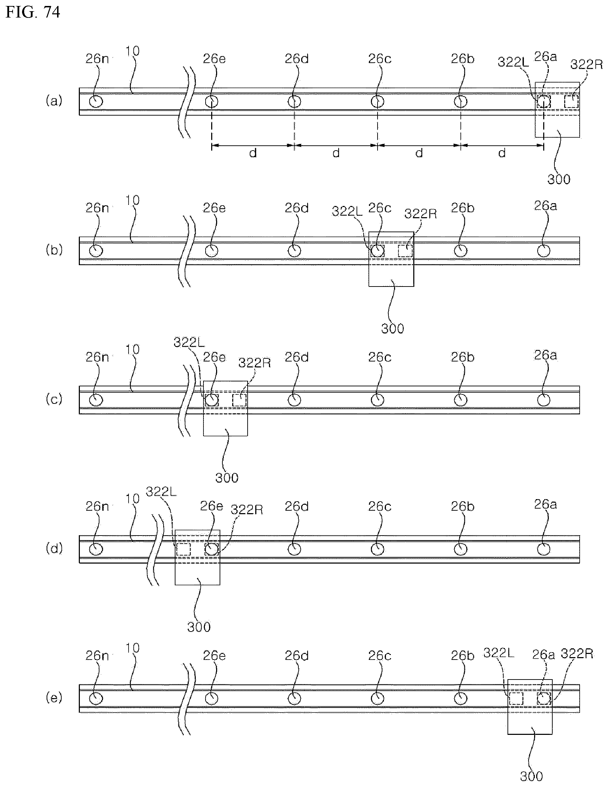

FIG. 74 is a view for explaining determination of the position and the movement of the filter cleaner 300 according to an embodiment of the present disclosure.

Referring to FIGS. 73 and 74, the filter cleaner 300 may stand by at the start point of the movement section, and may start to move in a first direction along the guide rail 10 when a predetermined event, such as stoppage of operation, occurs or when a user's cleaning command is received (S1910). The first direction may be a direction from the start point, at which the filter cleaner 300 stands by, to the end point.

A plurality of objects to be sensed 26a to 26n may be disposed on the guide rail 10 so as to be spaced apart from each other in the leftward-rightward direction.

The filter cleaner 300 may include a position detection sensor 322, and the position detection sensor 322 may sense the objects to be sensed 26a to 26n. The objects to be sensed 26 may be formed in a structure corresponding to the position detection sensor 322. For example, when the position detection sensor 322 is a switch sensor, the objects to be sensed 26 may have the shape of a protrusion that protrudes rearwards. Alternatively, when the position detection sensor 322 is a Hall sensor, the objects to be sensed 26 may be implemented as magnets.

The filter cleaner 300 may determine the position thereof based on the objects to be sensed 26a to 26n, which are detected by the position detection sensor 322.

At least two objects to be sensed 26a and 26n may be disposed on the guide rail 10. At least two objects to be sensed 26a and 26n may be disposed on the guide rail 10 at positions corresponding to the start point and the end point of the movement section within which the filter cleaner 300 moves. The first object to be sensed 26a may be disposed at a position corresponding to the start point of the movement section. The n^{th} object to be sensed 26n may be disposed at a position corresponding to the end point of the movement section.

The position detection sensor 322 may recognize the start point of the movement section by sensing the first object to be sensed 26a, and may recognize the end point of the movement section by sensing the n^{th} object to be sensed 26n. When the filter cleaner 300 moves in the first direction, if the position detection sensor 322 senses the n^{th} object to be sensed 26n, it may be determined that the filter cleaner 300 has arrived at the end point of the movement section. The filter cleaner 300 may change the moving direction thereof, that is, may move in the second direction, which is opposite the first direction. If the position detection sensor 322 senses the first object to be sensed 26a, it is determined that the filter cleaner 300 has returned to the start point of the movement section.

According to an embodiment of the present disclosure, three or more objects to be sensed 26a to 26n may be disposed on the guide rail 10. A greater number of objects to be sensed 26a to 26n is advantageous from the aspect of accuracy of determination of the position of the filter cleaner 300 and precision of control of the movement thereof.

The position of the filter cleaner 300 may be determined based on at least one of identification information of the objects to be sensed 26a to 26n that are detected by the position detection sensor 322, the types of objects to be sensed 26a to 26n, the order in which the objects to be sensed 26a to 26n are detected, or a change in a physical parameter (e.g. pressure, magnetic field, current, etc.) by the objects to be sensed 26a to 26n.

The plurality of objects to be sensed 26a to 26n may be disposed so as to be spaced a regular distance d apart from each other based on the start point of the movement section. Accordingly, it is possible to accurately determine the moving distance of the filter cleaner 300 using only the number of objects to be sensed 26a to 26n that are detected or the order in which the objects to be sensed 26a to 26n are detected during a single movement of the filter cleaner 300.

Alternatively, the plurality of objects to be sensed 26a to 26n may be disposed at feature points, such as the start point and the end point of the movement section, the start point and the end point of each of the air-processing apparatuses 100 and 200, and the start point and the end point of each of the pre-filters 188 and 288. Accordingly, the filter cleaner 300 may conveniently determine the movement section and the cleaning section.

The air-processing apparatuses 100 and 200 according to an embodiment of the present disclosure may be modularized so as to have the same external appearance and size. The objects to be sensed 26a to 26n may be disposed in each module so as to be spaced a regular distance apart from each other. The objects to be sensed 26a to 26n may be spaced a regular distance apart from each other based on the start point of each module. The objects to be sensed 26a to 26n may be spaced a regular distance apart from each other based on the end point of each module. Accordingly, it is possible to accurately determine the position of the filter cleaner 300 and to precisely control the movement of the filter cleaner 300.

The filter cleaner 300 may include a plurality of position detection sensors 322 in order to improve the accuracy of position determination. For example, the filter cleaner 300 may include a first position detection sensor 322L and a second position detection sensor 322R, which are spaced apart from each other.

When the filter cleaner 300 moves in the first direction, the first position detection sensor 322L may sense the objects to be sensed 26a to 26n earlier than the second position detection sensor 322R. Also, when the filter cleaner 300 moves in the second direction, the second position detection sensor 322R may sense the objects to be sensed 26a to 26n earlier than the first position detection sensor 322L.

Referring to FIG. 74(a), the filter cleaner 300 stands by at the start point in the state of being in contact with the end plate 28. At this time, the first position detection sensor 322L may sense the object to be sensed 26a corresponding to the start point.

Referring to FIG. 74(b), as the filter cleaner 300 moves in the first direction, the first position detection sensor 322L may sense the object to be sensed 26c. Because the filter cleaner 300 continues to move in the first direction, the object to be sensed 26c sensed by the first position detection sensor 322L may also be sensed by the second position detection sensor 322R.

Referring to FIGS. 74(c) and 74(d), the object to be sensed 26e corresponding to the end point of the cleaning section may be first sensed by the first position detection sensor 322L, and may then be sensed by the second position detection sensor 322R.

When the filter cleaner 300 moves in the first direction (S1910), if the second position detection sensor 322R detects the end point of the cleaning section (S1920), the filter cleaner 300 may stop moving (S1930). When the second position detection sensor 322R senses the object to be sensed corresponding to the end point of the cleaning section, it may be determined that the second position detection sensor 322R has arrived at the end point of the cleaning section (S1920).

When the filter cleaner 300 moves in the first direction (S1910), the second position detection sensor 322R may sense the objects to be sensed 26a to 26n later than the first position detection sensor 322L. Accordingly, when the second position detection sensor 322R detects the end point of the cleaning section (S1920), there is no object to be cleaned even if the filter cleaner 300 moves further. Accordingly, when the second position detection sensor 322R detects the end point of the cleaning section (S1920), the filter cleaner 300 may stop moving (S1930), and may start to move in the second direction (S1940).

In the same manner, when the filter cleaner 300 moves in the second direction (S1940), the first position detection sensor 322L may sense the objects to be sensed 26a to 26n later than the second position detection sensor 322R.

As the filter cleaner 300 moves in the second direction, the objects to be sensed 26d to 26a may be sensed. Referring to FIGS. 74(e) and 74(a), the object to be sensed 26a corresponding to the start point of the movement section may be first sensed by the second position detection sensor 322R, and may then be sensed by the first position detection sensor 322L.

When the filter cleaner 300 moves in the second direction (S1940), if the first position detection sensor 322L detects the start point of the movement section (S1950), the filter cleaner 300 may stop moving in the second direction (S1960). When the first position detection sensor 322L senses the object to be sensed corresponding to the start point of the movement section, it may be determined that the first position detection sensor 322L has arrived at the start point of the movement section (S1950).

The movement in the second direction is movement for returning to the end plate 28. Therefore, when the filter cleaner 300 arrives at the start point of the movement section, the filter cleaner 300 may come into contact with the end plate 28. Also, when the charging terminal 30 and the connection terminal 320 are connected to each other, the power supply circuit 820 may supply power via the connection terminal 320 and the charging terminal 30 to charge the battery 374 (S1980).

According to an embodiment of the present disclosure, in order to stably support the filter cleaner 300 and to reliably charge the battery 374, when the filter cleaner 300 arrives at the start point of the movement section, a close-contact operation of pressing the filter cleaner 300 toward the end plate 28 may be performed (S 1970).

The filter cleaner 300 may include a dust container device 400, which forms a space for accommodating foreign substances, an agitator 420, which rotates while contacting the pre-filters 188 and 288, and a suction device 376, which delivers foreign substances removed by the agitator 420 to the dust container device 400.

When it is desired to clean all of the pre-filters 188 and 288 provided in the air-conditioning system 1, the filter cleaner 300 may drive the suction device 376 and the agitator 420 while moving toward the end point of the movement section within which the filter cleaner 300 can move. When arriving at the end point of the movement section, the filter cleaner 300 may stop moving, and may move toward the start point of the movement section. When arriving at the start point of the movement section, the filter cleaner 300 may stop driving the suction device 376 and the agitator 420, and may terminate operation.

The filter cleaner 300 may stop driving the suction device 376 and the agitator 420 when arriving at the end point, and may resume driving the suction device 376 and the agitator 420 when moving toward the start point.

When it is desired to clean some of the pre-filters 188 and 288 provided in the air-conditioning system 1, the filter cleaner 300 may move toward the cleaning section corresponding to the filter to be cleaned by the filter cleaner 300. When arriving at the start point of the cleaning section, the filter cleaner 300 may drive the suction device 376 and the agitator 420. When arriving at the end point of the cleaning section, the filter cleaner 300 may stop moving, and may move toward the start point of the movement section within which the filter cleaner 300 can move. The filter cleaner 300 may stop driving the suction device 376 and the agitator 420 when arriving at the start point of the cleaning section, and may terminate operation when arriving at the start point of the movement section.

The filter cleaner 300 may stop driving the suction device 376 and the agitator 420 when arriving at the end point of the cleaning section, and may resume driving the suction device 376 and the agitator 420 when moving toward the start point of the cleaning section.

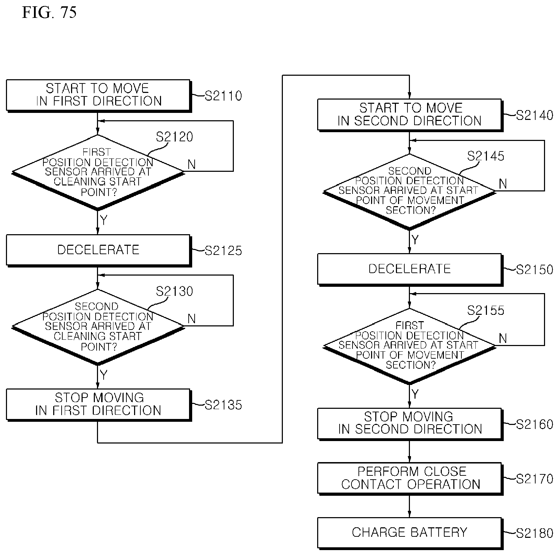

FIG. 75 is a flowchart showing an operation method of the air-conditioning system according to an embodiment of the present disclosure.

Referring to FIG. 75, when the filter cleaner 300 moves in the first direction (S2110), if the first position detection sensor 322L detects the start point of the cleaning section (S2120), the filter cleaner 300 may decelerate (S2125). When the second position detection sensor 322R detects the end point of the cleaning section (S2130), the filter cleaner 300 may stop moving (S2135). That is, the section from the time point at which the start point of the cleaning section is detected by the first position detection sensor 322L (S2120) to the time point at which the end point of the cleaning section is detected by the second position detection sensor 322R (S2130) may be a deceleration section.

The filter cleaner 300 may quickly move through a section other than the cleaning section at a first moving speed, and may move through the cleaning section at a second moving speed, which is slower than the first moving speed, thereby more thoroughly cleaning the pre-filters 188 and 288.

The filter cleaner 300, which has performed cleaning while moving through the cleaning section, may move in the second direction (S2140). When the second position detection sensor 322R detects the start point of the movement section (S2145), the filter cleaner 300 may decelerate so as to be stably docked to the end plate 28 (S2150). Thereafter, when the first position detection sensor 322L detects the start point of the movement section (S2155), the filter cleaner 300 may stop moving in the second direction (S2160).

When arriving at the start point of the movement section, the filter cleaner 300 may come into contact with the end plate 28, and may charge the battery 374 (S2180). In addition, in order to stably support the filter cleaner 300 and to reliably charge the battery 374, when the filter cleaner 300 arrives at the start point of the movement section, a close-contact operation of pressing the filter cleaner 300 toward the end plate 28 may be performed (S2170).

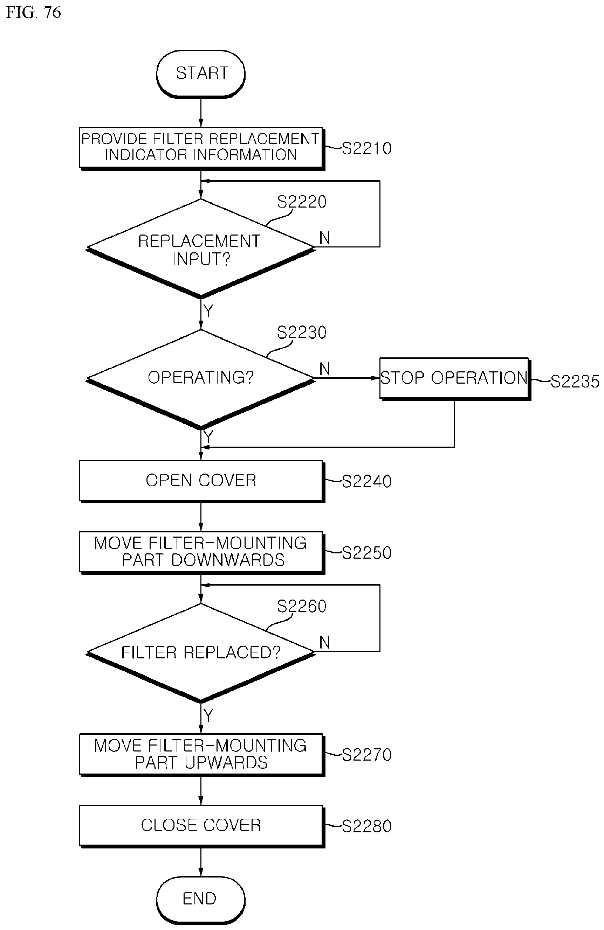

FIG. 76 is a flowchart showing an operation method of the air-conditioning system according to an embodiment of the present disclosure. FIG. 76 shows a process of replacing the filter of the second air-processing apparatus.

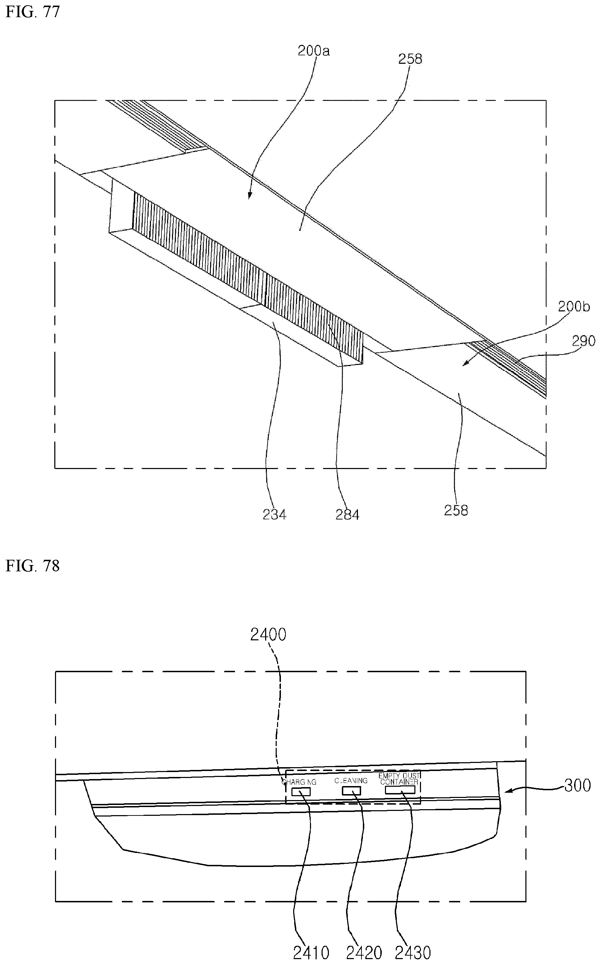

FIG. 77 is a view for explaining replacement of the filter of the second air-processing apparatus according to an embodiment of the present disclosure.

The air-conditioning system 1 according to an embodiment of the present disclosure may include a first air-processing apparatus 100, which has a first inlet 102a formed in one surface thereof, which is perpendicular to the floor or the ceiling, and a first outlet 102b formed in another surface thereof, which is perpendicular to the first inlet 102a, and induces the air introduced into the first inlet 102a to exchange heat with refrigerant and to be delivered to the first outlet 102b, and a second air-processing apparatus 200, which has a second outlet 202b formed therein so as to be open in the same direction as the first outlet 102b and a second inlet 202a formed therein so as to be open in the same direction as the first inlet 102a and includes a filter device 284 for removing foreign substances from the air introduced into the second inlet 202a, a cover 258 for opening or closing the lower side of the filter device 284, and a filter-driving device 228 for moving the filter device 284 downwards when the cover 258 is opened.

Since the filter device 284 provided in the second air-processing apparatus 200 is moved in the upward-downward direction by the filter-driving device 228, the user is capable of easily reaching the filter device 284.

The filter device 284 may include a consumable filter such as a HEPA filter 289, and the second air-processing apparatus 200 may move the filter device 284 downwards, thereby enabling the user to easily replace the filter.

Referring to FIG. 76, the air-conditioning system 1 according to an embodiment of the present disclosure may provide guidance information indicating the need to replace the filter 289 of the filter device 284 and/or information about the recommended replacement time through the remote control device 500 or the mobile terminal 700 (S2210).

For example, when the criterion for replacing the filter device 284 is met, the remote control device 500 may display replacement indicator information on the display 501 (S2210). The replacement criterion may be set based on the operating time, or may be set based on the filter contamination level, calculated based on the operating time and the state of the air in the indoor space.

When the user inputs a replacement command by, for example, pressing the HEPA button 541 on the remote control device 500 (S2220), the cover 258 provided below the filter device 284 is opened (S2240).

The second air-processing apparatus 200 may include an interface 370 for receiving input for replacing the filter device 284, and may open the cover 258 in response to the input for replacing the filter device 284 (S2240).

According to an embodiment of the present disclosure, when receiving the input for replacing the filter device 284 (S2220) during operation thereof (S2230), the second air-processing apparatus 200 may stop operating (S2235), and may open the cover 258 (S2240).

In addition, the second air-processing apparatus 200 may further include a filter-mounting part 234, which is coupled to the filter device 284. The filter device 284 and the filter-mounting part 234 may be detachably coupled to each other via magnets 287 and 238. Specifically, the filter device 284 and the filter-mounting part 234 may be coupled to each other via a first magnet 287, which is disposed in the filter device 284, and a second magnet 238, which is disposed in the filter-mounting part 234. Accordingly, the filter device 284 may be displaced in the upward-downward direction according to movement of the filter-mounting part 234. Also, the user may easily separate the filter device 284 from the filter-mounting part 234.

The filter-driving device 228 moves the filter-mounting part 234 downwards, and accordingly, the filter device 284 also descends (S2250).

FIG. 77 illustrates the state in which the cover 258 of a predetermined second air-processing apparatus 200a is opened and in which the filter device 284 and the filter-mounting part 234 are moved downwards. The cover 258 may move in the forward-rearward direction to be opened and closed. The second louver 290 of another second air-processing apparatus 200b may be exposed in the state in which the cover 258 is closed.

When replacement of the filter device 284 is completed (S2260), the filter-driving device 228 may move the filter device 284 and the filter-mounting part 234 upwards (S2270). The second air-processing apparatus 200 may determine whether the filter device 284 and the filter-mounting part 234 are coupled to or separated from each other based on the coupled state of the magnets 287 and 238. Alternatively, the second air-processing apparatus 200 may include a sensor to determine whether the filter device 284 and the filter-mounting part 234 are coupled to or separated from each other.

For example, when the filter device 284 is separated from the filter-mounting part 234 and is then recoupled thereto (S2260), the filter-driving device 228 may move the filter device 284 and the filter-mounting part 234 upwards (S2270). Alternatively, when external force is applied to the filter-mounting part 234, the second air-processing apparatus 200 may move the filter-mounting part 234 upwards (S2270).

When the filter-mounting part 234 returns to the position prior to descending, the second air-processing apparatus 200 may close the cover 258 (S2280).

FIG. 78 is a view for explaining an indicator lamp of the filter cleaner according to an embodiment of the present disclosure.

Referring to FIG. 78, the filter cleaner 300 may include indicator lamps 2410, 2420, and 2430, which indicate the operational state of the filter cleaner 300. The indicator lamps 2410, 2420, and 2430 may be disposed on an exposed surface 2400 of the lower end of the filter cleaner 300. The user located below the filter cleaner 300 may view the indicator lamps 2410, 2420, and 2430. The entire lower end of the filter cleaner 300 or the exposed surface 2400 may be disposed so as to be inclined forwards.

The indicator lamps 2410, 2420, and 2430 may indicate the operational state of the filter cleaner 300 by changing between an on state and an off state, changing the color of light emitted therefrom, or operating in a flashing or constant manner. For example, a charging indicator lamp 2410 may be turned on when charging starts, and may cause blue light to flash at an interval of 1 second to indicate that charging is being performed. A cleaning indicator lamp 2420 may be turned on when cleaning starts, and may cause white light to flash at an interval of 1 second to indicate that cleaning is being performed. A dust container emptying indicator lamp 2430 may be turned on when the dust container starts to be emptied, and may cause red light to flash at an interval of 1 second to indicate that the dust container is being emptied.

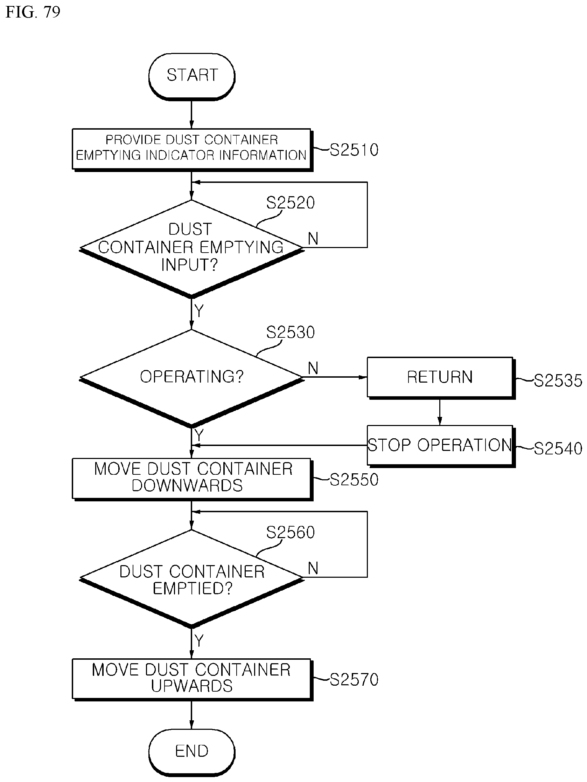

FIG. 79 is a flowchart showing an operation method of the air-conditioning system according to an embodiment of the present disclosure. FIG. 79 shows a process of emptying the dust container.

Referring to FIG. 79, the air-conditioning system 1 according to an embodiment of the present disclosure may provide guidance information indicating the need to empty the dust container 400, which forms a space for accommodating foreign substances, and/or information about the recommended emptying time through the remote control device 500 or the mobile terminal 700 (S2510).

For example, the dust container sensor (not shown) may detect the amount of foreign substances collected in the dust container device 400. When the criterion for emptying the dust container device 400 is met, the remote control device 500 may display emptying indicator information on the display 501 (S2510).

When the user inputs an emptying command by, for example, pressing the dust container emptying button 543 on the remote control device 500 (S2520), the dust container device 400 may descend (S2550).

In addition, the second air-processing apparatus 200 may further include a dust container guide 380, which is coupled to the dust container device 400 and is movable in the upward-downward direction. The dust container device 400 and the dust container guide 380 may be detachably coupled to each other via a magnet 388. Accordingly, the user may easily separate the dust container device 400.

According to an embodiment of the present disclosure, when receiving the input for emptying the dust container device 400 (S2520) during operation thereof (S2530), the filter cleaner 300 may stop operating (S2540), and may move the dust container device 400 downwards (S2550).

Alternatively, when receiving the input for emptying the dust container device 400 (S2520) during operation thereof (S2530), the filter cleaner 300 may move to the end plate 28 (S2535) before stopping operating (S2540), and may move the dust container device 400 downwards (S2550).

When the dust container device 400 is completely emptied (S2560), the filter cleaner 300 may move the dust container device 400 upwards (S2570). The dust container sensor may detect whether the dust container device 400 is empty. Alternatively, when an external force is applied to the dust container device 400, the filter cleaner 300 may move the dust container device 400 upwards (S2570).

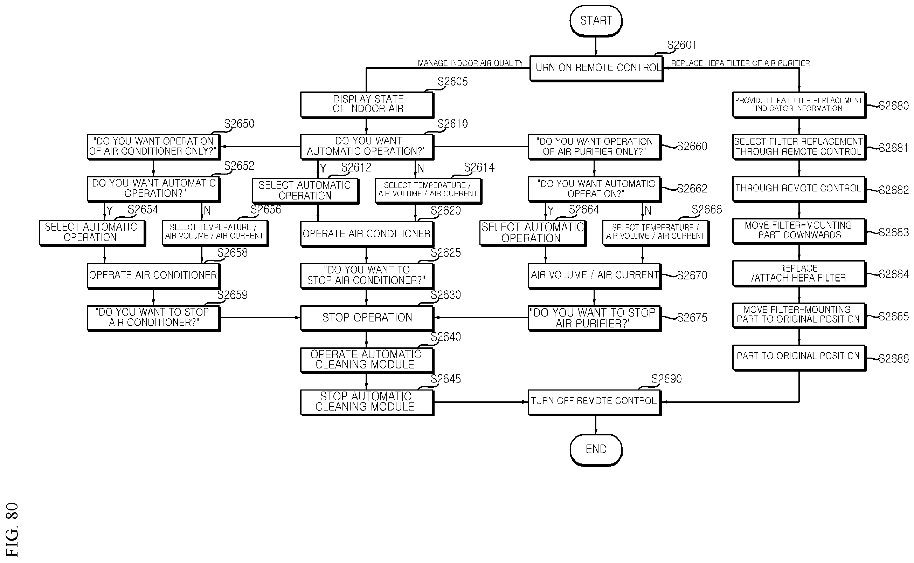

FIG. 80 is a flowchart showing an operation method of the air-conditioning system according to an embodiment of the present disclosure. FIG. 80 shows an example in which the user receives guidance information on the air-conditioning system 1, which includes the air conditioner 100 (the first air-processing apparatus) and the air purifier 200 (the second air-processing apparatus), sets the function of the air-conditioning system 1, or operates the air-conditioning system 1 using the remote control 500 (the remote control device).

When the use of a predetermined function is not set or when a predetermined operation is being performed, the remote control device 500 may output a guidance message related to the function/operation. The remote control device 500 may visually and/or audibly output a guidance message through the display 501 and/or the speaker 505. Frequent output of the guidance message may inconvenience the user. Therefore, setting may be made such that the guidance message is provided once at the initial stage and is then deleted or such that only higher-priority guidance messages are provided.

When receiving touch input, voice input, or button manipulation input from the user, the remote control device 500 may control the air-conditioning system 1 in response to the user input.

Referring to FIG. 80, when the remote control device 500 is turned on (S2601), the remote control device 500 may display the state of the indoor air on the display 501 in the indoor air quality detection mode (S2605).

When it is necessary to replace the HEPA filter 289, the remote control device 500 may display information indicating the need to replace the HEPA filter 289 on the display 501 (S2680).

The remote control device 500 may output a guidance message asking whether to perform automatic operation (S2610).

When the user selects automatic operation (S2612), the air-conditioning system 1 may automatically perform a combined operation based on the state of the indoor air (S2620).

When the user directly inputs a temperature, air volume, or air current (S2614), the air-conditioning system 1 may perform combined operation in response to the user input (S2620).

When the state of the indoor air, such as the temperature or quality thereof, meets a predetermined criterion, or when operation has been performed for a predetermined time period or more, the remote control device 500 may stop operation (S2630). In addition, the remote control device 500 may output a guidance message asking whether to stop automatic operation (S2625).

According to an embodiment of the present disclosure, when operation is stopped (S2630), the filter cleaner 300, which is an automatic cleaning module, automatically operates to clean the pre-filters 188 and 288 included in the air-conditioning system 1 (S2640).

When returning to the original position thereof after completion of cleaning, the filter cleaner 300 may stop operating (S2645).

According to an embodiment, when the filter cleaner 300 stops operating (S2645), the remote control device 500 may be turned off (S2690).

When the user does not select automatic operation (S2612), the remote control device 500 may output a guidance message asking whether to independently drive the first air-processing apparatus 100 and/or the second air-processing apparatus 200 (S2650 and S2660).

When the user selects operation only of the first air-processing apparatus 100 (S2650), the remote control device 500 may output a guidance message asking whether to perform automatic operation (S2652).

When the user selects automatic operation (S2654), the first air-processing apparatus 100 may automatically perform independent operation based on the state of the indoor air (particularly, the temperature thereof) (S2658).

When the user directly inputs a temperature, air volume, or air current (S2656), the first air-processing apparatus 100 may operate independently in response to the user input (S2658).

The remote control device 500 may output a guidance message asking whether to stop operation of the first air-processing apparatus 100 (S2659).

When the user selects operation only of the second air-processing apparatus 200 (S2660), the remote control device 500 may output a guidance message asking whether to perform automatic operation (S2662).

When the user selects automatic operation (S2664), the second air-processing apparatus 200 may automatically perform independent operation based on the state of the indoor air (particularly, the air quality) (S2670).

When the user directly inputs at least one of a temperature, air volume, or air current (S2666), the second air-processing apparatus 200 may operate independently in response to the user input (S2668).

The remote control device 500 may output a guidance message asking whether to stop operation of the second air-processing apparatus 200 (S2675).

When the criterion for replacing the HEPA filter 289 is met, the remote control device 500 may display information indicating the need to replace the HEPA filter 289 on the display 501 (S2680).

The replacement criterion may be set based on the operating time of the second air-processing apparatus 200. The HEPA filter 289 provided in the second air-processing apparatus 200 may remove contaminants contained in the air introduced from the outside. Because the removed contaminants are attached to the HEPA filter 289, as the operating time of the second air-processing apparatus 200 increases, the contamination level of the HEPA filter 289 increases, and the filtering function thereof is deteriorated.

Alternatively, the replacement criterion may be set based on the filter contamination level, calculated based on the operating time of the second air-processing apparatus 200 and the state of the air in the indoor space.

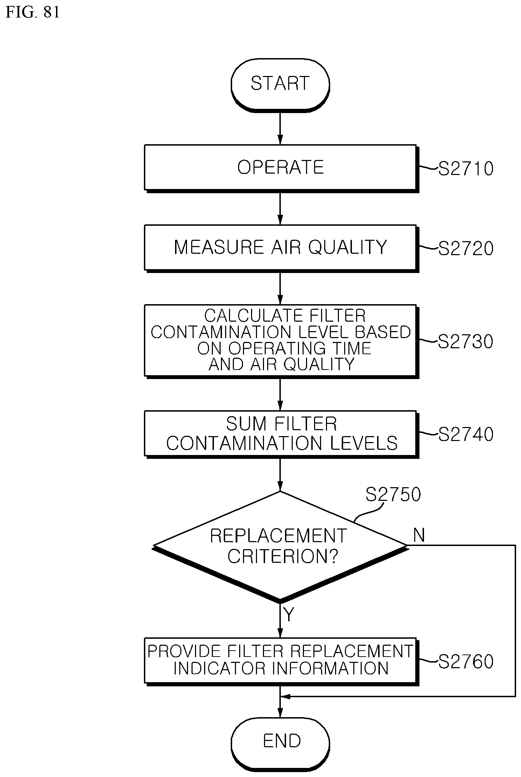

FIG. 81 is a flowchart showing an operation method of the air-conditioning system according to an embodiment of the present disclosure.

Referring to FIG. 81, the second air-processing apparatus 200 operates in a predetermined mode according to an operation command or various settings (S2710). In this case, the processor 610 may count the operating time.

The air quality sensor provided inside or outside the air-conditioning system 1, e.g. the second air-processing apparatus 200, may measure the indoor air quality during operation of the second air-processing apparatus 200 (S2720).

The air quality sensor may continuously or periodically measure the indoor air quality during operation of the second air-processing apparatus 200. In addition, the data measured by the air quality sensor may be collected by the second air-processing apparatus 200 or the remote control device 500, and may be stored in the memory 630 of the second air-processing apparatus 200 or the memory 580 of the remote control device 500.

The processor 610 of the second air-processing apparatus 200 or the processor 510 of the remote control device 500 may calculate the filter contamination level based on the data (an accumulated value or an average value) measured by the air quality sensor during operation and the operating time (S2730).

For example, the processor 610 or 510 may calculate the filter contamination level by multiplying the accumulated value or the average value of the data measured by the air quality sensor during operation by the operating time.

The processor 610 or 510 may determine the quantity of introduced air based on the volume of air current during the operating time and based on the operating time. For example, the processor 610 or 510 may determine the quantity of introduced air by multiplying the operating time by the volume of air current.

The processor 610 or 510 may determine the air contamination level based on the data measured by the air quality sensor during operation, and may calculate the filter contamination level based on the quantity of introduced air and the air contamination level.

For example, the processor 610 or 510 may determine the filter contamination level by multiplying the quantity of introduced air by the air contamination level. According to the present disclosure, the processor 610 or 510 may accurately detect a filter in need of replacement by classifying contamination levels of the multiple filters according to a more sophisticated air quality measurement method.

The processor 610 or 510 may sum the calculated filter contamination level and a pre-stored filter contamination level (S2740).

When the result of summing the calculated filter contamination level and the pre-stored filter contamination level meets a filter replacement criterion (S2750), the processor 510 may perform control to output filter replacement indicator information (S2760).

When the result of summing the calculated filter contamination level and the pre-stored filter contamination level meets the filter replacement criterion (S2750), the processor 610 may perform control to output filter replacement indicator information to the remote control device 500. Accordingly, the remote control device 500 may output the filter replacement indicator information (S2760).

The processor 510 may perform control to display the filter replacement indicator information on the display 501. In addition, the processor 510 may perform control such that the speaker 505 outputs speech for providing the filter replacement indicator information.

Alternatively, the replacement criterion may be set based on the number of times the second pre-filter 288 is cleaned by the filter cleaner 300.

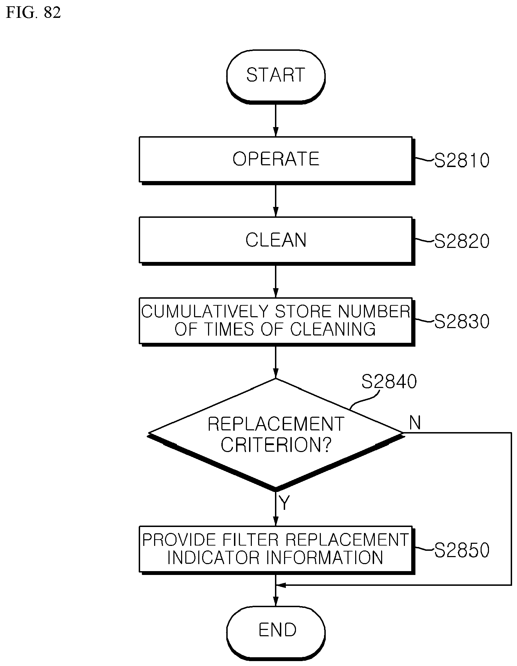

FIG. 82 is a flowchart showing an operation method of the air-conditioning system according to an embodiment of the present disclosure.

Referring to FIG. 82, the second air-processing apparatus 200 operates in a predetermined mode according to an operation command or various settings (S2810). When operation of the second air-processing apparatus 200 is stopped, the filter cleaner 300 may clean the second pre-filter 288 of the second air-processing apparatus 200 (S2820).

The filter cleaner 300 may cumulatively store the number of times the second air-processing apparatus 200 and the second pre-filter 288 are cleaned (S2830).

When the number of times the second air-processing apparatus 200 and the second pre-filter 288 are cleaned meets the criterion for replacing the filter device (S2840), the remote control device 500 may display the replacement indicator information on the display 501 (S2850). In addition, when the number of times the second air-processing apparatus 200 and the second pre-filter 288 are cleaned meets the criterion for replacing the filter device (S2840), the filter cleaner 300 may transmit the replacement indicator information to the remote control device 500. Accordingly, the remote control device 500 may display the replacement indicator information on the display 501 (S2850).

Meanwhile, when the user inputs a replacement command by, for example, pressing the HEPA button 541 on the remote control device 500 (S2681), the cover 258 provided below the filter device 284 is opened (S2682).

The second air-processing apparatus 200 may further include a filter-mounting part 234, which is coupled to the filter device 284. The filter device 284 and the filter-mounting part 234 may be detachably coupled to each other via magnets 287 and 238. The filter-driving device 228 moves the filter-mounting part 234 downwards, and accordingly, the filter device 284 also descends (S2683).

When the filter device 284 is completely replaced and is then attached to the filter-mounting part 234 (S2684), the filter-driving device 228 may move the filter device 284 and the filter-mounting part 234 upwards to the original positions thereof (S2685).

When the filter-mounting part 234 returns to the original position thereof prior to descending (S2685), the second air-processing apparatus 200 may close the cover 258 (S2686).

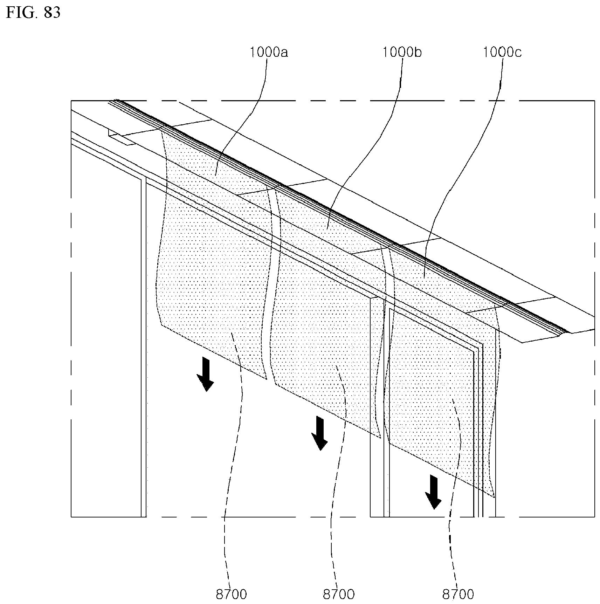

FIGS. 83 to 88 are views for explaining air current control of the air-conditioning system according to an embodiment of the present disclosure.

Here, air current control serves to manually or automatically adjust characteristics of the air discharged from the air-processing apparatuses 100 and 200, for example, the speed, volume, temperature, humidity, and direction of air current. In a narrow sense, air current control functions to control the direction in which air is discharged from the air-processing apparatuses 100 and 200 (i.e. the air current direction).

FIGS. 83 to 88 illustrate the case in which the air-conditioning system 1 according to an embodiment of the present disclosure includes three air-processing modules 1000a, 1000b, and 1000c. Each of the air-processing modules 1000a, 1000b, and 1000c may be the first air-processing apparatus 100 or the second air-processing apparatus 200.

As described above with reference to FIGS. 1 to 35c, the air-conditioning system 1 according to an embodiment of the present disclosure may include a first air-processing apparatus 100, which has a first inlet 102a formed in one surface thereof, which is perpendicular to the floor or the ceiling, and a first outlet 102b formed in another surface thereof, which is perpendicular to the first inlet 102a, and includes a first louver 150 for adjusting the direction in which air is discharged through the first outlet 102b, and a second air-processing apparatus 200, which has a second outlet 202b formed therein so as to be open in the same direction as the first outlet 102b and a second inlet 202a formed therein so as to be open in the same direction as the first inlet 102a and includes a second louver 290 for adjusting the direction in which air is discharged through the second outlet 202b.

The first louver 150 may be rotatably disposed in the first outlet 102b of the first air-processing apparatus 100 in order to adjust the direction of air flowing through the first outlet 102b. The first air-processing apparatus 100 may include a first louver-driving device 174 for adjusting the orientation of the first louver 150.

In addition, the first air-processing apparatus 100 may include a heat exchanger, which induces the air introduced into the first inlet 102a to exchange heat with refrigerant.

The second louver 290 may be rotatably disposed in the second outlet 202b of the second air-processing apparatus 200 in order to adjust the direction of air flowing through the second outlet 202b. The second air-processing apparatus 200 may include a second louver-driving device 294 for adjusting the orientation of the second louver 290.

The second air-processing apparatus 200 may be an air purifier that includes a filter device 284 for removing foreign substances from the air introduced into the second inlet 202a.

According to an embodiment of the present disclosure, the first louver 150 and the second louver 290 may be disposed in a line. In the combined operation mode, in which the first air-processing apparatus 100 and the second air-processing apparatus 200 are both driven, the orientation of the second louver 290 may be adjusted in consideration of the orientation of the first louver 150.

Referring to FIGS. 18A to 18C, the first louver 150 may be switched to a first mode P1 for forming an oblique air current in the forward direction, a second mode P2 for forming a horizontal air current in the forward direction, and a third mode P3 for forming a vertical air current toward the floor.

Referring to FIG. 18A, the first louver 150 is disposed above the first bottom cover 130 in the first mode P1. In the first mode P1, the lower end of each of the vanes 154, 156, and 158 of the first louver 150 may be disposed above the first bottom cover 130 in the vertical direction.

In the first mode P1, the lower end of the outer vane 154 may be oriented in a direction perpendicular to the floor. In the first mode P1, the lower end of each of the inner vanes 156a, 156b, and 156c may be inclined forwards.

Referring to FIG. 18B, a portion of the first louver 150 is disposed below the first bottom cover 130 in the second mode P2. In the second mode P2, the lower end of the outer vane 154 and the lower end of each of the inner vanes 156a, 156b, and 156c may be disposed below the first bottom cover 130 in the vertical direction.

In the second mode P2, the inclination angle θ2 formed by the lower inner vane portion 157a of each of the inner vanes 156a, 156b, and 156c and the floor may be set to 30 degrees or less. Accordingly, in the second mode P2, the air flowing through the first louver 150 may be discharged in a direction substantially parallel to the floor.

Referring to FIG. 18C, the first louver 150 is disposed above the first bottom cover 130 in the third mode P3. In the third mode P3, the lower end of the outer vane 154 and the lower end of each of the inner vanes 156a, 156b, and 156c may be disposed above the first bottom cover 130 in the vertical direction.

In the third mode P3, the inclination angle θ3 formed by the lower inner vane portion 157a of each of the inner vanes 156a, 156b, and 156c and the floor may be set to a range from 60 degrees to 90 degrees. Accordingly, in the third mode P3, the air flowing through the first louver 150 may be discharged in a direction substantially perpendicular to the floor.

The second louver 290 and the second louver-driving device 294 may have the same configurations and functions as the first louver 150 and the first louver-driving device 174 of the first air-processing apparatus 100. Therefore, with regard to the second louver 290 and the second louver-driving device 294, reference may be made to the above description of the first louver 150 and the first louver-driving device 174.

In the combined operation mode, the orientation of the second louver 290 may be adjusted to the same angle as the first louver 150.

According to an embodiment of the present disclosure, the first louver 150 and the second louver 290, which are disposed in a line, may be oriented at the same angle, thereby discharging air in the same direction. Accordingly, it is possible to consistently form an air current in a constant direction in the indoor space.

For example, when the first air-processing apparatus 100 performs a heating operation, the first louver 150 and the second louver 290 may rotate in a first direction to form a vertical air current.

That is, the first louver 150 and the second louver 290 may be switched to the third mode P3 so as to discharge air in a direction perpendicular to the floor.

Since the heating operation generates hot air and the hot air tends to flow upwards, the first air-processing apparatus 100 may discharge air downwards toward the portion of the floor that is close thereto during the heating operation. Also, the second air-processing apparatus 200 may discharge air in the same direction as the first air-processing apparatus 100.

The first louver 150 may include a plurality of inner vanes 156, which are spaced apart from each other in the radial direction between the louver rotation shaft 160 and the outer vane 154. The second louver 290, which has the same configuration as the first louver 150, may also include a plurality of inner vanes 156.

When the first air-processing apparatus 100 performs a heating operation, the first louver 150 and the second louver 290 may be oriented such that the inner vanes 156 face the floor.

FIG. 83 shows an example in which all of the three air-processing modules 1000a, 1000b, and 1000c form a vertical air current 8700.

The air-conditioning system 1 according to an embodiment of the present disclosure may be mounted such that the lower end thereof is coplanar with the ceiling, so the outlets 102b and 202b may face downwards. Also, the air-conditioning system 1 according to an embodiment of the present disclosure may be disposed in a peripheral region in the indoor space in order to condition the air in the indoor space. Therefore, the vertical air current 8700 formed by the air-conditioning system 1 may flow in the peripheral region in the indoor space that is close to the outside, and may thus function as a kind of air curtain for blocking outdoor air. Accordingly, it is possible to effectively maintain an indoor temperature and to improve energy efficiency by reducing the influence of outdoor air.

Meanwhile, when the first air-processing apparatus 100 performs a cooling operation, the first louver 150 and the second louver 290 may rotate in a second direction, which is opposite the first direction.

That is, the first louver 150 and the second louver 290 may be switched to the second mode P2 so as to form a horizontal air current.

Since the cooling operation generates cold air and the cold air tends to flow downwards, the first air-processing apparatus 100 may discharge air upwards toward a region far away therefrom during the cooling operation. Also, the second air-processing apparatus 200 may discharge air in the same direction as the first air-processing apparatus 100.

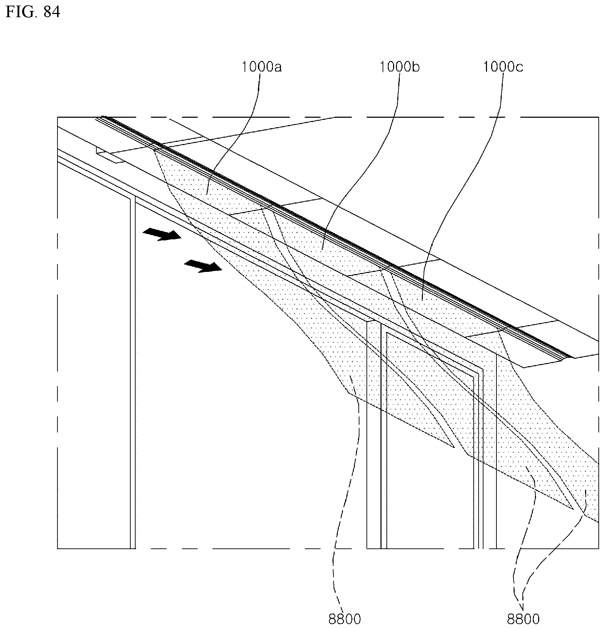

FIG. 84 shows an example in which all of the three air-processing modules 1000a, 1000b, and 1000c form a horizontal air current 8800.

In the combined operation mode, when the first air-processing apparatus 100 performs a cooling operation, each of the first louver 150 and the second louver 290 may be oriented such that the plurality of vanes 156 faces a direction perpendicular to the direction facing the floor or forms as small an inclination angle as possible with the floor.

In addition, according to at least one of the embodiments of the present disclosure, since the first air-processing apparatus 100 and the second air-processing apparatus 200 are arranged in the leftward-rightward direction and the louvers 150 and 290, which are respectively disposed in the outlets 102b and 202b, are individually driven, it is possible to individually adjust the air discharge directions in consideration of the temperature of discharged air, thereby realizing rapid air circulation in the indoor space.

In addition, the angle at which the second louver 290 is oriented may be adjusted to be different from the angle at which the first louver 150 is oriented, thereby creating various air currents.

For example, the first louver 150 may rotate to the maximum extent in the first direction or the second direction so as to be switched to the third mode P3 or the second mode P2. In this case, the second louver 290 may be inclined at a predetermined angle relative to the first louver 150.

The first air-processing apparatus 100 discharges heat-exchanged air in the course of a cooling or heating operation. Accordingly, there is a temperature difference between the air discharged from the first air-processing apparatus 100 and the air discharged from the second air-processing apparatus 200.

For example, when the first air-processing apparatus 100 performs a cooling operation, the temperature of the air discharged from the first air-processing apparatus 100 is lower than the temperature of the air discharged from the second air-processing apparatus 200. Therefore, it may be advantageous from the aspect of air diffusion for the second air-processing apparatus 200 to discharge air toward a region slightly lower than the region toward which the first air-processing apparatus 100 discharges air (by making the inclination angle formed with the floor larger than that of the first air-processing apparatus 100).

Conversely, when the first air-processing apparatus 100 performs a heating operation, the temperature of the air discharged from the first air-processing apparatus 100 is higher than the temperature of the air discharged from the second air-processing apparatus 200. Therefore, it may be advantageous from the aspect of air diffusion for the second air-processing apparatus 200 to discharge air toward a region slightly higher than the region toward which the first air-processing apparatus 100 discharges air (by making the inclination angle formed with the floor smaller than that of the first air-processing apparatus 100).

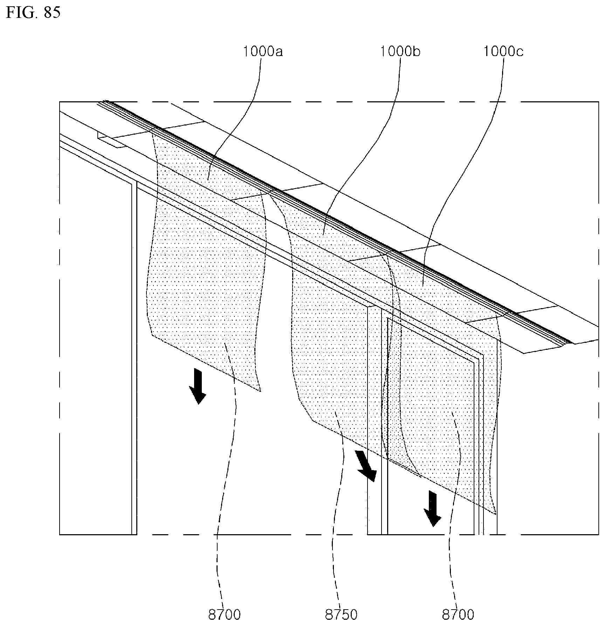

In the example shown in FIGS. 85 to 89, the air-processing module 1000b that is disposed in the middle may be the second air-processing apparatus 200, and the air-processing modules 1000a and 1000c that are disposed on the left and right may be the first air-processing apparatuses 100.

Referring to FIG. 85, during a heating operation, the first louver 150 may rotate to the maximum extent in the first direction so as to be switched to the third mode P3, and the air-processing modules 1000a and 1000c may form a vertical air current 8700. The second louver 290 may rotate to an extent less than the maximum extent in the first direction so as to be inclined at the predetermined angle relative to the first louver 150. Accordingly, the air-processing module 1000b may form an oblique air current 8750, which is inclined to a certain extent relative to the vertical air current 8700.

In the combined operation mode, when the first air-processing apparatus 100 performs a heating operation, the first louver 150 may be oriented such that the plurality of vanes 156 faces the ground, and the second louver 290 may be oriented such that the plurality of vanes 156 forms a predetermined angle with the floor.

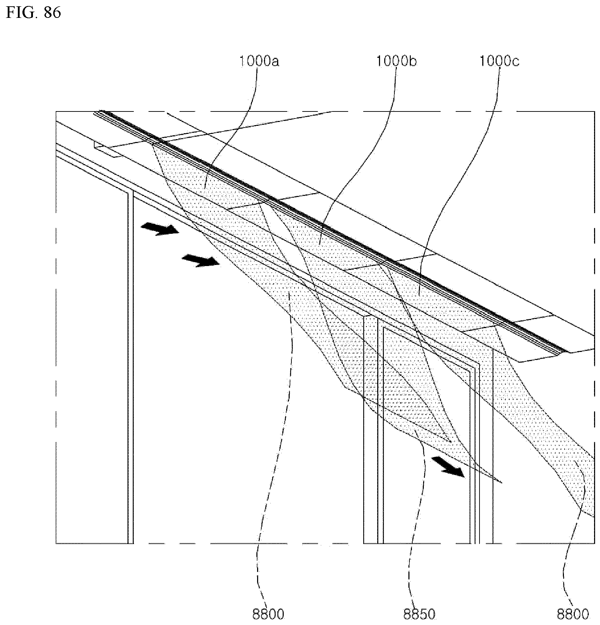

Referring to FIG. 86, during a cooling operation, the first louver 150 may rotate to the maximum extent in the second direction so as to be switched to the second mode P2, and the air-processing modules 1000a and 1000c may form a horizontal air current 8800. The second louver 290 may rotate to an extent less than the maximum extent in the second direction so as to be inclined at the predetermined angle relative to the first louver 150. Accordingly, the air-processing module 1000b may form an oblique air current 8850, which is inclined to a certain extent relative to the horizontal air current 8800.

In the combined operation mode, when the first air-processing apparatus 100 performs a cooling operation, the first louver 150 may be oriented such that the plurality of vanes 156 faces a direction perpendicular to the direction facing the floor, and the second louver 290 may be oriented such that the plurality of vanes 156 forms a predetermined angle with the direction perpendicular to the direction facing the floor.

It may be possible to form a stronger air current by increasing the angular difference between the first louver 150 and the second louver 290.

For example, when the first air-processing apparatus 100 performs a heating operation, the first louver 150 may rotate to the maximum extent in the first direction to form a vertical air current 8700, and the second louver 290 may rotate to the maximum extent in the second direction, which is opposite the first direction.

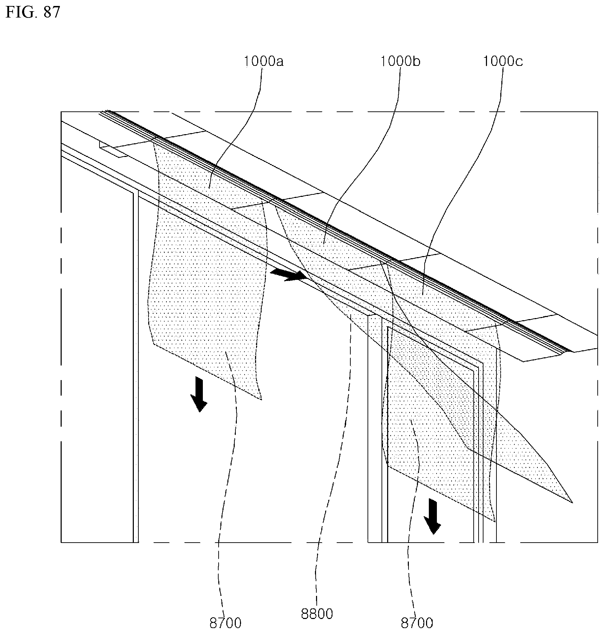

Referring to FIG. 87, the first louver 150 may rotate to the maximum extent in the first direction so as to be switched to the third mode P3, and accordingly, the air-processing modules 1000a and 1000c may form a vertical air current 8700. The second louver 290 may rotate to the maximum extent in the second direction so as to be switched to the second mode P2, and accordingly, the air-processing module 1000b may form a horizontal air current 8800.

In the combined operation mode, when the first air-processing apparatus 100 performs a heating operation, the first louver 150 may be oriented such that the plurality of vanes 156 faces the floor, and the second louver 290 may be oriented such that the plurality of vanes 156 faces a direction perpendicular to the direction facing the floor or forms as small an inclination angle as possible with the floor.

When the first air-processing apparatus 100 performs a cooling operation, the first louver 150 may rotate to the maximum extent in the second direction, and the second louver 290 may rotate to the maximum extent in the first direction.

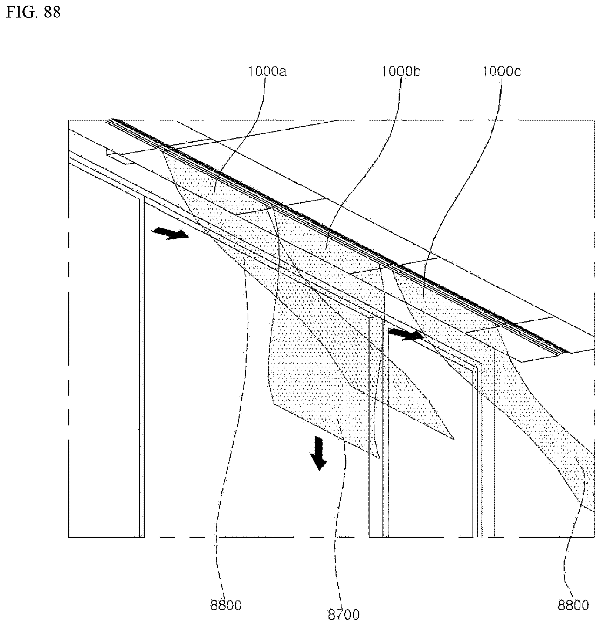

Referring to FIG. 88, the first louver 150 may rotate to the maximum extent in the second direction so as to be switched to the second mode P2, and accordingly, the air-processing modules 1000a and 1000c may form a horizontal air current 8800. The second louver 290 may rotate to the maximum extent in the first direction so as to be switched to the third mode P3, and accordingly, the air-processing module 1000b may form a vertical air current 8700.

In the combined operation mode, when the first air-processing apparatus 100 performs a cooling operation, the first louver 150 may be oriented such that the plurality of vanes 156 faces a direction perpendicular to the direction facing the floor or forms as small an inclination angle as possible with the floor, and the second louver 290 may be oriented such that the plurality of vanes 156 faces the floor.

In the independent operation mode in which only the first air-processing apparatus 100 is driven, the first louver 150 may rotate to the maximum extent in the first direction to form a vertical air current 8700, or may rotate to the maximum extent in the second direction, which is opposite the first direction, so as to be switched to the second mode P2.

In the independent operation mode in which only the second air-processing apparatus 200 is driven, the second louver 290 may rotate to the maximum extent in the second direction so as to be switched to the second mode P2.

According to an embodiment of the present disclosure, the remote control device 500 may receive air-quality detection input, and may transmit the air-quality detection input to the second air-processing apparatus 200.

When the air-quality detection input is received, the second air-processing apparatus 200 may repeatedly rotate the second louver 290 in order to indicate in an intuitively understandable manner that the air-quality detection input is being received and the air quality is being detected. The second louver 290 may rotate repeatedly within the range between the position corresponding to the second mode P2 and the position corresponding to the third mode P3.

In addition, when the air-quality detection input is received, the second air-processing apparatus 200 may acquire information about the state of the air in the indoor space using a sensor provided therein, and may repeatedly rotate the second louver 290 until information about the state of the air meets a predetermined criterion. Accordingly, it is possible to more rapidly diffuse the filtered air.

According to an embodiment of the present disclosure, the remote control device 500 may receive air-quality detection input, may acquire information about the state of the air in the indoor space using a sensor or a receiver 572 provided therein, and may transmit the information about the state of the air to the second air-processing apparatus 200. In this case, the second air-processing apparatus 200 may repeatedly rotate the second louver 290 until the information about the state of the air meets a predetermined criterion.

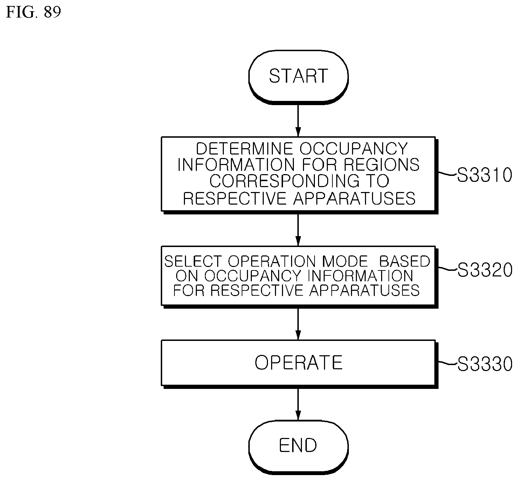

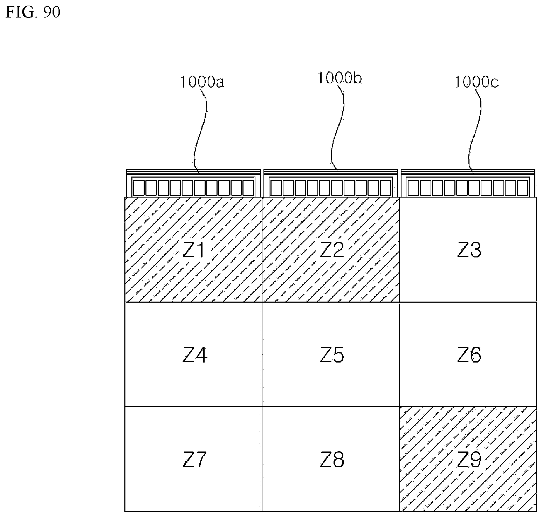

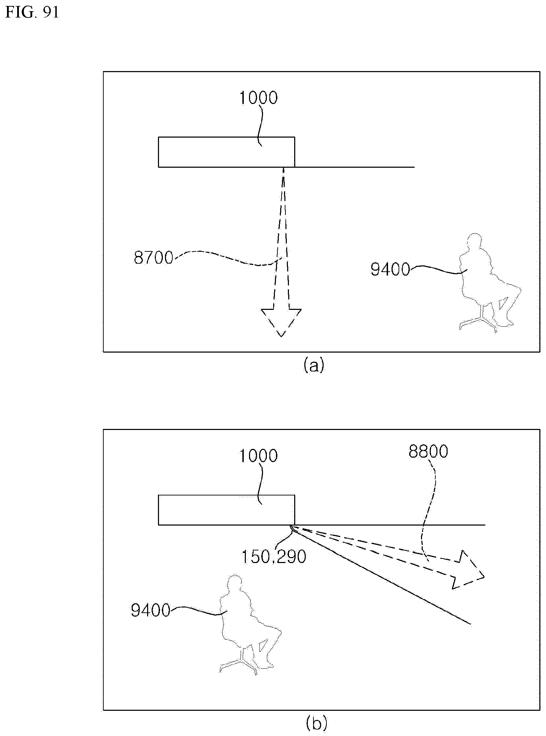

FIG. 89 is a flowchart showing an operation method of the air-conditioning system according to an embodiment of the present disclosure, and FIGS. 90 and 91 are views for explaining air current control based on occupancy information of the air-conditioning system according to an embodiment of the present disclosure.

In the air-conditioning system 1 according to an embodiment of the present disclosure, the number of air-processing apparatuses to be driven and the air current direction may vary based on indoor space occupancy information.

The air-conditioning system 1 may determine occupancy information for regions corresponding to the apparatuses 100 and 200. For example, each of the first air-processing apparatus 100 and the second air-processing apparatus 200 may include a sensor and a camera in order to determine occupancy information for the regions corresponding thereto. The apparatuses 100 and 200, which are disposed in a line, may obtain occupancy information for different regions of the indoor space, thereby more accurately determining occupancy information without blind zones.

FIG. 90 illustrates the case in which the air-conditioning system 1 according to an embodiment of the present disclosure includes three air-processing modules 1000a, 1000b, and 1000c. Each of the air-processing modules 1000a, 1000b, and 1000c may be the first air-processing apparatus 100 or the second air-processing apparatus 200.

Referring to FIG. 90, the first air-processing module 1000a takes charge of Z1, Z4, and Z7, and determines occupancy information for Z1, Z4, and Z7. The second air-processing module 1000b takes charge of Z2, Z5, and Z8, and determines occupancy information for Z2, Z5, and Z8. The third air-processing module 1000c takes charge of Z3, Z6, and Z9, and determines occupancy information for Z3, Z6, and Z9.

The first air-processing apparatus 100 and the second air-processing apparatus 200 may determine whether an occupant is present in the regions corresponding thereto and the number of occupants, and may share occupancy information.

The air-conditioning system 1 may select an operation mode based on the occupancy information determined by the apparatuses (S3320), and the apparatuses 100 and 200 may be driven in the selected operation mode (S3330). Also, the air-conditioning system 1 may independently control the apparatuses 100 and 200 based on the occupancy information.

If setting is made such that air is not directly blown to an occupant 9400, the air-conditioning system 1 may control air current so that air is not directly blown to the occupant 9400. Referring to FIG. 91(a), the air-processing module 1000, from which the occupant 9400 is distant, may form a vertical air current 8700. Assuming that occupants are present in Z1, Z2, and Z9 in FIG. 90, the air-processing module 1000c may form a vertical air current 8700.

Referring to FIG. 91(b), the air-processing module 1000, below which the occupant 9400 is located, may form a horizontal air current 8800. Assuming that occupants are present in Z1, Z2, and Z9 in FIG. 90, the air-processing modules 1000a and 1000b may form a horizontal air current 8800.

As is apparent from the above description, according to at least one of the embodiments of the present disclosure, it is possible to conveniently clean and efficiently manage a pre-filter using a filter cleaner configured to clean the filter while automatically moving.

In addition, according to at least one of the embodiments of the present disclosure, it is possible to clean pre-filters disposed in a plurality of air-processing apparatuses using a single filter cleaner.

In addition, according to at least one of the embodiments of the present disclosure, it is possible to precisely control the movement of a filter cleaner.

In addition, according to at least one of the embodiments of the present disclosure, it is possible to precisely control cleaning performed by a filter cleaner.

In addition, according to at least one of the embodiments of the present disclosure, it is possible to clean a pre-filter during operation.

The effects of the present disclosure are not limited to the above-described effects, and other effects not mentioned herein may be clearly understood by those skilled in the art from the accompanying claims.

## Claims

1. An air-conditioning system comprising:
air-processing apparatuses (100, 200), each comprising an inlet (102a, 202a) formed in one surface thereof perpendicular to a floor or ceiling and a pre-filter (188, 288) disposed in the inlet (102a, 202a); and
a filter cleaner (300) configured to clean at least one of pre-filters (188, 288) provided in the air-processing apparatuses (100, 200) while automatically moving when at least one of the air-processing apparatuses (100, 200) stops operating.

2. The air-conditioning system according to claim 1, wherein the air-processing apparatuses (100, 200) are disposed adjacent to each other in a leftward-rightward direction parallel to the floor or ceiling, and
wherein the filter cleaner (300) is configured to clean at least one of the pre-filters (188, 288) provided in the air-processing apparatuses (100, 200) while moving in the leftward-rightward direction.

3. The air-conditioning system according to claim 1 or 2, further comprising:
a guide rail (10) disposed on one side of each of the air-processing apparatuses (100, 200) to guide movement of the filter cleaner (300).

4. The air-conditioning system according to claim 3, wherein a plurality of objects to be sensed (26) is disposed on the guide rail (10) so as to be spaced apart from each other in a leftward-rightward direction parallel to the floor or ceiling, and
wherein the filter cleaner (300) comprises a position detection sensor (322), and is configured to determine a position of the filter cleaner (300) based on the plurality of objects to be sensed (26) that are detected by the position detection sensor (322).

5. The air-conditioning system according to claim 4, wherein two objects to be sensed (26) are disposed on the guide rail (10) at positions corresponding to a start point and an end point of a movement section within which the filter cleaner (300) moves.

6. The air-conditioning system according to claim 4, wherein three or more objects to be sensed (26) are disposed on the guide rail (10), and
wherein the filter cleaner (300) determines a position thereof based on at least one of identification information of the objects to be sensed (26) that are detected by the position detection sensor (322), types of the objects to be sensed (26), an order in which the objects to be sensed (26) are detected, or a change in a physical parameter caused by the objects to be sensed (26).

7. The air-conditioning system according to any one of the preceding claims, wherein the filter cleaner (300) comprises:
a first position detection sensor (322L); and
a second position detection sensor (322R) spaced apart from the first position detection sensor (322L).

8. The air-conditioning system according to claim 7, wherein, when the filter cleaner (300) moves in a first direction, if the second position detection sensor (322R) detects an object to be sensed (26) corresponding to an end point of a cleaning section, the filter cleaner (300) is configured to stop moving.

9. The air-conditioning system according to claim 8, wherein, when the filter cleaner (300) changes a moving direction and moves in a second direction, the second direction being opposite the first direction, if the first position detection sensor (322L) detects an object to be sensed (26) corresponding to a start point of a movement section within which the filter cleaner (300) moves, the filter cleaner (300) is configured to stop moving.

10. The air-conditioning system according to any one of claims 3 to 9, further comprising:
an end plate (28) disposed at a left end or a right end of the guide rail (10) to restrict movement of the filter cleaner (300) in one direction.

11. The air-conditioning system according to claim 1, wherein, when the filter cleaner (300) enters a section corresponding to an air-processing apparatus (100, 200) that is operating, the air-processing apparatus (100, 200) that is operating is configured to temporarily stop operating while the filter cleaner (300) passes through the section corresponding thereto.

12. The air-conditioning system according to any one of the preceding claims, wherein the filter cleaner (300) comprises:
a dust container device (400) forming a space to accommodate foreign substances;
an agitator (420) configured to rotate while contacting the pre-filters (188, 288); and
a suction device (376) configured to deliver foreign substances removed by the agitator (420) to the dust container device (400).

13. The air-conditioning system according to claim 12, wherein, when cleaning all of the pre-filters (188, 288), the filter cleaner (300) is configured to drive the suction device (376) and the agitator (420) while moving toward an end point of a movement section within which the filter cleaner (300) moves,
wherein, when arriving at the end point, the filter cleaner (300) is configured to stop moving and to move toward a start point of the movement section, and
wherein, when arriving at the start point, the filter cleaner (300) is configured to stop driving the suction device (376) and the agitator (420) and to terminate operation.

14. The air-conditioning system according to claim 13, wherein, when arriving at the end point, the filter cleaner (300) is configured to stop driving the suction device (376) and the agitator (420), and
wherein, while moving toward the start point, the filter cleaner (300) is configured to drive the suction device (376) and the agitator (420).

15. The air-conditioning system according to claim 13 or 14, wherein, when cleaning some of the pre-filters (188, 288), the filter cleaner (300) is configured to move toward a cleaning section corresponding to a pre-filter (188, 288) to be cleaned by the filter cleaner (300),
wherein, when arriving at a start point of the cleaning section, the filter cleaner (300) is configured to drive the suction device (376) and the agitator (420),
wherein, when arriving at an end point of the cleaning section, the filter cleaner (300) is configured to stop moving and to move toward a start point of a movement section within which the filter cleaner (300) moves,
wherein, when arriving at the start point of the cleaning section, the filter cleaner (300) is configured to stop driving the suction device (376) and the agitator (420),
wherein, when arriving at the start point of the movement section, the filter cleaner (300) is configured to terminate operation,
wherein, when arriving at the end point of the cleaning section, the filter cleaner (300) is configured to stop driving the suction device (376) and the agitator (420), and
wherein, while moving toward the start point of the cleaning section, the filter cleaner (300) is configured to drive the suction device (376) and the agitator (420).
